# EUROPEAN PATENT APPLICATION

(11) **EP 4 397 941 A1**
(43) Date of publication of application: **10.07.2024**
(21) Application number: 21955944.0
(22) Date of filing: 31.08.2021
(51) Int. Cl.: G01B 11/00, G01B 9/02

(54) **MOVEMENT ERROR CALCULATING SYSTEM, MACHINE TOOL, CALCULATING DEVICE, CALIBRATION METHOD, AND OPTICAL MEASURING DEVICE**

(71) Applicant: NIKON CORPORATION, Minato-ku Tokyo 108-6290 (JP)
(72) Inventor: MASUI, Hitoshi, Tokyo 108-6290 (JP); SUZUKI, Yasuo, Tokyo 108-6290 (JP); YANAGA, Yuma, Tokyo 108-6290 (JP)
(74) Representative: Hoffmann Eitle
(86) International application number: PCT/JP2021/032012
(87) International publication number: WO 2023/032054

(57) **Abstract**

A movement error calculation system calculates a movement error occurring in a movement of at least one of a placing apparatus on which a workpiece is placed and a processing head that includes a main spindle to which a tool is attached. The movement error calculation system includes: a fiducial member that is placed on the placing apparatus; an optical detection apparatus that includes: an objective optical system for emits first light toward the fiducial member and a detector for detects, through the objective optical system, second light, which propagates along an optical path of the first light, of light from the fiducial member generated by an irradiation of the first light, and that is attached to the main spindle instead of the tool; and a calculation unit that calculates the movement error based on a detected result by the optical detection apparatus.

## Description

### Technical Field

The present invention relates to a technical field of a movement error calculation system and a calculation apparatus that are configured to calculate a movement error occurring in a movement of at least one of a placing apparatus and a head, a machine tool including the movement error calculation system, and an optical measurement apparatus that is configured to measure an object, for example.

### Background Art

A Patent literature 1 discloses a machine tool that calculates a movement error generated in a translational movement and a rotational movement of a first and second mechanical components. For this machine tool, properly calculating the movement error is a technical problem.

### Citation List

### Patent Literature

Patent Literature 1: US2018/0174317A1

### Summary of Invention

A first aspect provides a movement error calculation system that calculates a movement error occurring in a movement of at least one of a placing apparatus and a processing head of a machine tool that processes a workpiece with a tool being detachably attached to a main spindle of the processing head while moving at least one of the placing apparatus on which the workpiece is placed and the processing head, wherein the movement error calculation system includes: a fiducial member that is placed on the placing apparatus and that is different from the workpiece; an optical detection apparatus that includes an objective optical system for emitting first light toward the fiducial member and a detector for detecting, through the objective optical system, second light, which propagates along an optical path of the first light, of light from the fiducial member generated by an irradiation of the first light, and that is attached to the main spindle instead of the tool; and a calculation unit that calculates the movement error based on a detected result by the optical detection apparatus.

A second aspect provides a machine tool including: the movement error calculation system provided by the first aspect; the processing head; the placing apparatus; and a driving apparatus that moves at least one of the processing head and the placing apparatus.

A third aspect provides a calculation apparatus that calculates a movement error occurring in a movement of at least one of a placing apparatus on which a workpiece is allowed to be placed and a head to which a processing unit for performing a processing of the workpiece is attachable, wherein the calculation apparatus includes: a calculation unit that calculates the movement error based on a detected result by an optical detection apparatus, the optical detection apparatus including an objective optical system for emitting first light toward a fiducial member placed on the placing apparatus and a detector for optically receiving, through the objective optical system, second light from the fiducial member generated by an irradiation of the first light, and the optical detection apparatus being attached to the head.

A fourth aspect provides a calibration method including: emitting first light toward a fiducial member placed on a placing apparatus from an objective optical system of an optical detection apparatus that is attached to a head to which a processing unit for performing a processing of the workpiece is attachable; optically receiving, through the objective optical system, second light from the fiducial member generated by an irradiation of the first light by using a detector of the optical detection apparatus; and calibrating information used for a movement control of at least one of the placing apparatus and the head based on a detected result by the optical detection apparatus.

A fifth aspect provides an optical measurement apparatus including: an objective optical system; a measurement unit that emits first light toward an object through the objective optical system and optically receives, through the objective optical system, second light from the object generated by an irradiation of the first light; an condensing optical system that is disposed on an optical path between the objective optical system and the measurement unit and that forms a condensed point of the first light at a focal position of the objective optical system at the measurement unit side; and a calculation unit that measures at least a part of the object based on an optical received result by the measurement unit.

A sixth aspect provides a calculation apparatus that calculates a movement error occurring in a movement of at least one of a placing apparatus on which a workpiece is allowed to be placed and a head to which a processing unit for performing a processing of the workpiece is attachable, wherein the calculation apparatus includes: a calculation unit that calculates the movement error based on a detected result by an optical detection apparatus, the optical detection apparatus including an objective optical system for emitting first light toward a fiducial member placed on the placing apparatus and optically receiving, through the objective optical system, second light from the fiducial member generated by an irradiation of the first light, and the optical detection apparatus being attached to the head.

An operation and another advantage of the present invention will be apparent from an example embodiment described below.

### Brief Description of Drawings

[FIG. 1] FIG. 1 is a perspective view that illustrates an exterior appearance of a machine tool in a present example embodiment.
[FIG. 2] FIG. 2 is a system configuration diagram that illustrates a system configuration of the machine tool in the present example embodiment.
[FIG. 3] FIG. 3 is a cross-sectional view that illustrates a configuration of a processing head in the present example embodiment.
[FIG. 4] FIG. 4 is a cross-sectional view that illustrates the configuration of the processing head in the present example embodiment.
[FIG. 5] FIG. 5 is a cross-sectional view that illustrates the processing head to which a measurement apparatus (especially, a measurement head) is attached in the present example embodiment.
[FIG. 6] FIG. 6 is a cross-sectional view that illustrates the processing head to which the measurement apparatus (especially, the measurement head) is attached in the present example embodiment.
[FIG. 7] FIG. 7 is a cross-sectional view that illustrates an optical system that irradiates a measurement target object with measurement light and detects a returning light from the measurement target object.
[FIG. 8] FIG. 8 is a cross-sectional view that illustrates a configuration of the optical system of the measurement head in the present example embodiment.
[FIG. 9] FIG. 9 is table that illustrates a movement error.
[FIG. 10] FIG. 10 is a cross-sectional view that illustrates a fiducial member and the measurement head that measures the fiducial member.
[FIG. 11] Each of FIG. 11A and FIG. 11B is a cross-sectional view that illustrates the fiducial member and the measurement head that measures the fiducial member.
[FIG. 12] Each of FIG. 12A and FIG. 12B is a cross-sectional view that illustrates the fiducial member and the measurement head that measures the fiducial member.
[FIG. 13] FIG. 13 is a cross-sectional view that illustrates the fiducial member and the measurement head that measures the fiducial member.
[FIG. 14] FIG. 14 is a cross-sectional view that illustrates the fiducial member and the measurement head that measures the fiducial member.
[FIG. 15] FIG. 15 illustrates a first fiducial member.
[FIG. 16] FIG. 16 schematically illustrates a method of calculating the movement error by using the first fiducial member.
[FIG. 17] FIG. 17 schematically illustrates the method of calculating the movement error by using the first fiducial member.
[FIG. 18] FIG. 18 illustrates a measured result of a grid pattern before the processing head moves and a measured result of the grid pattern after the processing head moves.
[FIG. 19] FIG. 19 illustrates a measured result of a grid pattern before the processing head moves and a measured result of the grid pattern after the processing head moves.
[FIG. 20] FIG. 20 illustrates a border of a fiducial area.
[FIG. 21] FIG. 21 illustrates the border of the fiducial area.
[FIG. 22] FIG. 22 illustrates a second fiducial member.
[FIG. 23] FIG. 23 schematically illustrates a method of calculating the movement error by using the second fiducial member.
[FIG. 24] FIG. 24 schematically illustrates the method of calculating the movement error by using the second fiducial member.
[FIG. 25] FIG. 25 illustrates a third fiducial member.
[FIG. 26] FIG. 26 is a cross-sectional view that illustrates a configuration of a first reflector of the third fiducial member.
[FIG. 27] FIG. 27 is a cross-sectional view that illustrates a configuration of a second reflector of the third fiducial member.
[FIG. 28] FIG. 28 is a cross-sectional view that illustrates another configuration of the second reflector of the third fiducial member.
[FIG. 29] FIG. 29 is a cross-sectional view that illustrates another configuration of the second reflector of the third fiducial member.
[FIG. 30] FIG. 30 is a cross-sectional view that illustrates another configuration of the second reflector of the third fiducial member.
[FIG. 31] FIG. 31 is a cross-sectional view that illustrates a configuration of an optical system of a measurement head in a first modified example.
[FIG. 32] FIG. 32 is a cross-sectional view that illustrates a configuration of an optical system of a measurement head in a second modified example.
[FIG. 33] FIG. 33 is a cross-sectional view that illustrates the configuration of the optical system of the measurement head in the second modified example.
[FIG. 34] FIG. 34 illustrates the measurement head that irradiates the fiducial member with the measurement light.
[FIG. 35] Each of FIG. 35A and FIG. 35B schematically illustrates a merged result of a calculated result of a position of a first part of the fiducial member and a calculated result of a position of a second part of the fiducial member.
[FIG. 36] Each of FIG. 36A to FIG. 36E schematically illustrates the merged result of the calculated result of a position of the first part of the fiducial member and a calculated result of the position of the second part of the fiducial member in a case where the movement error occurs.
[FIG. 37] FIG. 37 is a cross-sectional view that illustrates a configuration of a measurement head in a fourth modified example.
[FIG. 38] FIG. 32 is a cross-sectional view that illustrates a configuration of an optical system of the measurement head in the fourth modified example.
[FIG. 39] FIG. 39 is a system configuration diagram that illustrates a system configuration of a machine tool in a fifth modified example.
[FIG. 40] FIG. 40 is a system configuration diagram that illustrates a system configuration of a machine tool in a sixth modified example.
[FIG. 41] FIG. 41 is a side view that illustrates a configuration of a head driving system of a machine tool in a seventh modified example.

### Description of Example embodiments

Next, with reference to drawings, an example embodiment of a movement error calculation system, a machine tool, a calculation apparatus, a calculation method, a calculation system, a position calculation apparatus, a position calculation method, a position calculation system, an optical measurement apparatus, a calibration method, an optical processing device, a measurement device, a computer program, and a recording medium will be described. In the below described description, the example embodiment of the movement error calculation system, the machine tool, the calculation apparatus, the calculation method, the calculation system, the position calculation apparatus, the position calculation method, the position calculation system, the optical measurement apparatus, the calibration method, the optical processing device, the measurement device, the computer program, and the recording medium will be described by using a machine tool 1 that is configured to process a workpiece W that is one example of an obj ect.

Incidentally, in the below-described description, a positional relationship of various components included in the machine tool 1 will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially a vertical direction) in the below-described description, for convenience of the description. Moreover, rotational directions (in other words, inclination directions) around the X axis, the Y axis and the Z axis are referred to as a θX direction, a θY direction and a θZ direction, respectively.

### (1) Configuration of Mahine Tool 1

Firstly, a configuration of the machine tool 1 in the present example embodiment will be described.

### (1-1) Entire Configuration of Machine Tool 1

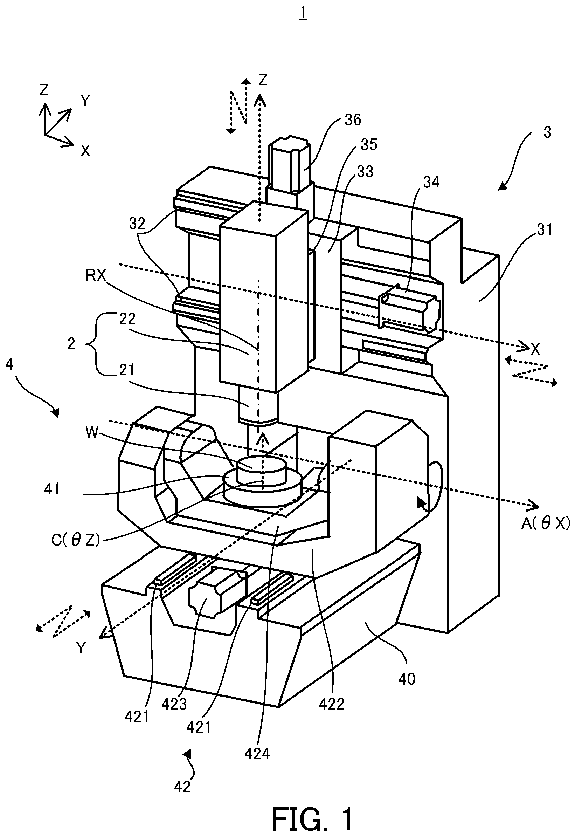

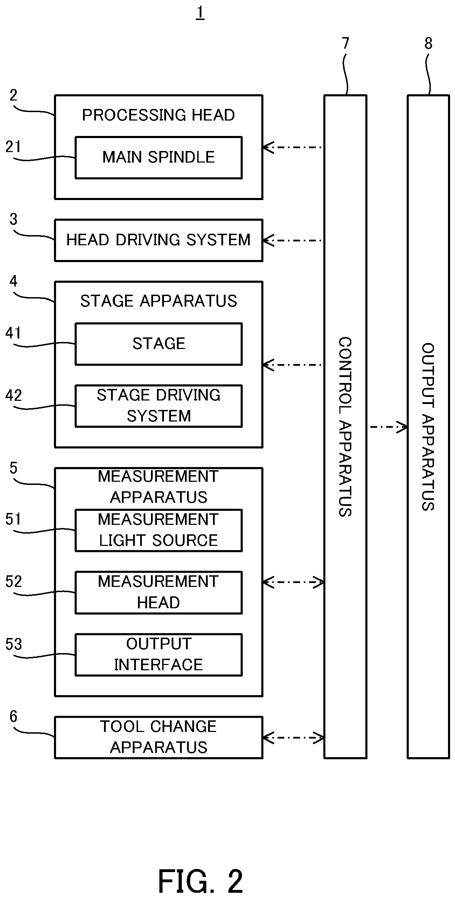

Firstly, with reference to FIG. 1 and FIG. 2, a configuration of the machine tool 1 in the present example embodiment will be described. FIG. 1 is a perspective view that illustrates an exterior appearance of the machine tool 1 in the present example embodiment. FIG. 2 is a system configuration diagram that illustrates one example of a system configuration of the machine tool 1 in the present example embodiment.

As illustrated in FIG. 1 and FIG. 2, the machine tool 1 includes a processing head 2, a head driving system 3, a stage apparatus 4, a measurement apparatus 5, a tool change apparatus 6, a control apparatus 7, and an output apparatus 8. However, the machine tool 1 may not include at least one of the tool change apparatus 6 and output apparatus 8. For the clarity of illustration, the measurement apparatus 5, the tool change apparatus 6, the control apparatus 7, and output apparatus 8 are omitted in FIG. 1.

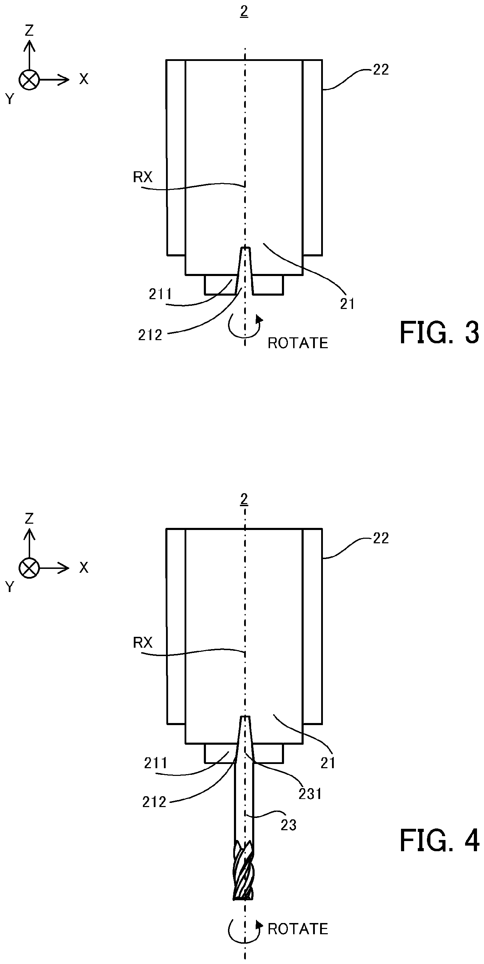

The processing head 2 is a processing apparatus for processing the workpiece W. The processing head 2 includes a main spindle 21 and a head housing 22. In the below-described description, the processing head 2 will be described with reference to FIG. 3 to FIG. 4, in addition to FIG. 1 and FIG. 2. Each of FIG. 3 and FIG. 4 is a cross-sectional view that illustrates a configuration of the processing head 2. Note that the processing head 2 may be referred to simply as a head.

As illustrated in FIG. 1 and FIG. 3 to FIG. 4, the main spindle 21 is a member that is rotatable around a rotational axis RX. In this case, the main spindle 21 may be a member extending along the rotational axis RX (namely, a member having a longitudinal shape) , for example. In an example illustrated in FIG. 1, the rotational axis RX of the main spindle 21 is parallel to the Z-axis. However, the main spindle 21 may rotate around the rotational axis RX that intersects with the Z-axis (for example, the rotational axis RX that is orthogonal to the Z-axis or inclined with respect to the Z-axis).

A tool 23 for processing the workpiece W (namely, a tool for processing) is attachable to the main spindle 21, as illustrated in FIG. 4. Specifically, as illustrated in FIG. 3 and FIG. 4, the main spindle 21 has an attachment part 211 to which the tool 23 is attached. The tool 23 is attached to the main spindle 21 through the attachment part 211. The tool 23 attached to the attachment part 211 is detachable from the attachment part 211. Namely, the tool 23 is detachably attached to the main spindle 21.

Note that a state in which "a first object is attached to a second object" in the present example embodiment includes at least one of a state in which "the first object is directly attached to the second object (namely, the first object is attached to the second object so that the first object and the second object are in contact)" and a state in which "the first object is indirectly attached to the second object (namely, the first object and the second object are not in contact)". The state in which "the first object is indirectly attached to the second object" may include a state in which "the first object is attached to the second object through a third object that is different from the first and second objects".

In the example illustrated in FIG. 3 and FIG. 4, the main spindle 21 includes the attachment part 211 with a hole 212 (for example, a tapered hole), which is formed at an end of the main spindle 21 (specifically, at an end on the workpiece W side), into which the tool 23 is fitted (alternatively, inserted). In this case, the tool 23 is attached to the main spindle 21 by a shank 231 of the tool 23, which has a shape complementary to the hole 212, being fitted into (alternatively, inserted into) the hole 212 of the attachment part 211. The attachment part 211 may hold the tool 23 attached to the attachment part 211. In this case, the attachment part 211 may include at least one of a mechanical chuck, an electrostatic chuck, a vacuum suction chuck, and the like to hold the tool 23.

In a case where the main spindle 21 rotates in a state where the tool 23 is attached to the main spindle 21, the tool 23 also rotates around the rotational axis RX. As a result, the workpiece W is processed by the rotating tool 23 contacting the workpiece W. In this manner, the machine tool 1 (especially, the processing head 2) may machine (machining-process) the workpiece W by using the main spindle 21 and the tool 23. In this case, the main spindle 21 (furthermore, the tool 23) may be referred to as a processing unit for performing a processing (in this case, the machining-processing) of the workpiece W.

The head housing 22 is a housing for containing the main spindle 21. The head housing 22 may contain the main spindle 21 in a containing space formed inside the head housing 22. The main spindle 21 contained in the head housing 22 may be supported by the head housing 22 through an non-illustrated bearing member (for example, a bearing).

Again in FIG. 1 and FIG. 2, the head driving system 3 moves the processing head 2. Note that the head driving system 3 may be referred to as a driving apparatus. The head driving system 3 may move the processing head 2 along at least one of the X-axis direction, the Y-axis direction, and the Z-axis direction, for example. The head driving system 3 may move the processing head 2 along at least one of the θX direction, the θY direction, and the θZ direction, in addition to or instead of at least one of the X-axis direction, the Y-axis direction, and the Z axis direction, for example. Namely, the head driving system 3 may rotate the processing head 2 around at least one of a rotational axis along the X-axis, a rotational axis along the Y-axis, and a rotational axis along the Z-axis, , in addition to or instead of moving the processing head 2 along at least one of the X-axis direction, the Y-axis direction, and the Z axis direction, for example. Note that the movement along at least one of the θX direction (a direction around the rotational axis along the X-axis direction), the θY direction (a direction around the rotational axis along the Y-axis direction), and the θZ direction (a direction around the rotational axis along the Z-axis direction) may be referred to as a rotational movement. In the below-described description, the rotational axis along the X-axis direction, the rotational axis along the Y-axis direction, and the rotational axis along the Z-axis direction are referred to as an A-axis, a B-axis, and a C-axis, respectively. Note that an operation for moving the processing head 2 along the rotational direction around at least one rotational axis of the A-axis, the B-axis, and the C-axis may be regarded to be equivalent to an operation for changing an attitude of the processing head 2.

In the example illustrated in FIG. 1, the head driving system 3 moves the processing head 2 along each of the X-axis direction and the Z-axis direction. In this case, the head driving system 3 may include: a column 31 that is a wall-like member extending upwardly along the Z-axis direction from a bed 40 that is a base of the stage apparatus 4 described below; an X guide member 32 that is attached to (alternatively, formed on) the column 31 and that extends along the X-axis direction; an X block member 33 that is attached to the X guide member 32 and that is movable along the X guide member 32; a servomotor 34 that generates a driving force for moving the X block member 33; a Z guide member 35 that is attached to (alternatively, formed on) the X block member 33 and that extends along the Z-axis direction; the Z block member (it is not illustrated in FIG. 1) that is attached to the Z guide member 35 and that is movable along the Z guide member 35; and a servomotor 36 that generates a driving force for moving the Z block member, for example. The processing head 2 (especially, the head housing 22) may be attached to the Z-block member. As a result, the processing head 2 moves in the X-axis direction due to the movement of the X block member 33 and moves in the Z-axis direction due to the movement of the Z-block member.

When the head driving system 3 moves the processing head 2, a relative positional relationship between the processing head 2 and a below-described stage 41 (furthermore, the workpiece W placed on the stage 41) changes. Therefore, the relative positional relationship between a processing position at which the processing head 2 performs the processing and the workpiece W changes. Namely, the processing position moves relative to the workpiece W. The machine tool 1 may process the workpiece W while moving the processing head 2. Specifically, the machine tool 1 may process a desired position of the workpiece W while setting the processing position at the desired position of the workpiece W by moving the processing head 2. However, in a case where the processing position may be set at the desired position of the workpiece W by moving the below-described stage 41, the machine tool 1 may process the workpiece W without moving the processing head 2.

The stage apparatus 4 includes the bed 40, the stage 41, and a stage driving system 42. The stage 41 and the stage driving system 42 are supported by the bed 40.

The workpiece W is placed on the stage 41. Therefore, the stage 41 may be referred to as a placing apparatus. The stage 41 may be configured to support the workpiece W placed on the stage 41. The stage 41 may be configured to hold the workpiece W placed on the stage 41. In this case, the stage 41 may include at least one of a mechanical chuck, an electrostatic chuck, a vacuum suction chuck, and the like to hold the workpiece W.

The stage 41 is disposed at a position at which it can face the processing head 2 (especially, the main spindle 21). In the example illustrated in FIG. 1, the stage 41 is disposed below the processing head 2 (especially, the main spindle 21). However, the stage 41 may be disposed at a position that is different from the position below the processing head 2 (especially, the main spindle 21).

The stage driving system 42 moves the stage 41. Note that the stage driving system 42 may be referred to as a driving apparatus. The stage driving system 42 may move the stage 41 along at least one of the X-axis direction, the Y-axis direction, and the Z-axis direction, for example. The stage driving system 42 may move the stage 41 along at least one of the θX direction, the θY direction, and the θZ direction, in addition to or instead of at least one of the X-axis direction, the Y-axis direction, and the Z axis direction, for example. Namely, the stage driving system 42 may rotate the stage 41 around at least one of the rotational axis along the X-axis (the A-axis), the rotational axis along the Y-axis (the B-axis), and the rotational axis along the Z-axis (the C-axis), in addition to or instead of moving the stage 41 along at least one of the X-axis direction, the Y-axis direction, and the Z axis direction, for example. Note that an operation for moving the stage 41 along the rotational direction around at least one rotational axis of the A-axis, the B-axis, and the C-axis may be regarded to be equivalent to an operation for changing an attitude of the stage 41.

In the example illustrated in FIG. 1, the stage driving system 42 moves the stage 41 along the Y-axis direction and rotates the stage 41 around the rotational axis of each of the A-axis and the C-axis. In this case, the stage driving system 42 may include: a Y-guide member 421 that is attached to (alternatively, formed on) the bed 40 and that extends along the Y-axis direction; a trunnion (a Y-block member) 422 that is attached to the Y-guide member 421 and that is movable along the Y-guide member 421; a servomotor 423 that generates a driving force for moving the trunnion 422; a cradle 424 that is attached to the trunnion 422 and that is rotatable around the A-axis relative to the trunnion 422; and an non-illustrated servomotor that generates a driving force for rotating the cradle 424, for example. The stage 41 may be attached to the cradle 424 so that it is rotatable around the C-axis relative to the cradle 424 by using a driving force generated by a non-illustrated servo motor. As a result, the stage 41 moves in the Y-axis direction due to the movement of the trunnion 422, rotates around the A-axis due to the rotation of the cradle 424, and rotates around the C-axis.

When the stage driving system 42 moves the stage 41, the relative positional relationship between the processing head 2 and the stage 41 (furthermore, the workpiece W placed on the stage 41) changes. Therefore, the relative positional relationship between the processing position at which the processing head 2 performs the processing and the workpiece W changes. Namely, the processing position moves relative to the workpiece W. The machine tool 1 may process the workpiece W while moving the stage 41. Specifically, the machine tool 1 may process a desired position of the workpiece W while setting the processing position at the desired position of the workpiece W by moving the stage 41. However, in a case where the processing position may be set at the desired position of the workpiece W by moving the above-described processing head 2, the machine tool 1 may process the workpiece W without moving the stage 41.

The measurement apparatus 5 is configured to measure a measurement target object. For example, the measurement apparatus 5 may be configured to measure a characteristic of the measurement target object. The characteristic of the measurement target object may include at least one of a position of the measurement target object, a shape of the measurement target object, a distance between the measurement apparatus 5 and the measurement target object, a reflectance of the measurement target object, a transmittance of the measurement target object, a temperature of the measurement target object, and a surface roughness of the measurement target object, for example.

In the below-described description, an example in which the measurement apparatus 5 measures at least the position of the measurement target obj ect will be described. The position of the measurement target object may include a position of a surface of the measurement target object. The position of the surface of the measurement target object may include a position of at least a part of the surface of the measurement target object. Moreover, the position of the measurement target object may mean a position (namely, a relative position) of the measurement target object relative to the measurement apparatus 5. Namely, the position of the measurement target object may mean a position of the measurement target object in a measurement coordinate system based on the measurement apparatus 5. The position of the measurement target object relative to the measurement apparatus 5 may include a position of the measurement target object relative to the measurement apparatus 5 along a first direction. The position of the measurement target object relative to the measurement apparatus 5 along the first direction may be regarded to be equivalent to a distance between the measurement apparatus 5 and the measurement target object along the first direction. The position of the measurement target object relative to the measurement apparatus 5 may include a position of the measurement target object relative to the measurement apparatus 5 along each of the first direction and a second direction intersecting with the first direction. The positions of the measurement target object relative to the measurement apparatus 5 along the first to second directions may be regarded to be equivalent to the distance between the measurement apparatus 5 and the measurement target object along the first direction and a distance between the measurement apparatus 5 and the measurement target object along the second direction, respectively. The position of the measurement target object relative to the measurement apparatus 5 may include a position of the measurement target object relative to the measurement apparatus 5 along each of the first direction, the second direction intersecting with the first direction, and a third direction intersecting with the first to second directions. The positions of the measurement target object relative to the measurement apparatus 5 along the first to third directions may be regarded to be equivalent to the distance between the measurement apparatus 5 and the measurement target object along the first direction, the distance between the measurement apparatus 5 and the measurement target object along the second direction, and a distance between the measurement apparatus 5 and the measurement target object along the third direction, respectively.

The position of each part of the surface of the measurement target object changes depending on a shape of the surface of the measurement target object. Therefore, an operation for measuring the position of the measurement target object may be regarded to be equivalent to an operation for measuring the shape of the measurement target object. The shape of the measurement target object may include at least one of a one-dimensional shape, a two-dimensional shape, and a three-dimensional shape of the measurement target object.

The measurement target object may include the workpiece W to be processed by the processing head 2, for example. The measurement target object may include any object placed on the stage 41, for example. The object placed on the stage 41 may include the workpiece W, for example. The optional object placed on the stage 41 may include a fiducial member FM that is used in a below-described movement error calculation operation. The measurement target object may include the stage 41, for example.

The measurement apparatus 5 may be configured to measure the measurement target object in a non-contact manner. The measurement apparatus 5 may be configured to optically measure the measurement target object. The measurement apparatus 5 may be configured to electrically measure the measurement target object. The measurement apparatus 5 may be magnetically measure the measurement target object. The measurement apparatus 5 may be configured to thermally measure measurement target object. The measurement apparatus 5 may be configured to acoustically measure the measurement target object. The measurement apparatus 5 may be configured to measure the measurement target object by using a probe that physically contacts with the measurement target object.

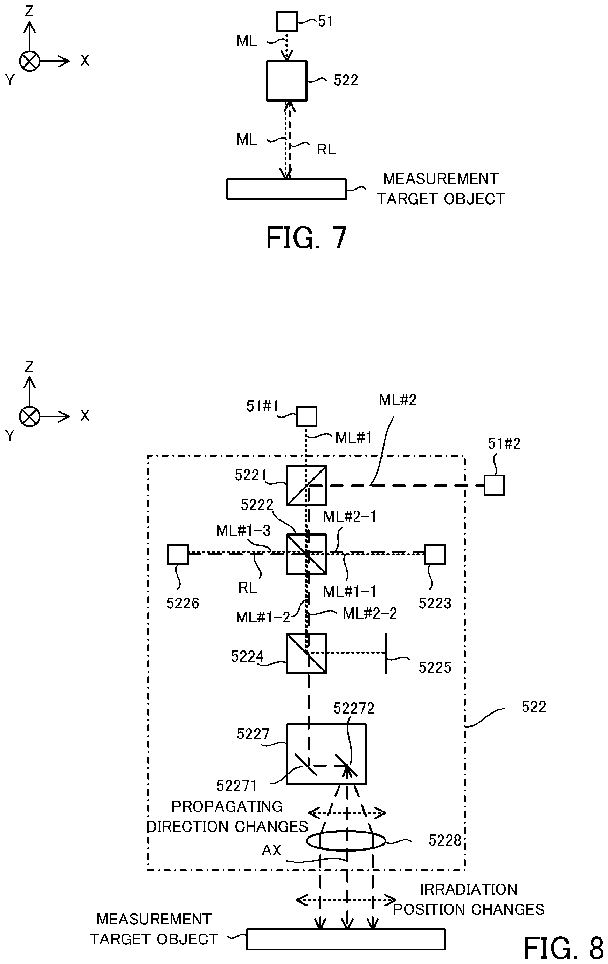

In the below-described description, an example where the measurement apparatus 5 is configured to optically measure the measurement target object. In this case, the measurement apparatus 5 may be referred to as an optical measurement apparatus. Specifically, the below-described description, an example in which the measurement apparatus 5 measures the measurement target object by irradiating the measurement target object with measurement light ML (see FIG. 7 and so on described below) and detecting (namely, optically receiving) at least a part of light from the measurement target object irradiated with the measurement light ML. The light from the measurement target object irradiated with the measurement light ML is light from the measurement target object generated by the irradiation of the measurement light ML. In the below-described explanation, light, which enters the measurement apparatus 5 (namely, is detected by the measurement apparatus 5), of the light from the measurement target object irradiated with the measurement light ML is referred to as "returning light RL".

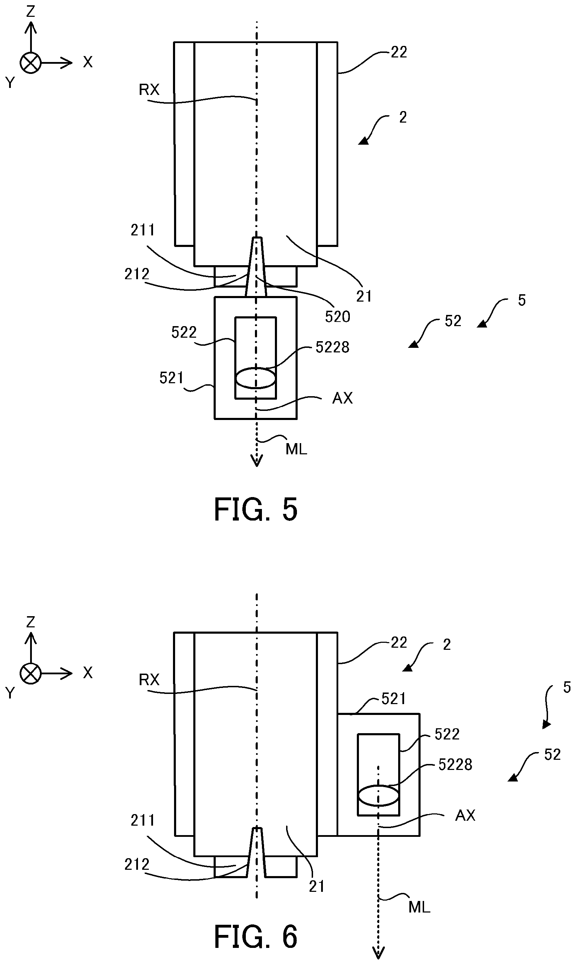

In the present example embodiment, in order to optically measure the measurement target object, the measurement apparatus 5 may include a measurement light source 51, a measurement head 52, and an output interface 53, for example. Incidentally, a configuration and an operation of the measurement apparatus 5 will be described in detail later, however, an overview thereof will be briefly described here. The measurement light source 51 is configured to generate the measurement light ML. The measurement head 52 is attached to the processing head 2. Namely, the measurement head 52 is disposed on the processing head 2. The measurement head 52 attached to the processing head 2 may be fixed to the processing head 2. The measurement head 52 attached to the processing head 2 may be detachable from the processing head 2. Incidentally, although the measurement head 52 attached to the processing head 2 is not illustrated in FIG. 1 for a simplification of a drawing, the measurement head 52 attached to the processing head 2 is illustrated in FIG 5 to FIG. 6 and so on for describing the configuration and the operation of the measurement apparatus 5 in detail later. The measurement apparatus 5 irradiates the measurement target object with the measurement light ML by using the measurement head 52. Furthermore, the measurement apparatus 5 detects the returning light RL from the measurement target object irradiated with the measurement light ML by using the measurement head 52. Therefore, the measurement head 52 may be referred to as an optical detection apparatus. The output interface 53 is configured to output a measured result by the measurement apparatus 5 (namely, a detected result of the returning light RL from the measurement target object) to the control apparatus 7.

The tool change apparatus 6 is an apparatus that is configured to change the tool 23 attached to the main spindle 21. For example, the tool change apparatus 6 may pick-up one tool 23 that should be attached to the main spindle 21 from a non-illustrated tool magazine containing a plurality of tools 23, and attach the picked-up one tool 23 to the main spindle 21. Namely, the tool change apparatus 6 may serve as an attachment apparatus that is configured to attach the tool 23 to the main spindle 21. The tool change apparatus 6 may detach the tool 23 attached to the main spindle 21 from the main spindle 21, and store the detached tool 23 in the non-illustrated tool magazine. Namely, the tool change apparatus 6 may serve as a detachment apparatus that is configured to detach the tool 23 from the main spindle 21. Note that an automatic tool changer (ATC: Automatic Tool Changer) used in a machining center or the like may be used as the tool change apparatus 6.

In the present example embodiment, the measurement head 52 of the measurement apparatus 5 may be attached to the main spindle 21 in addition to the tool 23, as described in detail later. In this case, the tool change apparatus 6 may serve as an attachment apparatus that is configured to attach the measurement head 52 to the main spindle 21. Namely, the tool change apparatus 6 may pick-up the measurement head 52 from the non-illustrated tool magazine containing not only the tool 23 but also the measurement head 52 (alternatively, an unillustrated head magazine containing the measurement head 52 that is different from the tool magazine containing the tool 23), and attach the picked-up measurement head 52 to the main spindle 21. Moreover, the measurement head 52 may be serve as a detachment apparatus that is configured to detach the measurement head 52 from the main spindle 21. Namely, the tool change apparatus 6 may detach the measurement head 52 attached to the main spindle 21 from the main spindle 21, and store the detached measurement head 52 in the non-illustrated tool magazine or the non-illustrated head magazine.

The control apparatus 7 controls an operation of the machine tool 1. For example, the control apparatus 7 may control an operation of the processing head 2 of the machine tool 1 (for example, the rotation of the main spindle 21). For example, the control apparatus 7 may control an operation of the head driving system 3 of the machine tool 1 (for example, the movement of the processing head 2). For example, the control apparatus 7 may control an operation of the stage driving system 42 of the machine tool 1 (for example, the movement of the stage 41). For example, the control apparatus 7 may control an operation of the tool change apparatus 6 of the machine tool 1 (namely, the change of the tool 23 and the measurement head 52 attached to the main spindle 21).

The control apparatus 7 may acquire the measured result by the measurement apparatus 5 from the output interface 53 of the measurement apparatus 5 and control the operation of the machine tool 1 based on the acquired measured result. For example, the control apparatus 7 may generate measurement data of the measurement target object (for example, data related to at least one of the position and the shape of the measurement target object) based on the measured result by the measurement apparatus 5, and control the operation of the machine tool 1 based on the generated measurement data.

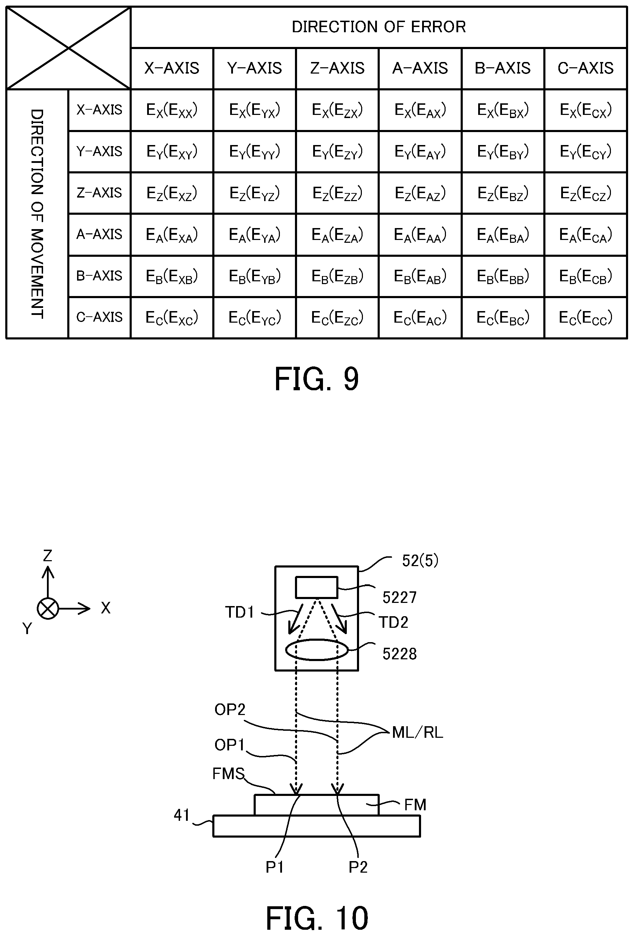

In the present example embodiment, the control apparatus 7 performs the movement error calculation operation for calculating a movement error (in other words, a motion error) occurring in a movement of at least one of the processing head 2 and the stage 41 based on the measured result by the measurement apparatus 5. Specifically, the control apparatus 7 performs the movement error calculation operation based on the measured result of the below-described fiducial member FM by the measurement apparatus 5. The control apparatus 7 that performs the movement error calculation operation may be referred to as a movement error calculation system or a calculation system. A system including the measurement apparatus 5 and the control apparatus 7 may be referred to as a movement error calculation system or a calculation system. A system including the below-described fiducial member FM and the control apparatus 7 may be referred to as a movement error calculation system or a calculation system. A system including the fiducial member FM, the measurement apparatus 5, and the control apparatus 7 may be referred to as a movement error calculation system or a calculation system. Note that the movement error calculation operation will be described in detail later with reference to FIG. 9 and so on. Here, the fiducial member FM may be a member whose characteristic is known, for example. As one example, the known characteristic of the fiducial member FM may include a shape, a size, a reflectance (a reflectance distribution), and/or a transmittance (a transmittance distribution). Note that the fiducial member FM may be a member having one or more feature points within a measurement range of the measurement apparatus 5. Here, a state in which one or more feature point are within the measurement range may mean a state in which the feature point is within an area corresponding to the measurement range in a case where the area corresponding to the measurement range is defined on a surface of the fiducial member FM. A feature point may be a point whose position is distinguishable from other part, whose position can be determined and whose characteristic is different from a characteristics of other part, for example. This characteristic may be the position of the point or the reflectance (the transmittance), for example. The feature point may be a vertex or a corner of one area that is distinguishable from other area, or may be a border between those areas. Using the fiducial member FM having one or more feature points within the measurement range of the measurement apparatus 5 results in such an advantage that a measurement error is reduced.

The control apparatus 7 may include a calculation apparatus and a storage apparatus, for example. The calculation apparatus may include at least one of a CPU (Central Processing Unit) and a GPU (Graphical Processing Unit), for example. The storage apparatus may include a memory, for example. The control apparatus 7 serves as an apparatus for controlling the operation of the machine tool 1 by means of the calculation apparatus executing a computer program. The computer program is a computer program that allows the control apparatus 7 (for example, the calculation apparatus) to perform (namely, to execute) a below-described operation that should be performed by the control apparatus 7. Namely, the computer program is a computer program that allows the control apparatus 7 to function so as to make the machine tool 1 perform the below-described operation. The computer program executed by the calculation apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the calculation apparatus may download the computer program that should be executed from an apparatus disposed at the outside of the control apparatus 7 through a network interface.

The control apparatus 7 may not be disposed in the machine tool 1, and may be disposed at the outside of the machine tool 1 as a server or the like. In this case, the control apparatus 7 may be connected to the machine tool 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the machine tool 1 may be configured to transmit and receive various information through the network. Moreover, the control apparatus 7 may be configured to transmit information such as a command and a control parameter to the machine tool 1 through the network. The machine tool 1 may include a receiving apparatus that receives the information such as the command and the control parameter from the control apparatus 7 through the network. The machine tool 1 may include a transmitting apparatus that transmits the information such as the command and the control parameter to the control apparatus 7 (namely, an output apparatus that outputs the information to the control apparatus 7) through the network. Alternatively, a first control apparatus that performs a part of the processing performed by the control apparatus 7 may be disposed in the machine tool 1 and a second control apparatus that performs another part of the processing performed by the control apparatus 7 may be disposed at the outside of the machine tool 1.

An arithmetic model that is buildable by machine learning may be implemented in the control apparatus 7 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 7 may control the operation of the machine tool 1 by using the arithmetic model. Namely, the operation for controlling the operation of the machine tool 1 may include an operation for controlling the operation of the machine tool 1 by using the arithmetic model. Note that the arithmetic model that has been built by off-line machine learning using training data may be implemented in the control apparatus 7. Moreover, the arithmetic model implemented in the control apparatus 7 may be updated by online machine learning on the control apparatus 7. Alternatively, the control apparatus 7 may control the operation of the machine tool 1 by using the arithmetic model implemented in an apparatus external to the control apparatus 7 (namely, an apparatus external to the machine tool 1), in addition to or instead of the arithmetic model implemented on the control apparatus 7.

Note that the recording medium recording therein the computer program that should be executed by the control apparatus 7 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 7 by means of the control apparatus 7 (namely, a computer) executing the computer program, may be realized by a hardware such as a predetermined gate array (a FPGA (Field Programmable Gate Array), an ASIC (Application Specific Integrated Circuit)) of the control apparatus 7, or may be realized in a form in which the logical process block and a partial hardware module that realizes an partial element of the hardware are combined.

The output apparatus 8 is an apparatus that outputs information to an outside of the machine tool 1. For example, the output apparatus 8 may output the information as an image. Namely, the output apparatus 8 may include a display apparatus (a so-called display) that is configured to display the image. For example, the output apparatus 8 may output the information as audio. Namely, the output apparatus 8 may include an audio output apparatus (a so-called speaker) that is configured to output the audio. For example, the output apparatus 8 may output the information on paper. Namely, the output apparatus 8 may include a printing apparatus (a so-called printer) that is configured to print desired information on paper. For example, the output apparatus 8 may output the information as data to a recording medium that is attachable to the machine tool 1. For example, the output apparatus 8 may output (namely, transmit) the information as data through a communication line. Namely, the output apparatus 8 may function as a communication apparatus.

### (1-2) Configuration of Measurement Apparatus 5 (Measurement Head 52)

Next, with reference to FIG. 5, a configuration of the measurement apparatus 5 will be described. FIG. 5 is a cross-sectional view that illustrates the processing head 2 to which the measurement apparatus 5 (especially, the measurement head 52) is attached.

As illustrated in FIG. 5, the measurement head 52 is attached to the processing head 2. Specifically, the measurement head 52 includes a head housing 521, and the head housing 521 is attached to the processing head 2. In an example illustrated in FIG. 5, the measurement head 52 is attached to the main spindle 21 of the processing head 2. Namely, the measurement head 52 is attached to the main spindle 21 instead of the tool 23. Specifically, the head housing 521 is attached to the attachment part 211 of the main spindle 21. In the example illustrated in FIG. 5, since the main spindle 21 includes the attachment part 211 with the formed hole 212, the head housing 521 is attached to the main spindle 21 by a shank 520 corresponding to a protruding part of the head housing 521, which has a shape complementary to the hole 212, being fitted into (alternatively, inserted into) the hole 212 of the attachment part 211. The attachment part 211 may hold the head housing 521. In this case, the attachment part 211 may include at least one of a mechanical chuck, an electrostatic chuck, a vacuum suction chuck, and the like to hold the head housing 521.

The head housing 521 (namely, the measurement head 52) attached to the attachment part 211 is detachable from the attachment part 211. Namely, the head housing 521 (namely, the measurement head 52) is detachably attached to the main spindle 21. For example, in a case where the measurement head 52 is attached to the main spindle 21, the tool 23 is detached from the main spindle 21. On the other hand, in a case where the tool 23 is attached to the main spindle 21, the measurement head 52 is detached from the main spindle 21. Incidentally, as described above, the attachment and the detachment of the head housing 521 and the attachment and the detachment of the tool 23 are performed by the tool change apparatus 6. However, an operator of the machine tool 1 may manually perform at least one of the attachment and the detachment of the measurement head 52 relative to the main spindle 21 and the attachment and the detachment of the tool 23 relative to the main spindle 21.

However, the measurement head 52 may be attached to a part of the processing head that is different from the main spindle 21. For example, as illustrated in FIG. 6 that is a cross-sectional view illustrating the processing head 2 to which the measurement apparatus 5 (especially, the measurement head 52) is attached, the measurement head 52 may be attached to the head housing 22 of the processing head 2. The head housing 521 may be attached to the head housing 22 of the processing head 2. The head housing 521 may be attached to the processing head 2 at a position that is away from the rotational axis RX of the main spindle 21 along a direction intersecting with the rotational axis RX. In an example illustrated in FIG. 6, the head housing 521 is attached to a side surface of the head housing 22.

In a case where the measurement head 52 is attached to the part of the processing head 2 that is different from the main spindle 21, the measurement head 52 may not be detachable from the processing head 2. Namely, the measurement head 52 may not be detachably attached to the processing head 2. The measurement head 52 may remain to be attached to the processing head 2 in a processing period during which the processing head 2 processes the workpiece W by using the tool 23. However, the measurement head 52 may be detachably attached to the processing head 2, even in a case where the measurement head 52 is attached to the part of the processing head 2 that is different from the main spindle 21.

The measurement head 52 may be attached to a position that is fixed relative to the processing head 2. Namely, the measurement head 52 may be attached to the processing head 2 so that a positional relationship between the processing head 2 and the measurement head 52 is fixed (namely, does not change). The measurement head 52 may be directly fixedly attached to the processing head 2. The measurement head 52 may be fixedly and indirectly attached to the processing head 2. For example, the measurement head 52 may be fixed to other side of a support member whose one side is directly fixed to the processing head 2. Both of a state in which the measurement head 52 is directly fixed to the processing head 2 and a state in which the measurement head 52 is directly fixed to the processing head 2 correspond to a state in which the measurement head 52 is attached to the position that is fixed relative to the processing head 2. Incidentally, in a case where the measurement head 52 is attached to the processing head 2, the positional relationship between the processing head 2 and the measurement head 52 is usually fixed, unless the measurement apparatus 5 includes a driving system that moves the measurement head 52 independently of the processing head 2. Incidentally, in a case where the measurement head 52 is attached to the main spindle 21 of the processing head 2, the rotation of the main spindle 21 may be locked by using a mechanical fixing mechanism or the like in a case where the measurement head 21 is attached to the main spindle 21 because the main spindle 21 is rotatable around the rotational axis RX.

However, the measurement head 52 may not be attached to the position that is fixed relative to the processing head 2. The positional relationship between the processing head 2 and the measurement head 52 may be variable. The measurement apparatus 5 may include the driving system that moves the measurement head 52 independently of the processing head 2. For example, this driving system may be configured to relatively move the processing head 2 and the measurement head 52 along the rotational axis RX. In this case, the control apparatus 7 may measure a moving distance of the processing head 2 and the measurement head 52 along the rotational axis RX with an encoder or the like, measure the movement error along this movement axis in advance, and use this movement error measured in advance for correction in calculating the movement error of the machine tool 1. In a case where the measurement head 52 is attached to the head housing 22 of the processing head 2 as described above, there is a possibility that the measurement head 52 interferes with the processing of the workpiece W in the processing period during which the processing head 2 processes the workpiece W by using the tool 23. Specifically, for example, if the measurement head 52 contacts the workpiece W (alternatively, another object) before the tool 23 contacts the workpiece W, the tool 23 cannot contact the workpiece W, and as a result, the measurement head 52 interferes with the processing of the workpiece W. Therefore, the positional relationship between the processing head 2 and the measurement head 52 in at least a part of a measurement period during which the measurement apparatus 5 measures the measurement target object may be different from the positional relationship between the processing head 2 and the measurement head 52 in at least a part of the processing period during which the processing head 2 processes the workpiece W. For example, the positional relationship between the processing head 2 and the measurement head 52 may be set to a first relationship that allows the measurement head 52 not to interfere with the processing of the workpiece W during at least a part of the processing period, and the positional relationship between the processing head 2 and the measurement head 52 may be set to a second relationship that is different from the first relationship (for example, a second relationship that allows the measurement apparatus 5 to measure the measurement target object by using the measurement head 52) during at least a part of the measuring period.

In a case where the measurement head 52 is attached to the processing head 2, the measurement head 52 also moves due to the movement of the processing head 2. Namely, the measurement head 52 moves in the same manner as the processing head 2. Therefore, the head driving system 3 that moves the processing head 2 may be regarded to serve as a head driving system that moves the measurement head 52. In this case, a relative positional relationship between a measurement position at which the measurement head 52 performs the measurement and the measurement target object changes due to the movement of the measurement head 52. Namely, the measurement position moves relative to the measurement target object. The machine tool 1 may measure the measurement target object while moving the measurement head 52 by moving the processing head 2. Specifically, the machine tool 1 may measure a desired position of the measurement target object while setting the measurement position at the desired position of the measurement target object by moving the measurement head 52. However, in a case where the measurement target object is the stage 41 or the object placed on the stage 41, the relative positional relationship between the measurement position at which the measurement head 52 performs the measurement and the measurement target object also changes due to the movement of the stage 41. Therefore, in a case where it is possible to set the measurement position at the desired position of the measurement target object by moving the stage 41, the machine tool 1 may measure the measurement target object without moving the measurement head 52.

In a case where the measurement head 52 is attached to the main spindle 21, the measurement head 52 may also rotate around the rotational axis RX due to the rotation of the main spindle 21. In this case, the control apparatus 7 may calculate a movement error due to the rotational movement of the main spindle 21 in advance, and use this movement error measured in advance for correction in calculating the movement error of the machine tool 1.

The measurement head 52 further includes an optical system 522. The optical system 522 is contained in a containing space inside the head housing 521. Therefore, the optical system 522 is attached to the processing head 2 through the head housing 521. In a case where the optical system 522 is contained in the head housing 521 in this manner, unnecessary substance (for example, cutting chip, cutting fluid, and the like) generated by the processing of the workpiece W are prevented from adhering to the optical system 522.

Note that the measurement head 52 may include the measurement light source 51. For example, the measurement light source 51 may be contained in an inner space of the head housing 521. In this case, the measurement light source 51 may be regarded to be a part of the optical system 522. Moreover, the measurement light source 51 may not be attached to the processing head 2, and may be attached to a part of the processing head 2 that is different from the main spindle 21. In a case where the measurement apparatus 52 includes a plurality of measurement light sources 51 (for example, measurement light sources 51#1 and 51#2 described below), at least one of the plurality of measurement light sources 51 may not be attached to the processing head 2, and may be attached to a part of the processing head 2 that is different from the main spindle 21.

The optical system 522 is used to irradiate the measurement target object with the measurement light ML from the measurement light source 51. Furthermore, the optical system 522 is used to detect the returning light RL from the measurement target object. Specifically, as illustrated in FIG. 7 that is a cross-sectional view illustrating the optical system 522 that irradiates the measurement target object with the measurement light ML and detects the returning light RL from the measurement target object, the measurement light ML generated by the measurement light source 51 enters the optical system 522 from the measurement light source 51 through a non-illustrated light transmission member such as an optical fiber. The optical system 522 emits the measurement light ML, which has entered the optical system 522, toward the measurement target object. Namely, the optical system 522 irradiates the measurement target object with the measurement light ML.

When the measurement target object is irradiated with the measurement light ML, light generated by the irradiation of the measurement light ML is emitted from the measurement target object. The light generated by the irradiation of the measurement light ML may include reflection light of the measurement light ML with which the measurement target object is irradiated. The light generated by the irradiation of the measurement light ML may include scattered light of the measurement light ML with which the measurement target object is irradiated. The light generated by the irradiation of the measurement light ML may include transmitted light of the measurement light ML with which the measurement target object is irradiated. The light generated by the irradiation of the measurement light ML may include diffracted light of the measurement light ML with which the measurement target object is irradiated.

At least a part of the light generated by the irradiation of the measurement light ML enters the optical system 522 as the returning light RL from the measurement target object. Specifically, a light component, which propagates along an optical path of the measurement light ML, of the light generated by the irradiation of the measurement light ML enters the optical system 522 as the returning light RL. In this case, an optical path of the measurement light ML that is emitted from a fθ lens 5228 to enter the measurement target object may be the same as an optical path of the returning light RL that is emitted from the measurement target obj ect to enter the fθ lens 5228. As one example, in a case where the measurement light ML vertically enters the measurement target object, the returning light RL may be light that is mainly specular reflection light of the measurement light ML. Of course, in a case where the measurement light ML vertically enters the measurement target object, the returning light RL may include light other than the specular reflection light of the measurement light ML (for example, at least one of diffused reflection light, the scattered light, the transmitted light, and the diffracted light of the measurement light ML). As another example, in a case where the measurement light ML obliquely enters (in other words, non-vertically enters) the measurement target object, the returning light RL may be light that is mainly the diffused reflection light of the measurement light ML. Of course, in a case where the measurement light ML obliquely enters the measurement target object, the returning light RL may include light other than the diffused reflection light of the measurement light ML (for example, at least one of the specular reflection light, the scattered light, the transmitted light, and the diffracted light of the measurement light ML).

Here, with reference to FIG. 8, a configuration of the optical system 522 that irradiates the measurement target object with the measurement light ML and detects the returning light RL will be described in more detail. FIG. 8 is a cross-sectional view illustrating the configuration of the optical system 522.

The optical system 522 includes a beam splitter 5221, a beam splitter 5222, a detector (a measurement unit) 5223, a beam splitter 5224, a mirror 5225, a detector (a measurement unit) 5226, a Galvano mirror 5227, and a fθ lens 5228.

Incidentally, the detector (the measurement unit) 5223 of the optical system 522 may not be contained in the head housing 521. In other words, the detector (the measurement unit) 5223 may not be attached to the processing head 2, or may be attached to a part of the processing head 2 that is different from the main spindle 21. Similarly, at least one of the measurement light source 51, the beam splitter 5221, the beam splitter 5222, the detector (the measurement unit) 5223, the beam splitter 5224, the mirror 5225, and the detector (the measurement unit) 5226 may be contained in a housing different from the head housing 521 that is attached to the main spindle 21 of the processing head 2. In this case, the housing different from the head housing 521 may not be attached to the processing head 2, may be attached to a part of the processing head 2 that is different from the main spindle 21, or may be attached to an outside of a housing that contains at least one of the processing head 2, the head driving system 3, the stage apparatus 4, and the measurement apparatus 5 of the machine tool 1.

The measurement light ML from the measurement light source 51 enters the beam splitter 5221. In the present example embodiment, two measurement lights ML, which are generated by two measurement light sources 51 (specifically, the measurement light sources 51#1 and 51#2), respectively, enter the beam splitter 5221. Therefore, the measurement apparatus 5 includes the measurement light source 51#1 and the measurement light source 51#2. The two measurement light sources 51 may emit the two measurement lights ML whose phases are synchronized with each other and that are coherent, respectively. However, the measurement apparatus 5 may include a single measurement light source 51.

Oscillation frequencies of the two measurement light sources 51 are different. Therefore, the two measurement lights ML respectively emitted from the two measurement light sources 51 are two measurement lights ML having different frequencies. In a case where the measurement light sources 51 generates pulsed light as the measurement light ML, the two measurement lights ML emitted from the two measurement light sources 51 are two measurement lights ML having different pulse frequencies (for example, the number of the pulsed light per unit time, and an inverse number of an emission cycle of the pulsed light). As one example, the measurement light source 51#1 may emit the measurement light ML whose pulse frequency is 25 GHz, and the measurement light source 51#2 may emit the measurement light ML whose pulse frequency is 25 GHz +α (for example, +100 kHz). In the below-described description, the measurement light ML generated by the measurement light source 51#1 is referred to as "measurement light ML#1" and the measurement light ML generated by the measurement light source 51#2 is referred to as "measurement light MI,#2". However, the oscillation frequencies of the two measurement light sources 51 may be equal to each other.

The measurement light source 51 includes a light comb light source. The light comb light source is a light source that is configured to generate, as the pulsed light, a light including frequency components that are arranged with equal interval on a frequency axis (hereinafter, it is referred to as a "light frequency comb"). In this case, the measurement light source 51 emits, as the measurement light ML, the pulsed light including the frequency components that are arranged with equal interval on the frequency axis.

The two measurement lights ML#1 and ML#2 that have entered the beam splitter 5221 are emitted toward the beam splitter 5222. In other words, the beam splitter 5221 emits the measurement light ML#1 and ML#2, which have entered the beam splitter 5221 from different directions, respectively, toward the same direction (namely, the direction in which the beam splitter 5222 is disposed).

The beam splitter 5222 emits measurement light ML#1-1, which is a part of the measurement light ML#1 that has entered the beam splitter 5222, toward the detector 5223. The beam splitter 5222 emits measurement light MI,#1-2, which is another part of the measurement light ML#1 that has entered the beam splitter 5222, toward the beam splitter 5224. The beam splitter 5222 emits measurement light ML#2-1, which is a part of the measurement light ML2#2 that has entered the beam splitter 5222, toward the detector 5223. The beam splitter 5222 emits measurement light MI,#2-2, which is another part of the measurement light ML#2 that has entered the beam splitter 5222, toward the beam splitter 5224.

The measurement lights ML#1-1 and MI,#2-1 emitted from the beam splitter 5222 enter the detector 5223. The detector 5223 optically receives (namely, detects) the measurement light ML#1-1 and the measurement light MI,#2-1. Especially, the detector 5223 optically receives interfering light generated by an interference between the measurement light ML#1-1 and the measurement light ML#2-1. Note that an operation for optically receiving the interfering light generated by the interference between the measurement light ML#1-1 and the measurement light ML#2-1 may be regarded to be equivalent to an operation for optically receiving the measurement light ML#1-1 and the measurement light ML#2-1. A detected result by the detector 5223 (namely, an optical received result of the interfering light) is outputted to the control apparatus 7 as a part of the measured result by the measurement apparatus 5 through the output interface 53.

The measurement lights MI,#1-2 and MI,#2-2 emitted from the beam splitter 5222 enter the beam splitter 5224. The beam splitter 5224 emits at least a part of the measurement light MI,#1-2, which has entered the beam splitter 5224, toward the mirror 5225. The beam splitter 5224 emits at least a part of the measurement light ML#2-2, which has entered the beam splitter 5224, toward the Galvano mirror 5227.

The measurement light ML#1-2 emitted from the beam splitter 5224 enter the mirror 5225. The measurement light ML#1-2 that has entered the mirror 5225 is reflected by a reflection surface of the mirror 5225 (the reflection surface may be referred to as a reference surface). Specifically, the mirror 5225 reflects the measurement light ML#1-2, which has entered the mirror 5225, toward the beam splitter 5224. Namely, the mirror 5225 emits the measurement light ML#1-2, which has entered the mirror 5225, toward the beam splitter 5224 as measurement light ML#1-3 that is a reflection light thereof. In this case, the measurement light ML#1-3 may be referred to as reference light. The measurement light ML#1-3 emitted from the mirror 5225 enters the beam splitter 5224. The beam splitter 5224 emits the measurement light MI,#1-3, which has entered the beam splitter 5224, toward the beam splitter 5222. The measurement light MI,#1-3 emitted from the beam splitter 5224 enters the beam splitter 5222. The beam splitter 5222 emits the measurement light MI,#1-3, which has entered the beam splitter 5222, toward the detector 5226.

On the other hand, the measurement light MI,#2-2 emitted from the beam splitter 5224 toward the Galvano mirror 5227 enters the Galvano mirror 5227. The Galvano mirror 5227 is configured to change a propagating direction of the measurement light ML#2-2 emitted from the Galvano mirror 5227 toward the fθ lens 5228 so that an irradiation position of the measurement light ML (in this case, the measurement light MI,#2-2) on the measurement target object changes. Therefore, the Galvano mirror 5227 may be referred to as a propagating direction change member. The Galvano mirror 5227 may include an X scanning mirror 52271 and a Y scanning mirror 52272. Each of the X scanning mirror 52271 and the Y scanning mirror 52272 is an inclined angle variable mirror whose angle relative to an optical path of the measurement light MI,#2-2 entering the Galvano mirror 5227 is changeable. The X scanning mirror 52271 changes the propagating direction of the measurement light MI,#2-2 so as to change the irradiation position of the measurement light MI,#2-2 on the measurement target object along the X-axis direction. The Y scanning mirror 52272 changes the propagating direction of the measurement light MI,#2-2 so as to change the irradiation position of the measurement light MI,#2-2 on the measurement target object along the Y-axis direction.

Since the Galvano mirror 5227 is configured to change the irradiation position of the measurement light MI,#2-2 on the measurement target object, the measurement apparatus 5 is configured to irradiate a plurality of parts of the measurement target object with the measurement light MI,#2-2 in sequence. As a result, the measurement apparatus 5 is configured to measure the plurality of parts of the measurement target object at relatively high speed. Namely, the measurement apparatus 5 is configured to measure multiple points of the measurement target obj ect.

The measurement light MI,#2-2 emitted from the Galvano mirror 5227 enters the fθ lens 5228. The fθ lens 5228 is configured to serve as an objective optical system that irradiate the measurement target object with the measurement light MI,#2-2. The fθ lens 5228 may condenses the measurement light MI,#2-2 on the measurement target object. Namely, the fθ lens 5228 may irradiate the measurement target object with the measurement light ML#2-2 that is converged light. In this case, the fθ lens 5228 may typically have a finite focal length. In a case where the measurement target object is irradiated with the measurement light ML#2-2 that is the converged light, a diameter of a spot formed by the measurement light MI,#2-2 on the surface of the measurement target object is relatively small, and therefore, there is such an advantage that a measurement accuracy of the measurement apparatus 5 is relatively high. However, as described in detail later in a modified example, the measurement head 52 may irradiate the measurement target object with the measurement light MI,#2-2 that is collimated light (namely, collimated light).

The fθ lens 5228 may be a telecentric optical system on the measurement target object side. In this case, even in a case where the propagating direction of the measurement light MI,#2-2 emitted from the Galvano mirror 5227 changes, the propagating direction of the measurement light MI,#2-2 emitted from the fθ lens 5228 is parallel to an optical axis AX of the fθ lens 5228.

In a case where the measurement head 52 is attached to the main spindle 21 of the processing head 2, the optical axis AX of the fθ lens 5228 may be coaxial with the rotational axis RX of the main spindle 21 (see FIG. 5 above). Namely, a direction of the optical axis AX of the fθ lens 5228 may be a direction extending along the rotational axis RX. The optical axis AX of the fθ lens 5228 may be coincident with the rotational axis RX. In this case, the fθ lens 5228 may emit the measurement light MI,#2-2 so that the propagating direction of the measurement light MI,#2-2 emitted from the fθ lens 5228 is the direction extending along the rotational axis RX. Incidentally, since the measurement light MI,#2-2 emitted from the fθ lens 5228 is the measurement light MI,#2-2 emitted from the optical system 522, the optical axis AX of the fθ lens 5228 may be regarded as an optical axis of the optical system 522 on the measurement target object side (namely, a virtual ray of light representing a light beam of the measurement light ML#2-2 emitted from the optical system 522 toward the measurement target object). However, even in a case where the measurement head 52 is attached to the main spindle 21 of the processing head 2, the optical axis AX of the fθ lens 5228 may not be coaxial with the rotational axis RX. For example, the optical axis AX of the fθ lens 5228 may be parallel to the rotational axis RX. The optical axis AX of the fθ lens 5228 may intersect with the rotational axis RX. The optical axis AX of the fθ lens 5228 may be in a skew relationship relative to the rotational axis RX. Even in a case where the measurement head 52 is attached to the part of the processing head 2 that is different from the main spindle 21, the optical axis AX of the fθ lens 5228 may not be coaxial with the rotational axis RX (see FIG. 6 above).

Incidentally, the measurement head 52 may include at least the fθ lens 5228 in order for the measurement head 52 to irradiate the workpiece W with the measurement light ML#2-2. In this case, the measurement light ML#2-2 may enter the measurement head 52 through an optical system (for example, an optical system that is different from the optical system 522 in that it does not include the fθ lens 5228) disposed outside the measurement head 52. The measurement head 52 may irradiate the workpiece W with the measurement light ML#2-2, which has entered the measurement head 52, through the fθ lens 5228.

When the measurement target object (in the example illustrated in FIG. 6, the workpiece W) is irradiated with the measurement light ML, the returning light RL, which is at least a part of the light generated by the irradiation of the measurement light ML onto the measurement target object, is emitted from the measurement target object. The returning light RL enters the optical system 522 (specifically, the fθ lens 5228). Here, as described above, the returning light RL is the light component, which propagates along the optical path of the measurement light ML, of the light generated by the irradiation of the measurement light ML. Therefore, the optical path of the returning light RL may overlap with the optical path of the measurement light ML#2-2 between the optical system 522 (especially, the fθ lens 5228 including a terminal optical element) and the measurement target object. Namely, the optical path of the returning light RL and the optical path of the measurement light MI,#2-2 may be coaxial between the optical system 522 and the measurement target object. For example, the fθ lens 5228 may irradiate the measurement target object with the measurement light MI,#2-2 so that the measurement light MI,#2-2 vertically enters the measurement target object. The machine tool 1 may adjust a positional relationship between the fθ lens 5228 (namely, the measurement head 52) and the measurement target object by controlling at least one of the head driving system 3 and the stage driving system 42 so that the measurement light MI,#2-2 vertically enters the measurement target object. In a case where the measurement light MI,#2-2 vertically enters the measurement target object, typically, the optical path of the returning light RL overlaps with the optical path of the measurement light MI,#2-2 between the optical system 522 and the measurement target object. However, the fθ lens 5228 may irradiate the measurement target object with the measurement light ML#2-2 so that the measurement light MI,#2-2 obliquely enters the measurement target object. The machine tool 1 may adjust the positional relationship between the fθ lens 5228 and the measurement target object by controlling at least one of the head driving system 3 and the stage driving system 42 so that the measurement light MI,#2-2 obliquely enters the measurement target object. Even in this case, the optical path of the returning light RL, which is mainly diffuse reflection light of the measurement light ML, overlaps with the optical path of the measurement light MI,#2-2 between the optical system 522 and the measurement target object as described above.

In a case where the optical path of the returning light RL overlaps with the optical path of the measurement light ML#2-2, the measurement apparatus 5 may include a field stop (typically, a pinhole) at a position optically conjugate with the surface of the measurement target object (a condensed plane of the fθ lens 5228). In this case, the field stop can optically shield the multiple reflection light that occurs when the measurement light ML#2-2 enters one position on the measurement target object and then reflected at another position on the measurement target object, and thereby a measurement error is reduced. Thus, the field stop defines the optical path of the light component (the returning light RL), which propagates along the optical path of the measurement light ML, of the light generated by the irradiation of the measurement light ML. Here, the position that is optically conjugate with the field stop is moved by the Galvano mirror 5227 in a plane intersecting with the optical axis AX of the fθ lens 5228. Therefore, the optical path of the returning light RL from the surface of the measurement target object to the Galvano mirror 5227 is also changed by the drive of the Galvano mirror 5227. Incidentally, an end of an optical fiber that transmits the measurement light MI,#2-2 and the returning light RL may be placed at a position that is optically conjugate with the surface of the measurement target object, instead of the field stop. However, the optical path of the returning light RL may not necessarily overlap with the optical path of the measurement light MI,#2-2 between the optical system 522 and the measurement target object.

The returning light RL that has entered the fθ lens 5228 enters the detector 5226 through the Galvano mirror 5227, the beam splitters 5224 and 52212. Therefore, the detector 5226 may be regarded to optically receive the returning light RL through the fθ lens 5228.

As described above, not only the returning light RL but also the measurement light MI,#1-3 enter the detector 5226. Namely, the returning light RL propagating toward the detector 5226 through the measurement target object and the measurement light ML#1-3 propagating toward the detector 5226 without passing through the measurement target object enter the detector 5226. The detector 5226 detects the measurement light ML#1-3 and the returning light RL. Especially, the detector 5226 detects interfering light generated by an interference between the measurement light ML#1-3 and the returning light RL. Note that an operation for optically receiving the interfering light generated by the interference between the measurement light MI,#1-3 and the returning light RL may be regarded to be equivalent to an operation for optically receiving the measurement light ML#1-3 and the returning light RL. A detected result by the detector 5226 (namely, an optical received result of the interfering light) is outputted to the control apparatus 7 as a part of the measured result by the measurement apparatus 5 through the output interface 53.

The control apparatus 7 acquires the detected result by the detector 5223 and the detected result by the detector 5226 through the output interface 53. The control apparatus 7 generates the measurement data (for example, the measurement data related to at least one of the position and the shape of the measurement target object) based on the detected result by the detector 5223 and the detected result by the detector 5226 (namely, the measured result of the measurement apparatus 5).

Specifically, since the pulse frequency of the measurement light ML#1 is different from the pulse frequency of the measurement light ML#2, a pulse frequency of the measurement light ML#1-1 is different from a pulse frequency of the measurement light MI,#2-1. Therefore, the interfering light generated by the interference between the measurement light ML#1-1 and the measurement light MI,#2-1 is an interfering light in which a pulsed light appears in synchronization with a timing at which the pulsed light of the measurement light ML#1-1 and the pulsed light of the measurement light MI,#2-1 enter the detector 5223 at the same time. Similarly, a pulse frequency of the measurement light MI,#1-3 is different from a pulse frequency of the returning light RL. Therefore, the interfering light generated by the interference between the measurement light MI,# 1-3 and the returning light RL is an interfering light in which a pulsed light appears in synchronization with a timing at which the pulsed light of the measurement light MI,#1-3 and the pulsed light of the returning light RL enter the detector 5226 at the same time. Here, a position (a position along a time axis) of the pulsed light of the interfering light detected by the detector 5226 changes depending on a positional relationship between the measurement head 52 and the measurement target object (namely, substantially, a positional relationship between the processing head 2 and the measurement target object). This is because the interfering light detected by the detector 5226 is the interfering light generated by the interference between the returning light RL propagating toward the detector 5226 through the measurement target object and the measurement light MI,#1-3 propagating toward the detector 5226 without passing through the measurement target object. On the other hand, a position (a position along a time axis) of the pulsed light of the interfering light detected by the detector 5223 does not change depending on the positional relationship between the measurement head 52 and the measurement target object (namely, substantially, the positional relationship between the processing head 2 and the measurement target obj ect). Therefore, it can be said that a difference in time between the pulsed light of the interfering light detected by the detector 5223 and the pulsed light of the interfering light detected by the detector 5226 indirectly indicates the positional relationship between the measurement head 52 and the measurement target object. Specifically, it can be said that the difference in time between the pulsed light of the interfering light detected by the detector 5226 and the pulsed light of the interfering light detected by the detector 5223 indirectly indicates a distance between the processing head 2 and the measurement target object in the direction along the optical path of the measurement light ML (namely, in the direction along the propagating direction of the measurement light ML). Therefore, the control apparatus 7 may calculate the distance between the measurement head 52 and the measurement target object in the direction along the optical path of the measurement light ML (for example, in the Z-axis direction) based on the difference in time between the pulsed light of the interfering light detected by the detector 5226 and the pulsed light of the interfering light detected by the detector 5223. In other words, the control apparatus 7 may calculate a position of the measurement target object in the direction along the optical path of the measurement light ML (for example, in the Z-axis direction). More specifically, the control apparatus 7 may calculate a distance between the measurement head 52 and an irradiated part of the measurement target object that is irradiated with the measurement light MI,#2-2. The control apparatus 7 may calculate a position of the irradiated part in the direction along the optical path of the measurement light ML (for example, in the Z-axis direction). Furthermore, since the irradiation position of the measurement light MI,#2-2 on the measurement target object is determined by driving states of the Galvano mirror 5227, the control apparatus 7 may calculate, based on the driving states of the Galvano mirror 5227, a position of the irradiated part in the direction that intersects with the optical path of the measurement light ML (for example, in at least one of the X-axis direction and the Y-axis direction). As a result, the control apparatus 7 may generate the measurement data indicating the position (for example, the position in a three-dimensional coordinate space) of the irradiated part.

Here, in the present example embodiment, the optical system 522 is attached to the processing head 2. As a result, a positional relationship between the fθ lens 5228 and the detector 5226 of the optical system 522 is fixed regardless of the movement of the processing head 2. Therefore, the measurement error of the measurement apparatus 5 is smaller, compared to a case where the positional relationship between the fθ lens 5228 and the detector 5226 changes due to the movement of the processing head 2. This is because there is a possibility that the position (the position along the time axis) of the pulse light of the interfering light detected by the detector 5226 changes due to the change of the positional relationship between the fθ lens 5228 and the detector 5226 even in a case where the distance between the measurement head 52 and the measurement target object does not change. As a result, there is a possibility that such a technical problem occurs that the distance calculated by the control apparatus 7 based on the detected result by the detector 5226 changes even in a case where the distance between the measurement head 52 and the measurement target object does not change. However, in a case where the positional relationship between the fθ lens 5228 and the detector 5226 is fixed, such a technical problem does not occur. Therefore, the control apparatus 7 can calculate the position of the measurement target object with high accuracy.

Incidentally, the control apparatus 7 that calculates the position of the measurement target object in this manner may be referred to as a position calculation apparatus. A system including the control apparatus 7 and at least one of the fiducial member FM and the measurement apparatus 5 may be referred to as a position calculation system.

The measurement head 52 may irradiate a plurality of parts of the measurement target object with the measurement light MI,#2-2. For example, the Galvano mirror 5227 may change the irradiation position of the measurement light MI,#2-2 on the measurement target object so that the measurement head 52 irradiates the plurality of parts of the measurement target object with the measurement light MI,#2-2. For example, at least one of the processing head 2 and the stage 41 may move so that the measurement head 52 irradiates the plurality of parts of the measurement target object with the measurement light MI,#2-2. In a case where the plurality of parts of the measurement target object are irradiated with the measurement light ML#2-2, the control apparatus 7 may generate the measurement data indicating the positions of the plurality of parts of the measurement target object. As a result, the control apparatus 7 may generate the measurement data indicating the shape of the measurement target object based on the measurement data indicating the positions of the plurality of parts. For example, the control apparatus 7 may generate the measurement data indicating the shape of the measurement target object by calculating, as the shape of the measurement target object, a three-dimensional shape formed by a virtual plane (alternatively, curved plane) connecting the plurality of parts whose positions are calculated.

Here, in a case where the fθ lens 5228 is the telecentric optical system on the measurement target object side, the propagating direction of the measurement light MI,#2-2 emitted from the fθ lens 5228 is parallel to the optical axis AX of the fθ lens 5228 as described above. Therefore, in a case where the plurality of parts of the measurement target object are irradiated with the measurement light MI,#2-2, the propagating direction of the measurement light MI,#2-2 does not change. As a result, even in a case where the plurality of parts of the measurement target object are irradiated with the measurement light MI,#2-2, the control apparatus 7 can appropriately calculate the distance between the measurement head 52 and the measurement target object (namely, the position of the measurement target object) in the direction along the propagating direction of the measurement light ML (namely, along the optical path of the measurement light ML). Incidentally, the control apparatus 7 may determine a telecentric error of the fθ lens 5228 (for example, a variation in a plane of the telecentric error) in advance and reflect the error in the measured result.

In this manner, the measurement apparatus 5 may measure the measurement target object by irradiating the measurement target object with the measurement light ML and detecting the returning light RL from the measurement target object irradiated with the measurement light ML. Especially in the above-described example, the measurement apparatus 5 may measure the measurement target obj ect by detecting the interfering light generated by the interference between the returning light RL and the measurement light ML#1-3 that is the reference light. Therefore, the measurement apparatus 5 may be regarded as an interferometric measurement apparatus. However, the measurement apparatus 5 may not be the interferometric measurement apparatus as long as it is configured to measure the measurement target object. For example, measurement apparatus 5 may be a triangulation type of measurement apparatus. The measurement apparatus 5 may be a stereo-type of measurement apparatus. The measurement apparatus 5 may be a phase-shift-type of measurement apparatus. The measurement apparatus 5 may be a confocal-type of measurement apparatus. The measurement apparatus 5 may be a ToF (Time of Flight)-type of measurement apparatus. The measurement apparatus 5 may be an FMCW (Frequency Modulated Continuous Wave) type of measurement apparatus.

### (2) Movement Error Calculation Operation

Next, the movement error calculation operation performed by the control apparatus 7 will be described.

### (2-1) Overview of Movement Error Calculation Operation

As described above, the movement error calculation operation is an operation for calculating the movement error occurring in the movement of at least one of the processing head 2 and stage 41 based on the measured result by the measurement apparatus 5. Since the measurement apparatus 5 optically receives the interfering light generated by the interference between the measurement light ML and the returning light RL as described above, the movement error calculation operation may be regarded to be an operation for calculating the movement error occurring in the movement of at least one of the processing head 2 and stage 41 based on the detected result of the interfering light generated by the interference between the measurement light ML and the returning light RL. Incidentally, in below-described description, each of the processing head 2 and stage 41, which are target for calculating the movement error, is collectively referred to as an error calculation target object, if necessary. Moreover, each of the head driving system 3 and stage driving system 42, which move the processing head 2 and stage 41, respectively, is collectively referred to as a driving system.

The movement error may include an error corresponding to a difference (namely, a deviation) between an actual moving distance of the error calculation target object and a target value of the moving distance of the error calculation target object in a case where the driving system moves the error calculation target object. Specifically, the movement error may include an error corresponding to a difference (namely, a deviation) between an actual moving distance of the error calculation target object in one movement direction and a target value of the moving distance of the error calculation target object in one movement direction in a case where the driving system moves the error calculation target object along one movement direction. For example, in a case where the driving system moves the error calculation target object so that the error calculation target object moves by one moving distance along only one movement direction, the movement error may include an error corresponding to the difference between the actual moving distance of the error calculation object in one movement direction and the one movement distance.

The movement error may include an error corresponding to an actual moving distance of the error calculation target object in another movement direction different from one movement direction in a case where the driving system moves the error calculation target object along the one movement direction. For example, in a case where the driving system moves the error calculation target object so that the error calculation target object moves along only one movement direction, ideally, the error calculation target object does not move along another movement direction. Therefore, in a case where the error calculation target object that should move in one movement direction actually moves along another movement direction, the movement error of the error calculation target object in another movement direction has occurred. Namely, the movement error corresponding to the moving distance of the error calculation target object in another movement direction has occurred.

Thus, in a case where the error calculation target object moves along one movement direction, there is a possibility that at least one of the movement error in one movement direction and the movement error in another movement direction occur. Therefore, the control apparatus 7 may calculate at least one of the movement error in one movement direction and the movement error in another movement direction that occurs in the movement of the error calculation target object along one movement direction.

In a case where the driving system moves the error calculation target object along the X-axis direction that is a linear direction, the control apparatus 7 may calculate a movement error Ex occurring in the movement of the error calculation target object in a case where the error calculation target object moves along the X-axis direction, as illustrated in FIG. 9 that illustrates one example of the movement error. The movement error Ex may include at least one of a movement error E_{XX} in the X-axis direction, a movement error E_{YX} in the Y-axis direction, a movement error E_{ZX} in the Z-axis direction, a movement error E_{AX} in the rotational direction around the A-axis, a movement error E_{BX} in the rotational direction around the B-axis, and a movement error Ecx in the rotational direction around the C-axis. The movement error Exx may be a difference between an actual moving distance of the error calculation target object in the X-axis direction and a target value of the moving distance of the error calculation target object in the X-axis direction in a case where the driving system moves the error calculation target object along the X-axis direction. The movement error E_{YX} may be an actual moving distance of the error calculation target object in the Y-axis direction in a case where the driving system moves the error calculation target object along the X-axis direction. The movement error Ezx may be an actual moving distance of the error calculation target object in the Z-axis direction in a case where the driving system moves the error calculation target object along the X-axis direction. The movement error E_{AX} may be an actual moving distance (rotational amount) of the error calculation target object in the rotational direction around the A-axis in a case where the driving system moves the error calculation target object along the X-axis direction. The movement error E_{BX} may be an actual moving distance (rotational amount) of the error calculation target object in the rotational direction around the B-axis in a case where the driving system moves the error calculation target object along the X-axis direction. The movement error Ecx may be an actual moving distance (rotational amount) of the error calculation target object in the rotational direction around the C-axis in a case where the driving system moves the error calculation target object along the X-axis direction.

In a case where the driving system moves the error calculation target object along the Y-axis direction that is a linear direction, the control apparatus 7 may calculate a movement error E_{Y} occurring in the movement of the error calculation target object in a case where the error calculation target object moves along the Y-axis direction, as illustrated in FIG. 9. The movement error Ey may include at least one of a movement error E_{XY} in the X-axis direction, a movement error E_{YY} in the Y-axis direction, a movement error E_{ZY} in the Z-axis direction, a movement error E_{AY} in the rotational direction around the A-axis, a movement error E_{BY} in the rotational direction around the B-axis, and a movement error E_{CY} in the rotational direction around the C-axis. The movement error E_{XY} may be an actual moving distance of the error calculation target object in the X-axis direction in a case where the driving system moves the error calculation target object along the Y-axis direction. The movement error E_{YY} may be a difference between an actual moving distance of the error calculation target object in the Y-axis direction and a target value of the moving distance of the error calculation target object in the Y-axis direction in a case where the driving system moves the error calculation target object along the Y-axis direction. The movement error E_{ZY} may be an actual moving distance of the error calculation target object in the Z-axis direction in a case where the driving system moves the error calculation target object along the Y-axis direction. The movement error E_{AY} may be an actual moving distance (rotational amount) of the error calculation target object in the rotational direction around the A-axis in a case where the driving system moves the error calculation target object along the Y-axis direction. The movement error E_{BY} may be an actual moving distance (rotational amount) of the error calculation target object in the rotational direction around the B-axis in a case where the driving system moves the error calculation target object along the Y-axis direction. The movement error E_{CY} may be an actual moving distance (rotational amount) of the error calculation target object in the rotational direction around the C-axis in a case where the driving system moves the error calculation target object along the Y-axis direction.

In a case where the driving system moves the error calculation target object along the Z-axis direction that is a linear direction, the control apparatus 7 may calculate a movement error Ez occurring in the movement of the error calculation target object in a case where the error calculation target object moves along the Z-axis direction, as illustrated in FIG. 9. The movement error Ez may include at least one of a movement error Exz in the X-axis direction, a movement error E_{YZ} in the Y-axis direction, a movement error Ezz in the Z-axis direction, a movement error E_{AZ} in the rotational direction around the A-axis, a movement error E_{BZ} in the rotational direction around the B-axis, and a movement error Ecz in the rotational direction around the C-axis. The movement error Exz may be an actual moving distance of the error calculation target object in the X-axis direction in a case where the driving system moves the error calculation target object along the Z-axis direction. The movement error E_{YZ} may be an actual moving distance of the error calculation target object in the Y-axis direction in a case where the driving system moves the error calculation target object along the Z-axis direction. The movement error Ezz may be a difference between an actual moving distance of the error calculation target object in the Z-axis direction and a target value of the moving distance of the error calculation target object in the Z-axis direction in a case where the driving system moves the error calculation target object along the Z-axis direction. The movement error E_{AZ} may be an actual moving distance (rotational amount) of the error calculation target object in the rotational direction around the A-axis in a case where the driving system moves the error calculation target object along the Z-axis direction. The movement error E_{BZ} may be an actual moving distance (rotational amount) of the error calculation target object in the rotational direction around the B-axis in a case where the driving system moves the error calculation target object along the Z-axis direction. The movement error Ecz may be an actual moving distance (rotational amount) of the error calculation target object in the rotational direction around the C-axis in a case where the driving system moves the error calculation target object along the Z-axis direction.

In a case where the driving system moves (namely, rotates) the error calculation target object along the rotational direction around the A-axis, the control apparatus 7 may calculate a movement error E_{A} occurring in the movement of the error calculation target object in a case where the error calculation target object moves along the rotational direction around the A-axis, as illustrated in FIG. 9. The movement error E_{A} may include at least one of a movement error E_{XA} in the X-axis direction, a movement error E_{YA} in the Y-axis direction, a movement error E_{ZA} in the Z-axis direction, a movement error E_{AA} in the rotational direction around the A-axis, a movement error E_{BA} in the rotational direction around the B-axis, and a movement error E_{CA} in the rotational direction around the C-axis. The movement error E_{XA} may be an actual moving distance of the error calculation target object in the X-axis direction in a case where the driving system moves the error calculation target object along the rotational direction around the A-axis. The movement error E_{YA} may be an actual moving distance of the error calculation target object in the Y-axis direction in a case where the driving system moves the error calculation target object along the rotational direction around the A-axis. The movement error E_{ZA} may be an actual moving distance of the error calculation target object in the Z-axis direction in a case where the driving system moves the error calculation target object along the rotational direction around the A-axis. The movement error E_{AA} may be a difference between an actual moving distance of the error calculation target object in the rotational direction around the A-axis and a target value of the moving distance of the error calculation target object in the rotational direction around the A-axis in a case where the driving system moves the error calculation target object along the rotational direction around the A-axis. The movement error E_{BA} may be an actual moving distance (rotational amount) of the error calculation target object in the rotational direction around the B-axis in a case where the driving system moves the error calculation target object along the rotational direction around the A-axis. The movement error E_{CA} may be an actual moving distance (rotational amount) of the error calculation target object in the rotational direction around the C-axis in a case where the driving system moves the error calculation target object along the rotational direction around the A-axis.

In a case where the driving system moves (namely, rotates) the error calculation target object along the rotational direction around the B-axis, the control apparatus 7 may calculate a movement error E_{B} occurring in the movement of the error calculation target object in a case where the error calculation target object moves along the rotational direction around the B-axis, as illustrated in FIG. 9. The movement error E_{B} may include at least one of a movement error E_{XB} in the X-axis direction, a movement error E_{YB} in the Y-axis direction, a movement error E_{ZB} in the Z-axis direction, a movement error E_{AB} in the rotational direction around the A-axis, a movement error E_{BB} in the rotational direction around the B-axis, and a movement error E_{CB} in the rotational direction around the C-axis. The movement error E_{XB} may be an actual moving distance of the error calculation target object in the X-axis direction in a case where the driving system moves the error calculation target object along the rotational direction around the B-axis. The movement error E_{YB} may be an actual moving distance of the error calculation target object in the Y-axis direction in a case where the driving system moves the error calculation target object along the rotational direction around the B-axis. The movement error E_{ZB} may be an actual moving distance of the error calculation target object in the Z-axis direction in a case where the driving system moves the error calculation target object along the rotational direction around the B-axis. The movement error E_{AB} may be an actual moving distance (rotational amount) of the error calculation target object in the rotational direction around the A-axis in a case where the driving system moves the error calculation target object along the rotational direction around the B-axis. The movement error E_{BB} may be a difference between an actual moving distance of the error calculation target object in the rotational direction around the B-axis and a target value of the moving distance of the error calculation target object in the rotational direction around the B-axis in a case where the driving system moves the error calculation target object along the rotational direction around the B-axis. The movement error E_{CB} may be an actual moving distance (rotational amount) of the error calculation target object in the rotational direction around the C-axis in a case where the driving system moves the error calculation target object along the rotational direction around the B-axis.

In a case where the driving system moves (namely, rotates) the error calculation target object along the rotational direction around the C-axis, the control apparatus 7 may calculate a movement error Ec occurring in the movement of the error calculation target object in a case where the error calculation target object moves along the rotational direction around the C-axis, as illustrated in FIG. 9. The movement error Ec may include at least one of a movement error E_{XC} in the X-axis direction, a movement error E_{YC} in the Y-axis direction, a movement error E_{ZC} in the Z-axis direction, a movement error E_{AC} in the rotational direction around the A-axis, a movement error E_{BC} in the rotational direction around the B-axis, and a movement error Ecc in the rotational direction around the C-axis. The movement error Exc may be an actual moving distance of the error calculation target object in the X-axis direction in a case where the driving system moves the error calculation target object along the rotational direction around the C-axis. The movement error E_{YC} may be an actual moving distance of the error calculation target object in the Y-axis direction in a case where the driving system moves the error calculation target object along the rotational direction around the C-axis. The movement error Ezc may be an actual moving distance of the error calculation target object in the Z-axis direction in a case where the driving system moves the error calculation target object along the rotational direction around the C-axis. The movement error E_{AC} may be an actual moving distance (rotational amount) of the error calculation target object in the rotational direction around the A-axis in a case where the driving system moves the error calculation target object along the rotational direction around the C-axis. The movement error E_{BC} may be an actual moving distance (rotational amount) of the error calculation target object in the rotational direction around the B-axis in a case where the driving system moves the error calculation target object along the rotational direction around the C-axis. The movement error Ecc may be a difference between an actual moving distance of the error calculation target object in the rotational direction around the C-axis and a target value of the moving distance of the error calculation target object in the rotational direction around the C-axis in a case where the driving system moves the error calculation target object along the rotational direction around the C-axis.

Each of the movement error Exx, the movement error E_{YY}, and the movement error Ezz may be referred to as a translation error or a linear positioning deviation. Each of the movement error E_{YX}, the movement error Ezx, the movement error E_{XY}, the movement error E_{ZY}, the movement error E_{XZ}, and the movement error E_{YZ} may be referred to as a translation error or a straightness deviation. Each of the movement error E_{AX}, the movement error E_{AY}, and the movement error E_{AZ} may be referred to as an attitude error or a roll error. Each of the movement error E_{BX}, the movement error E_{BY}, and the movement error E_{BZ} may be referred to as an attitude error or a pitch error. Each of movement error E_{CX}, the movement error E_{CY}, and the movement error Ecz may be referred to as an attitude error or a yaw error. Each of the movement error E_{YA}, the movement error E_{ZA}, the movement error E_{XB}, the movement error E_{ZB}, the movement error E_{XC}, and the movement error E_{YC} may be referred to as a radial direction error. Each of movement error E_{XA}, the movement error E_{YB}, and the movement error Ezc may be referred to as axial direction error. Each of the movement error E_{BA}, the movement error E_{CA}, the movement error E_{AB}, the movement error E_{CB}, the movement error E_{AC}, and the movement error E_{BC} may be referred to as an inclined direction error. Each of the movement error E_{AA}, the movement error E_{BB}, and the movement error Ecc may be referred to as an angular positioning error.

As one example, the head driving system 3 moves the processing head 2 along the X-axis direction as described above. Therefore, the control apparatus 7 may calculate, as the movement error of the processing head 2, the movement error Ex occurring in the movement of the processing head 2 in a case where the processing head 2 moves along the X-axis direction. Namely, the control apparatus 7 may calculate, as the movement error of the processing head 2, at least one of the movement error Exx, the movement error E_{YX}, the movement error Ezx, the movement error E_{AX}, the movement error E_{BX}, and the movement error Ecx.

As another example, the head driving system 3 moves the processing head 2 along the Z-axis direction as described above. Therefore, the control apparatus 7 may calculate, as the movement error of the processing head 2, the movement error Ez occurring in the movement of the processing head 2 in a case where the processing head 2 moves along the Z-axis direction. Namely, the control apparatus 7 may calculate, as the movement error of the processing head 2, at least one of the movement error Exz, the movement error E_{YZ}, the movement error Ezz, the movement error E_{AZ}, the movement error E_{BZ}, and the movement error Ecz.

As another example, the stage driving system 42 moves the stage 41 along the Y-axis direction as described above. Therefore, the control apparatus 7 may calculate, as the movement error of the stage 41, the movement error E_{Y} occurring in the movement of the stage 41 in a case where the stage 41 moves along the Y-axis direction. Namely, the control apparatus 7 may calculate, as the movement error of the stage 41, at least one of the movement error E_{XY}, the movement error E_{YY}, the movement error E_{ZY}, the movement error E_{AY}, the movement error E_{BY}, and the movement error E_{CY}.

As another example, the stage driving system 42 moves the stage 41 along the rotational direction around the A-axis as described above. Therefore, the control apparatus 7 may calculate, as the movement error of the stage 41, the movement error E_{B} occurring in the movement of the stage 41 in a case where the stage 41 moves along the rotational direction around the A-axis. Namely, the control apparatus 7 may calculate, as the movement error of the stage 41, at least one of the movement error E_{XA}, the movement error E_{YA}, the movement error E_{ZA}, the movement error E_{AA}, the movement error E_{BA}, and the movement error E_{CA}.

As another example, the stage driving system 42 moves the stage 41 along the rotational direction around the C-axis as described above. Therefore, the control apparatus 7 may calculate, as the movement error of the stage 41, the movement error Ec occurring in the movement of the stage 41 in a case where the stage 41 moves along the rotational direction around the C-axis. Namely, the control apparatus 7 may calculate, as the movement error of the stage 41, at least one of the movement error Exc, the movement error E_{YC}, the movement error Ezc, the movement error E_{AC}, the movement error Eac, and the movement error Ecc.

In a case where the head driving system 3 moves the processing head 2 along two movement directions, the control apparatus 7 may calculate a movement error related to a relationship between two movement axes that are along the two movement directions, respectively. Similarly, in a case where the stage driving system 42 moves the stage 41 along two movement directions, the control apparatus 7 may calculate a movement error related to an orthogonality between two movement axes that are along the two movement directions, respectively. As one example, in a case where the head driving system 3 moves the processing head 2 along two linear directions and / or the stage driving system 42 moves the stage 42 along two linear directions, the control apparatus 7 may calculate a movement error related to an orthogonality between two movement axes that are along the two linear directions, respectively. For example, the control apparatus 7 may calculate a movement error related to an orthogonality between at least two of the movement axis along the X-axis, the movement axis along the Y-axis, and the movement axis along the Z-axis. As another example, in a case where the head driving system 3 moves (rotates) the processing head 2 along two rotational directions and / or the stage driving system 42 moves (rotates) the stage 42 along two rotational directions, the control apparatus 7 may calculate a movement error related to an orthogonality between two rotational axes that define the two rotational directions, respectively. For example, the control apparatus 7 may calculate a movement error related to an orthogonality between at least two of the rotation axis around the A-axis, the rotational axis around the B-axis, and the rotational axis around the C-axis. As another example, in a case where the head driving system 3 moves (rotates) the processing head 2 along one linear direction and one rotational direction and / or the stage driving system 42 moves (rotates) the stage 42 along one linear direction and one rotational direction, the control apparatus 7 may calculate a movement error related to an orthogonality between one movement axis along the one linear direction and one rotational axis defining the one rotational direction. For example, the control apparatus 7 may calculate a movement error related to an orthogonality between the movement axis along the X-axis and at least one of the rotational axis around the B-axis and the rotational axis around the C-axis. For example, the control apparatus 7 may calculate a movement error related to an orthogonality between the movement axis along the Y-axis and at least one of the rotational axis around the A-axis and the rotational axis around the C-axis. For example, the control apparatus 7 may calculate a movement error related to an orthogonality between the movement axis along the Z-axis and at least one of the rotational axis around the A-axis and the rotational axis around the B-axis. As another example, in a case where the head driving system 3 moves (rotates) the processing head 2 along one linear direction and one rotational direction and / or the stage driving system 42 moves (rotates) the stage 42 along one linear direction and one rotational direction, the control apparatus 7 may calculate a movement error related to a parallelism between one movement axis along the one linear direction and one rotational axis defining the one rotational direction. For example, the control apparatus 7 may calculate a movement error related to a parallelism between the movement axis along the X-axis and the rotational axis around the A-axis. For example, the control apparatus 7 may calculate a movement error related to a parallelism between the movement axis along the Y-axis and the rotational axis around the B-axis. For example, the control apparatus 7 may calculate a movement error related to a parallelism between the movement axis along the Z-axis and the rotational axis around the C-axis.

In the present example embodiment, in order to calculate the movement error, the fiducial member FM, which is different from the workpiece W to be processed by the processing head 2, is placed on the stage 41, and the measurement apparatus 5 measures at least a part of the fiducial member FM placed on the stage 41, as illustrated in FIG. 10. Namely, the measurement apparatus 5 irradiates at least a part of the fiducial member FM with the measurement light ML and detects the returning light RL from at least a part of the fiducial member FM. Then, the control apparatus 7 calculates the position of at least a part of the fiducial member FM based on the measured result by the measurement apparatus 5 (namely, the detected result of the interfering light generated by the interference between the measurement light ML and the returning light RL). Then, the control apparatus 7 calculates the movement error based on a calculated result of the position of at least a part of the fiducial member FM. Incidentally, a specific example of an operation for calculating the movement error based on the calculated result of the position of at least a part of the fiducial member FM will be described in detail later.

The measurement apparatus 5 may measure at least a part of a surface of the fiducial member FM that is irradiated with the measurement light ML (in the below-described description, it is referred to as a "fiducial surface FMS"). Namely, the measurement apparatus 5 may irradiate at least a part of the fiducial surface FMS with the measurement light ML and detect the returning light RL from at least a part of the fiducial surface FMS. Then, the control apparatus 7 may calculate the position of at least a part of the fiducial surface FMS based on the measured result by the measurement apparatus 5 (namely, the detected result of the interfering light generated by the interference between the measurement light ML and the returning light RL). Then, the control apparatus 7 may calculate the movement error based on the calculated result of the position of at least a part of the fiducial surface FMS.

The measurement head 52 may change the irradiation position of the measurement light ML on the fiducial member FM by using the Galvano mirror 5227. Namely, the measurement head 52 may irradiate a plurality of different measurement target areas of the fiducial member FM with the measurement light ML. An example illustrated in FIG. 10 illustrates an example in which the measurement head 52 irradiates one measurement target area P1 and another measurement target area P2 that are different from each other with the measurement light ML. In this case, the measurement light ML that propagates from the Galvano mirror 5227 in one propagating direction TD1 and enters the fθ lens 5228 may propagate along one optical path OP1 and the one measurement target area P1 of the fiducial member FM (namely, one position of the fiducial member FM) may be irradiated with it. Furthermore, the light component, which propagates along the one optical path OP1, of the light from the one measurement target area P1 generated by the measurement light ML with which the one measurement target area P1 is irradiated enters the measurement head 52 (especially, the detector 5226 thereof) as the returning light RL. On the other hand, the measurement light ML that propagates from the Galvano mirror 5227 in another propagating direction TD2 different from the one propagating direction TD1 and enters the fθ lens 5228 may propagate along another optical path OP2 different from the one optical path OP1 and the another measurement target area P2 of the fiducial member FM (namely, another position of the fiducial member FM) may be irradiated with it. Furthermore, the light component, which propagates along the another optical path OP2, of the light from the another measurement target area P2 generated by the measurement light ML with which the another measurement target area P2 is irradiated enters the measurement head 52 (especially, the detector 5226 thereof) as the returning light RL. Then, the control apparatus 7 may calculate the positions of the plurality of measurement target areas (for example, the measurement target areas P1 and P2) based on the measured result by the measurement apparatus 5. Then, the control apparatus 7 may calculate the movement error based on the calculated result of the positions of the plurality of measurement target areas.

Each of the processing head 2 and the stage 41 may be stopped in a period during which the Galvano mirror 5227 changes the irradiation position of the measurement light ML on the fiducial member FM. Namely, the head driving system 3 may not move the processing head 2 and the stage driving system 42 may not move the stage 41. Since the measurement head 52 is attached to the processing head 2, the measurement head 52 may also be stopped in the period during which the Galvano mirror 5227 changes the irradiation position of the measurement light ML on the fiducial member FM. In this case, a position of the measurement head 52 (especially, the fθ lens 5228) in a case where one position of the fiducial member FM is irradiated with the measurement light ML from the fθ lens 5228 may be the same as a position of the measurement head 52 (especially, the fθ lens 5228) in a case where another position of the fiducial member FM is irradiated with the measurement light ML from the fθ lens 5228. Namely, the measurement head 52 (especially, the fθ lens 5228) may be located at a third position in a case where a first position of the fiducial member FM is irradiated with the measurement light ML from the fθ lens 5228, and the measurement head 52 (especially, the fθ lens 5228 ) may still be located at the same third position in a case where a second position of the fiducial member FM is irradiated with the measurement light ML from the fθ lens 5228. In this case, it is possible to reduce a measurement error caused due to the movement of at least one of the processing head 2 and stage 41 in the period during which the Galvano mirror 5227 changes the irradiation position of the measurement light ML on the fiducial member FM.

In order to calculate the movement error occurring in the movement of the processing head 2 or the stage 41 in a case where the processing head 2 or the stage 41 moves along one movement direction, the driving system may move the processing head 2 or the stage 41 in the one movement direction. Namely, the driving system may change a positional relationship between the processing head 2 and the stage 41 in the one movement direction by moving the processing head 2 or the stage 41 in the one movement direction. The measurement apparatus 5 may measure the fiducial member FM before the processing head 2 or the stage 41 moves in the one movement direction and may measure the fiducial member FM after the processing head 2 or the stage 41 moves in the one movement direction. Namely, the measurement apparatus 5 may measure the fiducial member FM before the positional relationship between the processing head 2 and the stage 41 in the one movement direction is changed, and may measure the fiducial member FM after the positional relationship between the processing head 2 and the stage 41 in the one movement direction is changed. Even in this case, the processing head 2 and the stage 41 may be stopped in the period during which the measurement apparatus 5 measures the fiducial member FM. Namely, the measurement apparatus 5 may measure the fiducial member FM in a state where the processing head 2 and stage 41 are stopped.

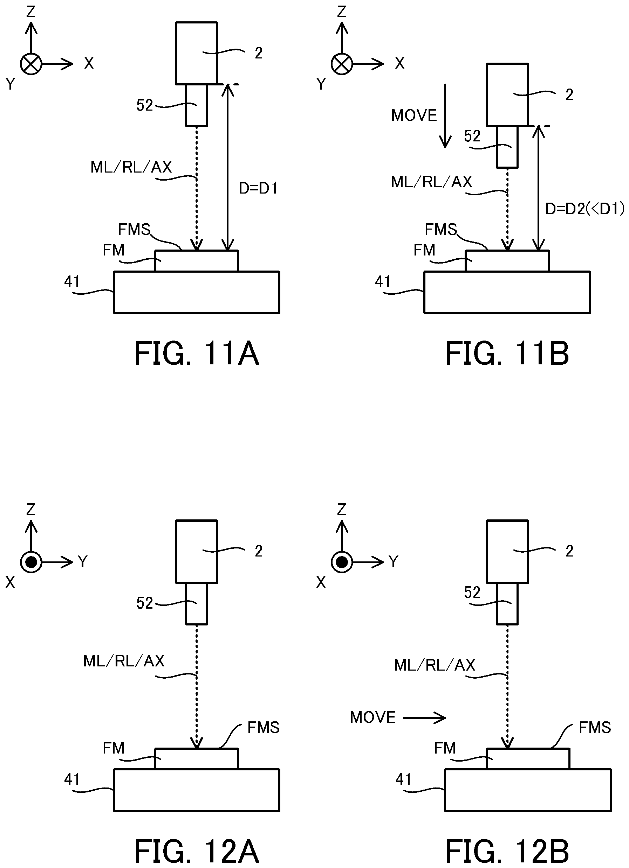

As one example, in order to calculate the movement error Ez occurring in the movement of the processing head 2 in a case where the processing head 2 moves along the Z-axis direction, the head driving system 3 may move the processing head 2 along the Z-axis direction. Namely, the head driving system 3 may change the positional relationship between the processing head 2 and the stage 41 in the Z-axis direction by moving the processing head 2 along the Z-axis direction. For example, the head driving system 3 may change the positional relationship between the processing head 2 and the stage 41 in the Z-axis direction from a relationship illustrated in FIG. 11A to a second relationship illustrated in FIG. 11B. FIG. 11A illustrates an example in which a distance between the processing head 2 and the stage 41 in the Z-axis direction is a distance D1. FIG. 11B illustrates an example in which the distance between the processing head 2 and the stage 41 in the Z-axis direction is a distance D2 that is different from the distance D1. In this case, the measurement apparatus 5 may measure the fiducial member FM in the state illustrated in FIG. 11A and may measure the fiducial member FM in the state illustrated in FIG. 11B. Specifically, the measurement apparatus 5 may irradiate the fiducial member FM with the measurement light M and may optically receive the returning light RL from the fiducial member FM in the state illustrated in FIG. 11A. Similarly, the measurement apparatus 5 may irradiate the fiducial member FM with the measurement light M and may optically receive the returning light RL from the fiducial member FM in the state illustrated in FIG. 11B.

As another example, in order to calculate the movement error E_{Y} occurring in the movement of the stage 41 in a case where the stage 41 moves along the Y-axis direction, the stage driving system 41 may move the stage 41 along the Y-axis direction. Namely, the stage driving system 42 may change the positional relationship between the processing head 2 and the stage 41 in the Y-axis direction by moving the stage 41 along the Y-axis direction. For example, the head driving system 3 may change the positional relationship between the processing head 2 and the stage 41 in the Y-axis direction from a relationship illustrated in FIG. 12A to a relationship illustrated in FIG. 12B. In this case, the measurement apparatus 5 may measure the fiducial member FM in the state illustrated in FIG. 12A and may measure the fiducial member FM in the state illustrated in FIG. 12B. Specifically, the measurement apparatus 5 may irradiate the fiducial member FM with the measurement light M and may optically receive the returning light RL from the fiducial member FM in the state illustrated in FIG. 12A. Similarly, the measurement apparatus 5 may irradiate the fiducial member FM with the measurement light M and may optically receive the returning light RL from the fiducial member FM in the state illustrated in FIG. 12B.

Incidentally, in FIG. 11A and FIG. 11B, the processing head 2 moves along the Z-axis direction that is the direction along the optical path of the measurement light ML emitted from the measurement head 52 (namely, emitted from the fθ lens 5228). Namely, the processing head 2 moves along the Z-axis direction that is the direction along which the optical axis AX of the fθ lens 5228 extends. On the other hand, in FIG. 12A and FIG. 12B, the stage 41 moves along the Y-axis direction that is the direction intersecting with the optical path of the measurement light ML emitted from the measurement head 52 (namely, emitted from the fθ lens 5228). Namely, the stage 41 moves along the Y-axis direction that is the direction intersecting with the direction along which the optical axis AX of the fθ lens 5228 extends. Thus, the processing head 2 or the stage 41 may move along the direction along the optical path of the measurement light ML, or may move along the direction intersecting with the optical path of the measurement light ML. Namely, the processing head 2 or the stage 41 may move along the direction along which the optical axis AX of the fθ lens 5228 extends, or may move along the direction intersecting with the direction along which the optical axis AX of the fθ lens 5228 extends.

Moreover, In FIG. 11A and FIG. 11B, the optical path of the measurement light ML and the returning light RL in the state illustrated in FIG. 11A is at least partially different from the optical path of the measurement light ML and the returning light RL in the state illustrated in FIG. 11B. Specifically, a length of the optical path of measurement light ML and the returning light RL in the state illustrated in FIG. 11A is different from a length of the optical path of the measurement light ML and the returning light RL in the state illustrated in FIG. 11B. On the other hand, in FIG. 12A and FIG. 12B, the optical path of the measurement light ML and the returning light RL in the state illustrated in FIG. 12A is the same as the optical path of the measurement light ML and the returning light RL in the state illustrated in FIG. 12B. Thus, the optical path of the measurement light ML and the returning light RL before the processing head 2 or the stage 41 moves may be the same as or different from the optical path of the measurement light ML and the returning light RL after the processing head 2 or stage 41 moves. As one example, in a case where the processing head 2 or the stage 41 moves along the optical path of the measurement light ML, the optical path of the measurement light ML and the returning light RL before the processing head 2 moves may be different from the optical path of the measurement light ML and the returning light RL after the processing head 2 moves. This is because the length of the optical path of the measurement light ML and the returning light RL change as the processing head 2 or the stage 41 moves. As another example, in a case where the processing head 2 moves along a direction intersecting with the optical path of the measurement light ML, the optical path of the measurement light ML and the returning light RL before the processing head 2 moves may be different from the optical path of the measurement light ML and the returning light RL after the processing head 2 moves. As another example, in a case where the stage 41 moves along the direction intersecting with the optical path of the measurement light ML, the optical path of the measurement light ML and the returning light RL before the stage 41 moves may be the same as the optical path of the measurement light ML and the returning light RL after the stage 41 moves However, in a case where a below-described fiducial member FM2 or FM3 is used as the fiducial member FM, the optical path of the measurement light ML and the returning light RL before the stage 41 moves may be different from the optical path of measurement light ML even in a case where the stage 41 moves along the direction intersecting with the optical path of the measurement light ML.

As described above, the control apparatus 7 calculates the distance between the measurement head 52 and the measurement target object (namely, the position of the measurement target object) in the direction along the optical path of the measurement light ML based on the measured result by the measurement apparatus 5. In this case, the processing head 2 or the stage 41 may move so that the distance between the processing head 2 and the stage 41 (namely, the distance between the measurement head 52 and the fiducial member FM) in the direction along the optical path of the measurement light ML changes due to the movement of the processing head 2 or the stage 41. Especially, in a case where the processing head 2 or the stage 41 moves in the X-axis direction, the Y-axis direction or the Z-axis direction, the processing head 2 or the stage 41 may move so that the distance between the measurement head 52 and the fiducial member FM in the direction along the optical path of the measurement light ML changes due to the movement of the processing head 2 or the stage 41. In this case, the control apparatus 7 can appropriately calculate a variation of the distance between the measurement head 52 and the fiducial member FM due to the movement of the processing head 2 or the stage 41. As a result, the control apparatus 7 can appropriately calculate the measurement error that corresponds to the difference between the actual moving distance of the processing head 2 or the stage 41 and the target value of the moving distance of the processing head 2 or the stage 41 (for example, the movement error E_{XX}, the movement error E_{YY}, and the movement error E_{XX} that may be referred to as a linear positioning error).

For example, in the example illustrated in FIG. 11A and FIG. 11B, the distance between the measurement head 52 and the fiducial member FM in the Z-axis direction, which is the direction along the optical path of the measurement light ML, changes due to the movement of the processing head 2 in the Z-axis direction. Therefore, in the example illustrated in FIG. 11A and FIG. 11B, it can be said that the processing head 2 moves so that the distance between the measurement head 52 and the fiducial member FM in the Z-axis direction, which is the direction along the optical path of the measurement light ML, changes due to the movement of the processing head 2 in the Z-axis direction.

On the other hand, in the example illustrated in FIG. 12A and FIG. 12B, the distance between the measurement head 52 and the fiducial member FM along the Z-axis direction, which is the direction along the optical path of the measurement light ML, does not change due to the movement of the stage 41 in the Y-axis direction. Therefore, in the example illustrated in FIG. 12A and FIG. 12B, it cannot be said that the stage 41 moves so that the distance between the measurement head 52 and the fiducial member FM along the Z-axis direction, which is the direction along the optical path of the measurement light ML, changes due to the movement of the stage 41 in the Y-axis direction. Therefore, in this case, the propagating direction of the measurement light ML may be changed so that the distance between the measurement head 52 and the fiducial member FM along the optical path of the measurement light ML changes due to the movement of the processing head 2 or the stage 41.

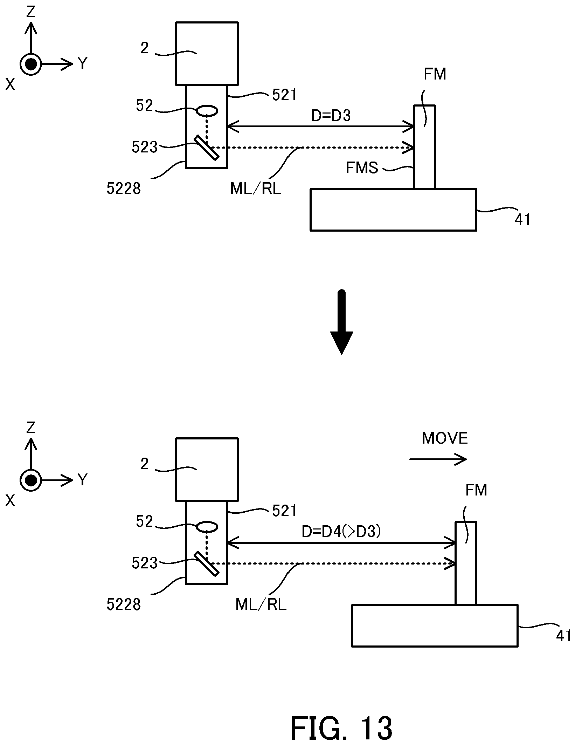

As one example, as illustrated in FIG. 13, the measurement head 52 may change the propagating direction of the measurement light ML by using a deflection member 523 that deflects the measurement light ML emitted from the fθ lens 5228 toward the fiducial member FM. The deflection member 523 may be a mirror, for example. In this case, the measurement light ML emitted from the measurement head 52 propagates along the Y-axis direction that is the movement direction of the stage 41. Namely, the deflection member 523 deflects the measurement light ML so that the propagating direction of the measurement light ML is the same as or parallel to a direction in which the movement error is measured (the Y-axis direction). As a result, the stage 41 is movable so that the distance between the measurement head 52 and the fiducial member FM in the Y-axis direction, which is the propagating direction of the measurement light ML, changes due to the movement of the stage 41 in the Y-axis direction. In an example illustrated in FIG. 13, the distance between the measurement head 52 and the fiducial member FM in the Y-axis direction changes from a distance D3 to a distance D4 due to the movement of the stage 41 in the Y-axis direction. Incidentally, in the example illustrated in FIG. 13, the measurement head 52 includes the deflection member 523. Namely, the deflection member 523 is contained in the head housing 521. However, the deflection member 523 may be disposed outside the head housing 521.

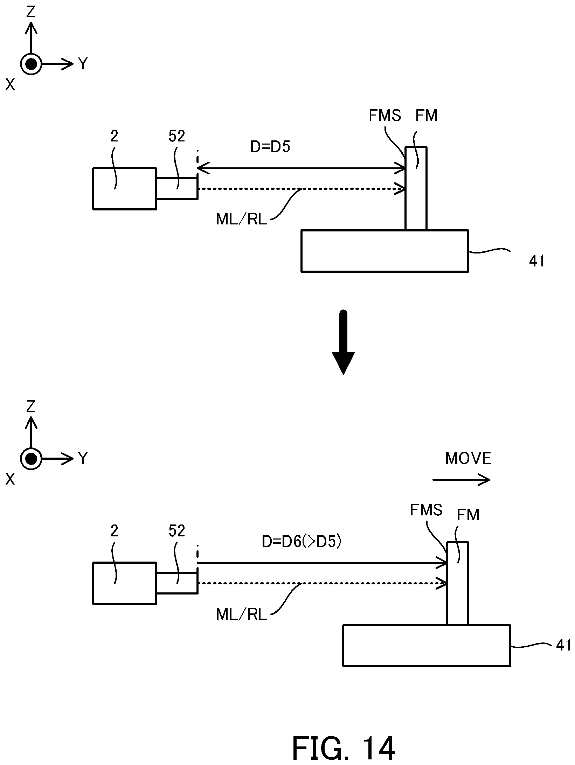

As another example, in a case where at least one of the processing head 2 and the stage 41 is rotatable around the rotational axis, the propagating direction of the measurement light ML may be changed by rotating at least one of the processing head 2 and the stage 41 around the rotational axis as illustrated in FIG. 14. FIG. 14 illustrates an example in which the propagating direction of the measurement light ML is changed to be the Y-axis direction that is the movement direction of the stage 41 by rotating the processing head 2 in the rotational direction around the X-axis (namely, the rotational direction around the A-axis). Namely, the direction of the processing head 2 is set so that the propagating direction of the measurement light ML is the same as or parallel to the direction in which the movement error is measured ( the Y-axis direction). In this case, the stage 41 is movable so that the distance between the measurement head 52 and the fiducial member FM in the Y-axis direction that is the propagating direction of the measurement light ML changes due to the movement of the stage 41 in the Y-axis direction. In the example illustrated in FIG. 14, the distance between the measurement head 52 and the fiducial member FM in the Y-axis direction changes from a distance D5 to a distance D6 due to the movement of the stage 41 in the Y-axis direction.

In a case where the propagating direction of the measurement light ML is changed, an orientation of the fiducial member FM placed on the stage 41 may also be changed in accordance with the propagating direction of the measurement light ML. Specifically, the orientation of the fiducial member FM placed on the stage 41 may be changed so that fiducial surface FMS of the fiducial member FM is irradiated with the measurement light ML whose propagating direction has been changed. Typically, the orientation of the fiducial member FM placed on the stage 41 may be changed so that the fiducial surface FMS becomes a surface that intersects with the propagating direction of the measurement light ML. In the examples illustrated in FIG. 13 and FIG. 14, the orientation of the fiducial member FM placed on the stage 41 is changed so that the fiducial surface FMS becomes a surface that intersects with the Y-axis direction (for example, a surface along the XZ plane) that is the propagating direction of the measurement light ML. Incidentally, the fiducial member FM is not limited to a flat-plate-shaped member, but may be a solid-shaped member. In this case, a fiducial member having a plurality of surfaces whose normal lines are directed along predetermined directions that are different from each other may be used. In this case, each of the plurality of surfaces may be used as the fiducial surface FMS. For example, in a case where the solid-shaped fiducial member is used, the measurement apparatus 5 may perform the measurement method illustrated in FIG. 11 to FIG. 12 by using a top surface of the fiducial member as one fiducial surface FMS, and may perform the measurement method illustrated in FIG. 13 to FIG. 14 by using a side surface of the fiducial member as another fiducial surface FMS.

Incidentally, although a detailed description is omitted to avoid a redundant description, the same is true in a case where the processing head 2 or the stage 41 moves along the movement direction that is different from the Y-axis direction and the Z-axis direction. Specifically, in order to calculate the movement error Ex occurring in the movement of the processing head 2 in a case where the processing head 2 moves along the X-axis direction, the head driving system 3 may move the processing head 2 along the X-axis direction, and the measurement apparatus 5 may measure the fiducial member FM both before and after the processing head 2 moves in the X-axis direction. In order to calculate the movement error E_{A} occurring in the movement of the stage 41 in a case where the stage 41 moves along the rotational direction around the A-axis, the stage driving system 42 may move the stage 41 along the rotational direction around the A-axis, and the measurement apparatus 5 may measure the fiducial member FM both before and after the stage 41 moves in the rotational direction around the A-axis. In order to calculate the movement error Ec occurring in the movement of the stage 41 in a case where the stage 41 moves along the rotational direction around the C-axis, the stage driving system 42 may move the stage 41 along the rotational direction around the C-axis, and the measurement apparatus 5 may measure the fiducial member FM both before and after the stage 41 moves in the rotational direction around the C-axis. Note that the movement direction of the processing head 2 or the stage 41 is not limited to the X-axis direction, the Y-axis direction, and the Z-axis direction. For example, the movement direction of the processing head 2 or the stage 41 may be set along an axis along which at least two of a coordinate value in the X-axis direction, a coordinate value in the Y-axis direction, and a coordinate value in the Z-axis direction change simultaneously (typically, an axis along a diagonal line connecting vertices of a virtual cube in the XYZ coordinate system). In the example illustrated in FIG. 13, the propagating direction of the measurement light ML may be set to be the same as or parallel to the movement direction of the processing head 2 or the stage 41 by adjusting the angle of the deflection member 523, and in the example illustrated in FIG. 14, the propagating direction of the measurement light ML may be set to be the same as or parallel to the movement direction of the processing head 2 or the stage 41 by adjusting the angle of the fiducial member FM.

Then, the control apparatus 7 may calculate, based on the measured result by the measurement apparatus 5, the position of the fiducial member FM before the processing head 2 or the stage 41 moves and the position of the fiducial member FM after the processing head 2 or the stage 41 moves. Then, the control apparatus 7 may calculate the movement error based on the calculated positions of the fiducial member FM. For example, in the example illustrated in FIG. 11A and FIG. 11B, the processing head 2 moves along the Z-axis direction in order to calculate the movement error Ez. In this case, the control apparatus 7 calculates the distance from the measurement head 52 to the fiducial member FM along the Z-axis direction (namely, the Z position of the fiducial member FM) before the processing head 2 moves, based on the detected result of the returning light RL from the fiducial member FM before the processing head 2 moves. Furthermore, the control apparatus 7 calculates the distance from the measurement head 52 to the fiducial member FM along the Z-axis direction (namely, the Z position of the fiducial member FM) after the processing head 2 moves, based on the detected result of the returning light RL from the fiducial member FM after the processing head 2 moves. Here, in a case where the movement error Ez (especially, the movement error Ezz) does not occur, a difference between the Z position of the fiducial member FM before the processing head 2 moves and the Z position of the fiducial member FM after the processing head 2 moves should be equal to the target value of the moving distance of the processing head 2 in the Z-axis direction. On the other hand, in a case where the movement error Ez (especially, the movement error Ezz) occurs, the difference between the Z position of the fiducial member FM before the processing head 2 moves and the Z position of the fiducial member FM after the processing head 2 moves is not equal to the target value of the moving distance of the processing head 2 in the Z-axis direction. Therefore, the control apparatus 7 may calculate the movement error Ez (especially, the movement error Ezz) based on the positions of the fiducial member FM. Regarding the other movement errors other than the movement error Ezz (namely, at least one of movement error Exz, the movement error E_{YZ}, the movement error E_{AZ}, the movement error E_{BZ}, and the movement error Ecz), information related to the movement error is included in the measured result by the measurement apparatus 5. Therefore, the control apparatus 7 may calculate the movement error E_{ZZ} (namely, at least one of movement error E_{XZ}, the movement error E_{YZ}, the movement error E_{AZ}, the movement error E_{BZ}, and the movement error Ecz) based on the measured result by the measurement apparatus 5. Similarly, even in a case where the processing head 2 or the stage 41 moves in the direction different from the Z-axis direction, the control apparatus 7 may calculate the movement error (for example, at least one of movement error E_{X}, the movement error E_{Y}, the movement error E_{A}, the movement error E_{B}, and the movement error Ec) and the orthogonality between the XYZ axes.

After the movement error is calculated, the control apparatus 7 may control the operation of the machine tool 1 based on the calculated movement error. For example, the control apparatus 7 may control at least one of the head driving system 3 and the stage driving system 42 based on the calculated movement error so that at least one of the processing head 2 and the stage 41 moves in the manner as with a case where the movement error does not occur even in a case where the movement error occurs.

For example, the control apparatus 7 may calibrate (in other words, modify or correct) movement control information, which is used to control the movement of at least one of the processing head 2 and the stage 41, based on the movement error. For example, the control apparatus 7 may calibrate the movement control information based on the movement error so that at least one of the processing head 2 and the stage 41 moves in the manner as with a case where the movement error does not occur even in a case where the movement error occurs. In this case, the control apparatus 7 may control the movement of at least one of the processing head 2 and the stage 41 based on the calibrated movement control information. Note that calibrating the movement control information may include modifying the movement control information so that the movement error after calibration is smaller than the movement error before calibration.

One example of the movement control information is movement path information (for example, processing path information) that indicates a movement path of at least one of the processing head 2 and the stage 41 in a fiducial coordinate system. The control apparatus 7 usually uses the movement path information to control at least one of the head driving system 3 and the stage driving system 42 so that at least one of the processing head 2 and the stage 41 moves along the movement path indicated by the movement path information. The movement path information may include coordinate information indicating the movement path as a coordinate (for example, information indicating the coordinates of each position of the movement path). The movement path information may include vector information indicating the movement path as a vector (for example, information indicating the movement direction and the moving distance at each position of the movement path). In this case, the control apparatus 7 may calibrate the movement path information based on the movement error. For example, the control apparatus 7 may calibrate the movement path information based on the movement error so that at least one of the processing head 2 and the stage 41 moves in the manner as with a case where the movement error does not occur even in a case where the movement error occurs. In this case, the control apparatus 7 may control at least one of head driving system 3 and stage driving system 42 based on the calibrated movement path information.

In addition to or instead of calibrating the movement path information based on the movement error, the control apparatus 7 may calculate a calibration amount (in other words, a correction amount or a compensation amount) of the movement path information based on the movement error. For example, the control apparatus 7 may calculate the calibration amount to calibrate the movement path information so that at least one of the processing head 2 and the stage 41 moves in the manner as with a case where the movement error does not occur even in a case where the movement error occurs. In this case, the control apparatus 7 may calibrate the movement path information based on the calculated calibration amount and control at least one of the head driving system 3 and the stage driving system 42 based on the calibrated movement path information.

Another example of the movement control information is a drive command signal for operating at least one of the head driving system 3 and the stage driving system 42. The drive command signal may include a signal for driving a motor of at least one of the head driving system 2 and the stage driving system 42, for example. In a case where the motor is a stepping motor, the drive command signal may include a signal for designating the number of steps (pulses). In this case, the control apparatus 7 may calibrate the drive command signal, which is generated based on the movement path information, based on the movement error. For example, the control apparatus 7 may calibrate the drive command signal, which is generated based on the movement path information, based on the movement error so that at least one of the processing head 2 and the stage 41 moves in the manner as with a case where the movement error does not occur even in a case where the movement error occurs. In this case, the control apparatus 7 may output the calibrated drive command signal to at least one of the head driving system 3 and the stage driving system 42. Alternatively, the control apparatus 7 may generate the drive command signal based on the movement error and the movement path information, instead of calibrating the drive command signal, which is generated based on the movement path information, based on the movement error. Namely, the control apparatus 7 may generate the calibrated drive command signal based on the movement error and the movement path information.

As another example, the control apparatus 7 may calculate a calibration amount of the drive command signal based on the movement error, in addition to or instead of calibrating the drive command signal based on the movement error. For example, the control apparatus 7 may calculate the calibration amount to calibrate the drive command signal so that at least one of the processing head 2 and the stage 41 moves in the manner as with a case where the movement error does not occur even in a case where the movement error occurs. In this case, the control apparatus 7 may calibrate the drive command signal based on the calculated calibration amount and output the calibrated drive command signal to at least one of head driving system 3 and stage driving system 42.

The control apparatus 7 may output the calculated movement error by using output apparatus 8. For example, the control apparatus 7 may display an image indicating the calculated movement error by using the output apparatus 8 including the display apparatus. For example, the control apparatus 7 may output an audio indicating the calculated movement error by using the output apparatus 8 including the audio output apparatus. For example, control apparatus 7 may output a paper on which the calculated movement error is printed by using the output apparatus 8 including the printing apparatus. For example, the control apparatus 7 may output data indicating the calculated movement error to a recording medium by using the output apparatus 8. For example, control apparatus 7 may output (namely, transmit) data indicating the calculated movement error to an external apparatus by using the output apparatus 8 that is configured to serve as the communication apparatus. In this case, the operator who confirms the movement error outputted by the output apparatus 8 may control the machine tool 1 based on the movement error. An external apparatus that acquires the movement error outputted by the output apparatus 8 may control the machine tool 1 based on the movement error. Note that the control apparatus 7 may output at least one of the calibrated movement control information and the calibration amount of the movement control information by using the output apparatus 8 in addition to the calculated movement error.

The control apparatus 7 may output the measurement data indicating the position of the fiducial member FM calculated to calculate the movement error by using the output apparatus 8. For example, the control apparatus 7 may display an image indicating the calculated position of the fiducial member FM by using the output apparatus 8 including the display apparatus. For example, the control apparatus 7 may output an audio indicating the calculated position of the fiducial member FM by using the output apparatus 8 including the audio output apparatus. For example, control apparatus 7 may output a paper on which the calculated position of the fiducial member FM is printed by using the output apparatus 8 including the printing apparatus. For example, the control apparatus 7 may output data indicating the calculated position of the fiducial member FM to a recording medium by using the output apparatus 8. For example, control apparatus 7 may output (namely, transmit) data indicating the calculated position of the fiducial member FM to an external apparatus by using the output apparatus 8 that is configured to serve as the communication apparatus. In this case, in this case, the operator who confirms the position of the fiducial member FM outputted by the output apparatus 8 may control the machine tool 1 based on the position of the fiducial member FM. An external apparatus that acquires the position of the fiducial member FM outputted by the output apparatus 8 may control the machine tool 1 based on the position of the fiducial member FM.

### (2-2) Specific Example of Movement Error Calculation Operation

Next, a specific example of the movement error calculation operation will be described. In the present example embodiment, the control apparatus 7 may perform at least one of a movement error calculation operation using a first fiducial member FM (in the below-described description, it is referred to as a "fiducial member FM1"), a movement error calculation operation using a second fiducial member FM (in the below-described description, it is referred to as a "fiducial member FM2"), and a movement error calculation operation using a third fiducial member FM (in the below-described description, it is referred to as a "fiducial member FM2"). Thus, in the below-described description, the movement error calculation operation using the fiducial member FM1, the movement error calculation operation using the fiducial member FM2, and the movement error calculation operation using the fiducial member FM3 will be described in sequence.

Incidentally, in the below-described description, the movement error calculation operation that calculates the movement error Ez by using the fiducial member FM1, FM2, or FM3 will be described. However, control apparatus 7 may perform an operation that is the same as operation for calculating the movement error Ez even in a case where at least one of the movement error E_{X}, the movement error E_{Y}, the movement error E_{A}, the movement error E_{B}, and the movement error Ec is calculated. As a result, the control apparatus 7 may calculate at least one of the movement error E_{X}, the movement error E_{Y}, the movement error E_{A}, the movement error E_{B}, and the movement error Ec by performing the operations that is the same as the operation for calculating the movement error EZ described below.

### (2-2-1) Movement Error Calculation Operation using Fiducial Member FM1

Firstly, the movement error calculation operation using the fiducial member FM1 will be described.

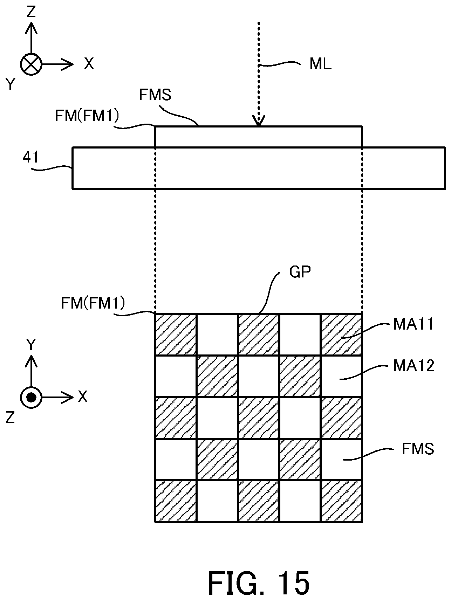

One example of the fiducial member FM1 is illustrated in FIG. 15. As illustrated in FIG. 15, the fiducial member FM1 is a member with a predetermined-shaped grid pattern GP formed on the fiducial surface FMS. Specifically, a plurality of fiducial areas MA11 and a plurality of fiducial areas MA12 are formed on the fiducial surface FMS of the fiducial member FM1. The plurality of fiducial areas MA11 and the plurality of fiducial areas MA12 are arranged to form the predetermined-shaped grid pattern GP. In an example illustrated in FIG. 15, the plurality of fiducial areas MA11 and the plurality of fiducial areas MA12 are arranged so that the fiducial area MA11 and the fiducial area MA12 are alternately aligned along each of two directions that are along the fiducial surface FMS and that are orthogonal to each other (for example, each of the X-axis direction and the Y-axis direction).

Incidentally, the plurality of fiducial areas MA11 and the plurality of fiducial areas MA12 in the grid pattern GP are not limited to those arranged in a checkerboard grid pattern on a plane. At least one of the plurality of fiducial areas MA11 and at least one of the plurality of fiducial areas MA12 may be disposed on different planes. Moreover, the plurality of fiducial areas MA11 and the plurality of fiducial areas MA12 may be arranged along two directions that are not orthogonal to each other, or may be arranged so that they do not aligned alternately.

The fiducial area MA11 and the fiducial area MA12 may be areas whose predetermined characteristics are different from each other. The predetermined characteristic may be a characteristic that satisfies such a condition that information related to a difference between the predetermined characteristic of the fiducial area MA11 and the predetermined characteristic of the fiducial area MA12 is included in the measured result by the measurement apparatus 5. In other words, the predetermined characteristic may be a characteristic that satisfies such a condition that the difference between the predetermined characteristic of the fiducial area MA11 and the predetermined characteristic of the fiducial area MA12 can be determined based on the measured result by the measurement apparatus 5. For example, the predetermined characteristic may include a position in a direction intersecting with the fiducial surface FMS (for example, in the Z-axis direction). In this case, information related to a difference between the position of the fiducial area MA11 in the Z-axis direction and the position of the fiducial area MA12 in the Z-axis direction is included in the measured result by the measurement apparatus 5 as the difference between a distance from the measurement head 52 to the fiducial area MA11 in the Z-axis direction and a distance from the measurement head 52 to the fiducial area MA12 in the Z-axis direction. For example, the predetermined characteristic may include a reflectance relative to the measurement light ML. In this case, information related to a difference between the reflectance of the fiducial area MA11 and the reflectance of the fiducial area MA12 is included in the measured result by the measurement apparatus 5 as a difference in a detection intensity of the returning light RL in the detector 5226 (namely, a difference in a detection intensity of the interfering light). Note that two or more of the examples described as examples of the predetermined characteristics may be different. On the other hand, the plurality of fiducial areas MA11 may be areas whose predetermined characteristics are the same as each other. Similarly, the plurality of fiducial areas MA12 may be areas whose predetermined characteristics are the same as each other.

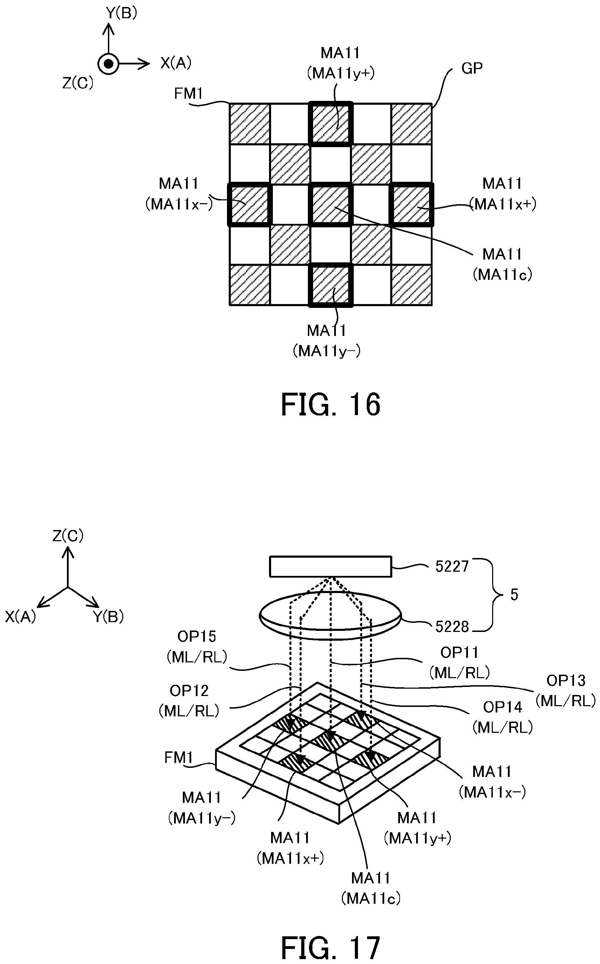

The measurement apparatus 5 may measure at least five fiducial areas MA11 in the grid pattern GP, as illustrated in FIG. 16 and FIG. 17. Alternatively, the measurement apparatus 5 may measure at least five fiducial areas MA12 in the grid pattern GP. Namely, the measurement apparatus 5 may measure at least five fiducial areas whose predetermined characteristics described above are the same as each other in the grid pattern GP as at least five measurement target areas. Incidentally, in the below-described description, an example in which the measurement apparatus 5 measures five fiducial areas MA11 (specifically, a fiducial area MA11c, a fiducial area MA11x+, a fiducial area MA11x-, a fiducial area MA11y+, and a fiducial area MA11y-) will be described.

The measurement apparatus 5 may irradiate each of the fiducial area MA11c, the fiducial area MA11x+, the fiducial area MA11x-, the fiducial area MA1 1y+, and the fiducial area MA1 1y-by using the Galvano mirror 5227 to change the irradiation position of the measurement light ML on the fiducial surface FMS. Thus, the fiducial area MA11c, the fiducial area MA11x+, the fiducial area MA11x-, the fiducial area MA11y+, and the fiducial area MA11y- may be included in a scanning area that can be scanned by the Galvano mirror 5527 with the measurement light ML in a state where the positional relationship between the measurement head 52 and the fiducial member FM is fixed. Specifically, as illustrated in FIG. 17, the measurement head 52 may irradiate the fiducial area MA11c with the measurement light ML propagating along an optical path OP11 from the fθ lens 5228. Furthermore, the measurement head 52 may optically receive the light component, which propagate along the optical path OP11, of the light from the fiducial area MA11c generated by the measurement light ML with which the fiducial area MA11c is irradiated as the returning light RL from the fiducial area MA11c. Furthermore, the measurement head 52 may irradiate the fiducial area MA11x+ with the measurement light ML propagating along an optical path OP12 different from the optical path OP11 from the fθ lens 5228. Furthermore, the measurement head 52 may optically receive the light component, which propagate along the optical path OP12, of the light from the fiducial area MA11x+ generated by the measurement light ML with which the fiducial area MA11x+ is irradiated as the returning light RL from the fiducial area MA11x+. Furthermore, the measurement head 52 may irradiate the fiducial area MA11x- with the measurement light ML propagating along an optical path OP13 different from the optical paths OP11 to OP12 from the fθ lens 5228. Furthermore, the measurement head 52 may optically receive the light component, which propagate along the optical path OP13, of the light from the fiducial area MA11x- generated by the measurement light ML with which the fiducial area MA11x- is irradiated as the returning light RL from the fiducial area MA11x-. Furthermore, the measurement head 52 may irradiate the fiducial area MA11y+ with the measurement light ML propagating along an optical path OP14 different from the optical paths OP11 to OP13 from the fθ lens 5228. Furthermore, the measurement head 52 may optically receive the light component, which propagate along the optical path OP14, of the light from the fiducial area MA11y+ generated by the measurement light ML with which the fiducial area MA11y+ is irradiated as the returning light RL from the fiducial area MA11y+. Furthermore, the measurement head 52 may irradiate the fiducial area MA11y- with the measurement light ML propagating along an optical path OP15 different from the optical paths OP11 to OP14 from the fθ lens 5228. Furthermore, the measurement head 52 may optically receive the light component, which propagate along the optical path OP15, of the light from the fiducial area MA11y- generated by the measurement light ML with which the fiducial area MA11y- is irradiated as the returning light RL from the fiducial area MA11y-.

The fiducial area MA11c, the fiducial area MA11x+, the fiducial area MA11x-, the fiducial area MA11y+, and the fiducial area MA11y- may satisfy a below-described position condition. First, each of the fiducial areas MA11x+ and MA11x- may be located at a position that is away from the fiducial area MA11c along the X-axis direction (alternatively, a first direction along the fiducial surface FMS). Furthermore, the direction along which fiducial area MA11x+ is away from the fiducial area MA11c may be opposite to a direction along which the fiducial area MA11x- is away from the fiducial area MA11c. In the example illustrated in FIG. 16 and FIG. 17, the fiducial area MA11x+ is away from the fiducial area MA11c toward the +X side, and the fiducial area MA11x- is away from the fiducial area MA11c toward the -X side. However, the direction along which the fiducial area MA11x+ is away from the fiducial area MA11c may be the same as the direction along which the fiducial area MA11x- is away from the fiducial area MA11c. Furthermore, a position of the fiducial area MA11x+ in the Y-axis direction (alternatively, a second direction along the fiducial surface FMS) may be the same as a position of the fiducial area MA11x- in the Y-axis direction (alternatively, the second direction along the fiducial surface FMS). Furthermore, each of the fiducial areas MA11y+ and MA11y-may be located at a position that is away from the fiducial area MA11c along the Y-axis direction (alternatively, the second direction along the fiducial surface FMS). Furthermore, the direction along which fiducial area MA11y+ is away from the fiducial area MA11c may be opposite to a direction along which the fiducial area MA11y- is away from the fiducial area MA11c. In the example illustrated in FIG. 16 and FIG. 17, the fiducial area MA11y+ is away from the fiducial area MA11c toward the +Y side, and the fiducial area MA11y- is away from the fiducial area MA11c toward the -y side. However, the direction along which the fiducial area MA11y+ is away from the fiducial area MA11c may be the same as the direction along which the fiducial area MA11y- is away from the fiducial area MA11c. Furthermore, a position of the fiducial area MA11y+ in the X-axis direction (alternatively, the first direction along the fiducial surface FMS) may be the same as a position of the fiducial area MA11y- in the X-axis direction (alternatively, the first direction along the fiducial surface FMS).

The control apparatus 7 may calculate the movement error Ez based on the measured result of the fiducial area MA11c, the fiducial area MA11x+, the fiducial area MA11x-, the fiducial area MA11y+, and the fiducial area MA11y-.

For example, the control apparatus 7 may calculate the movement error Ezz based on the measured result of the fiducial area MA11c. Specifically, in order to calculate the movement error Ez, the measurement apparatus 5 measures the fiducial member FM both before and after the processing head 2 moves in the Z-axis direction as described above. In this case, the control apparatus 7 may calculate a distance from the measurement head 52 to the fiducial area MA11c along the Z-axis direction (namely, a Z position of the fiducial area MA11c) before the processing head 2 moves, based on the detected result of the returning light RL from the fiducial area MA11c before the processing head 2 moves. Furthermore, the control apparatus 7 may calculate the distance from the measurement head 52 to the fiducial area MA11c along the Z-axis direction (namely, the Z position of the fiducial area MA11c) after the processing head 2 moves, based on the detected result of the returning light RL from the fiducial area MA11c after the processing head 2 moves. Here, in a case where the movement error Ezz does not occur, a difference between the Z position of the fiducial area MA11c before the processing head 2 moves and the Z position of the fiducial area MA11c after the processing head 2 moves should be equal to the target value of the moving distance of the processing head 2 in the Z-axis direction. On the other hand, in a case where the movement error Ezz occurs, the difference between the Z position of the fiducial area MA11c before the processing head 2 moves and the Z position of the fiducial area MA11c after the processing head 2 moves is not equal to the target value of the moving distance of the processing head 2 in the Z-axis direction. Therefore, the control apparatus 7 may calculate, as the movement error Ezz, the difference between the Z position of the fiducial area MA11c before the processing head 2 moves and the Z position of the fiducial area MA11c after the processing head 2 moves, and calculate the difference between the calculated difference and the target value of the moving distance of the processing head 2 in the Z-axis direction.

For example, the control apparatus 7 may calculate the movement error E_{BZ} based on the measured result of the fiducial areas MA11x+ and MA11x-. Specifically, the control apparatus 7 may calculate a distance from the measurement head 52 to the fiducial area MA11x+ along the Z-axis direction (namely, a Z position of the fiducial area MA11x+) before the processing head 2 moves, based on the measured result of the returning light RL from the fiducial area MA11x+ before the processing head 2 moves. Furthermore, the control apparatus 7 may calculate a distance from the measurement head 52 to the fiducial area MA11x- along the Z-axis direction (namely, a Z position of the fiducial area MA11x-) before the processing head 2 moves, based on the measured result of the returning light RL from the fiducial area MA11x- before the processing head 2 moves. Furthermore, the control apparatus 7 may calculate the distance from the measurement head 52 to the fiducial area MA11x+ along the Z-axis direction (namely, the Z position of the fiducial area MA11x+) after the processing head 2 moves, based on the measured result of the returning light RL from the fiducial area MA11x+ after the processing head 2 moves. Furthermore, the control apparatus 7 may calculate the distance from the measurement head 52 to the fiducial area MA11x- along the Z-axis direction (namely, the Z position of the fiducial area MA11x-) after the processing head 2 moves, based on the measured result of the returning light RL from the fiducial area MA11x- after the processing head 2 moves. Then, the control apparatus 7 may calculate a difference between the Z-position of the fiducial area MA1 1x+ before the processing head 2 moves and the Z-position of the fiducial area MA1 1x- before the processing head 2 moves as a rotational amount of the fiducial member FM1 around the B-axis (a pitch rotational amount) before the processing head 2 moves. Furthermore, the control apparatus 7 may calculate a difference between the Z position of the fiducial area MA11x+ after the processing head 2 moves and the Z position of the fiducial area MA11x- after the processing head 2 moves as a rotational amount (a pitch rotation amount) of the fiducial member FM1 around the B-axis after the processing head 2 moves . Here, in a case where the movement error E_{BZ} does not occur, the pitch rotational amount of the fiducial member FM1 after the processing head 2 moves should be equal to the pitch rotational amount of the fiducial member FM1 before the processing head 2 moves. On the other hand, in a case where the movement error E_{BZ} occurs, the pitch rotational amount of the fiducial member FM1 after the processing head 2 moves is not equal to the pitch rotational amount of the fiducial member FM1 before the processing head 2 moves. Therefore, a difference between the pitch rotational amount of the fiducial member FM1 after the processing head 2 moves and the pitch rotational amount of the fiducial member FM1 before the processing head 2 moves corresponds to the movement error E_{BZ}. Therefore, the control apparatus 7 may calculate, as the movement error E_{BZ}, the difference between the pitch rotational amount of the fiducial member FM1 after the processing head 2 moves and the pitch rotational amount of the fiducial member FM1 before the processing head 2 moves.

For example, the control apparatus 7 may calculate the movement error E_{AZ} based on the measured result of the fiducial areas MA11y+ and MA11y-. Specifically, the control apparatus 7 may calculate a distance from the measurement head 52 to the fiducial area MA11y+ along the Z-axis direction (namely, a Z position of the fiducial area MA11y+) before the processing head 2 moves, based on the measured result of the returning light RL from the fiducial area MA11y+ before the processing head 2 moves. Furthermore, the control apparatus 7 may calculate a distance from the measurement head 52 to the fiducial area MA11y- along the Z-axis direction (namely, a Z position of the fiducial area MA11y-) before the processing head 2 moves, based on the measured result of the returning light RL from the fiducial area MA11y- before the processing head 2 moves. Furthermore, the control apparatus 7 may calculate the distance from the measurement head 52 to the fiducial area MA11y+ along the Z-axis direction (namely, the Z position of the fiducial area MA11y+) after the processing head 2 moves, based on the measured result of the returning light RL from the fiducial area MA11y+ after the processing head 2 moves. Furthermore, the control apparatus 7 may calculate the distance from the measurement head 52 to the fiducial area MA11y- along the Z-axis direction (namely, the Z position of the fiducial area MA11y-) after the processing head 2 moves, based on the measured result of the returning light RL from the fiducial area MA11y- after the processing head 2 moves. Then, the control apparatus 7 may calculate a difference between the Z-position of the fiducial area MA11y+ before the processing head 2 moves and the Z-position of the fiducial area MA11y- before the processing head 2 moves as a rotational amount of the fiducial member FM1 around the A-axis (a roll rotational amount) before the processing head 2 moves. Furthermore, the control apparatus 7 may calculate a difference between the Z position of the fiducial area MA11y+ after the processing head 2 moves and the Z position of the fiducial area MA11y- after the processing head 2 moves as a rotational amount (a roll rotation amount) of the fiducial member FM1 around the A-axis after the processing head 2 moves . Here, in a case where the movement error E_{AZ} does not occur, the roll rotational amount of the fiducial member FM1 after the processing head 2 moves should be equal to the roll rotational amount of the fiducial member FM1 before the processing head 2 moves. On the other hand, in a case where the movement error E_{AZ} occurs, the roll rotational amount of the fiducial member FM1 after the processing head 2 moves is not equal to the roll rotational amount of the fiducial member FM1 before the processing head 2 moves. Therefore, a difference between the roll rotational amount of the fiducial member FM1 after the processing head 2 moves and the roll rotational amount of the fiducial member FM1 before the processing head 2 moves corresponds to the movement error E_{AZ}. Therefore, the control apparatus 7 may calculate, as the movement error E_{AZ}, the difference between the roll rotational amount of the fiducial member FM1 after the processing head 2 moves and the roll rotational amount of the fiducial member FM1 before the processing head 2 moves.

Incidentally, even in a case where the processing head 2 or the stage 41 moves along the movement direction different from the Z-axis direction (namely, in a case where the movement error other than the movement error Ez is calculated), the control apparatus 7 may calculate the movement error in one linear direction based on the measured result of the fiducial area MA11c in the same manner. The control apparatus 7 may calculate the movement error in the rotational direction around one rotational axis based on the measured result of the fiducial areas MA11x+ and MA11x-. The control apparatus 7 may calculate the movement error in the rotational direction around another rotational axis based on the measured result of the fiducial areas MA11y+ and MA11y-. However, in a case where the processing head 2 or the stage 41 moves (namely, rotates) along the rotational direction, the difference between the position of the fiducial area MA11c before the processing head 2 or the stage 41 moves and the position of the fiducial area MA11c after the processing head 2 or the stage 41 moves includes not only a component of the movement error in the Z-axis direction but also a component of the moving distance (the rotational amount) of the processing head 2 or the stage 41 along the rotational direction. Therefore, the control apparatus 7 may calculate the movement in one linear direction by removing the component of the moving distance (the rotational amount) of the processing head 2 or the stage 41 along the rotational direction from the difference between the position of the fiducial area MA11c before the processing head 2 or the stage 41 moves and the position of the fiducial area MA11c after the processing head 2 moves. The same is true for the difference in the pitch rotational amount and the roll rotational amount.

The measurement apparatus 5 may measure the grid pattern GP in addition to or instead of at least five fiducial areas MA11 in the grid pattern GP. Specifically, the measurement apparatus 5 may measure both of the fiducial areas MA11 and MA12 forming the grid pattern GP. Here, since the predetermined characteristic (for example, a height or a reflectance) of the fiducial area MA11 is different from the predetermined characteristic of the fiducial area MA12 as described above, the control apparatus 7 may determine a state of the grid pattern P on the stage 41 based on the measured result of the fiducial areas MA11 and MA12 by the measurement apparatus 5 (namely, the detected result of the returning light RL from the fiducial area MA11 and the returning light RL from the fiducial area MA12). For example, the control apparatus 7 may determine the state of the grid pattern GP before the processing head 2 moves based on the detected result of the returning light RL from the grid pattern GP before the processing head 2 moves. Furthermore, the control apparatus 7 may determine the state of the grid pattern GP before the processing head 2 moves based on the detected result of the returning light RL from the grid pattern GP after the processing head 2 moves. Then, the control apparatus 7 may calculate the movement error Ez based on the determined state of the grid pattern P.

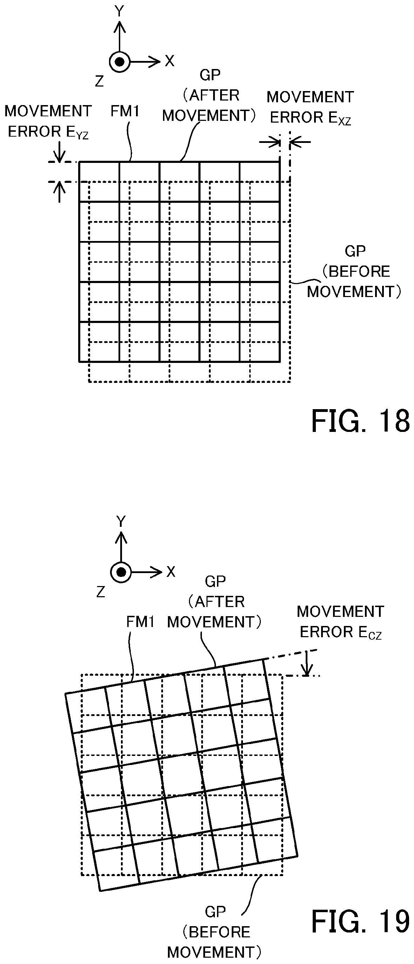

For example, in a case where the movement error Exz does not occur, a position of the grid pattern GP in the X-axis direction after the processing head 2 moves should be the same as a position of the grid pattern GP in the X-axis direction before the processing head 2 moves. On the other hand, in a case where the movement error E_{XZ} occurs, as illustrated in FIG. 18, the position of the grid pattern GP in the X-axis direction after the processing head 2 moves is not the same as the position of the grid pattern GP in the X-axis direction before the processing head 2 moves. Therefore, a difference between the position of the grid pattern GP in the X-axis direction after the processing head 2 moves and the position of the grid pattern GP in the X-axis direction before the processing head 2 moves corresponds to the movement error Exz. Therefore, the control apparatus 7 may calculate, as the movement error Exz, the difference between the position of the grid pattern GP in the X-axis direction after the processing head 2 moves and the position of the grid pattern GP in the X-axis direction before the processing head 2 moves.

For example, in a case where the movement error E_{YZ} does not occur, a position of the grid pattern GP in the Y-axis direction after the processing head 2 moves should be the same as a position of the grid pattern GP in the Y-axis direction before the processing head 2 moves. On the other hand, in a case where the movement error E_{XZ} occurs, as illustrated in FIG. 18, the position of the grid pattern GP in the Y-axis direction after the processing head 2 moves is not the same as the position of the grid pattern GP in the Y-axis direction before the processing head 2 moves. Therefore, a difference between the position of the grid pattern GP in the Y-axis direction after the processing head 2 moves and the position of the grid pattern GP in the Y-axis direction before the processing head 2 moves corresponds to the movement error E_{YZ}. Therefore, the control apparatus 7 may calculate, as the movement error E_{YZ}, the difference between the position of the grid pattern GP in the Y-axis direction after the processing head 2 moves and the position of the grid pattern GP in the Y-axis direction before the processing head 2 moves.

For example, in a case where the movement error Ecz does not occur, a rotational angle of the grid pattern GP in the rotational direction around the C-axis after the processing head 2 moves should be equal to the rotational angle of the grid pattern GP in the rotational direction around the C-axis before the processing head 2 moves. On the other hand, in a case where the movement error Ecz occurs, as illustrated in FIG. 19, the rotational angle of the grid pattern GP in the rotational direction around the C-axis after the processing head 2 moves is not equal to the rotational angle of the grid pattern GP in the rotational direction around the C-axis before the processing head 2 moves. Therefore, a difference between the rotational angle of the grid pattern GP in the rotational direction around the C-axis after the processing head 2 moves and the rotational angle of the grid pattern GP in the rotational direction around the C-axis before the processing head 2 moves corresponds to the movement error Ecz. Therefore, the control apparatus 7 may calculate, as the movement error Ecz, the difference between the rotational angle of the grid pattern GP in the rotational direction around the C-axis after the processing head 2 moves and the rotational angle of the grid pattern GP in the rotational direction around the C-axis before the processing head 2 moves.

Incidentally, even in a case where the processing head 2 or the stage 41 moves along the movement direction different from the Z-axis direction (namely, in a case where the movement error other than movement error Ez is calculated), the control apparatus 7 may calculate the movement error in each of two linear directions that are different from each other and the movement error in one rotational direction around one axis based on the measured results of the grid pattern GP in the same manner. However, in a case where the processing head 2 or the stage 41 moves (namely, rotates) along the rotational direction, the difference between the position of the grid pattern GP after the processing head 2 or the stage 41 moves and the position of the grid pattern GP before the processing head 2 or the stage 41 moves has not only a component of the movement error in at least one of the X-axis direction and the Y-axis direction but also a component of the moving distance (the rotational amount) of the processing head 2 or the stage 41 along the rotational direction. Therefore, the control apparatus 7 may calculate the movement error in one linear direction by removing the component of the moving distance (the rotational amount) of the processing head 2 or the stage 41 along the rotational direction from the difference between the position of the grid pattern GP after the processing head 2 or the stage 41 moves and the position of the grid pattern GP before the processing head 2 moves. The same is true for the difference in the rotational angle of the grid pattern GP.

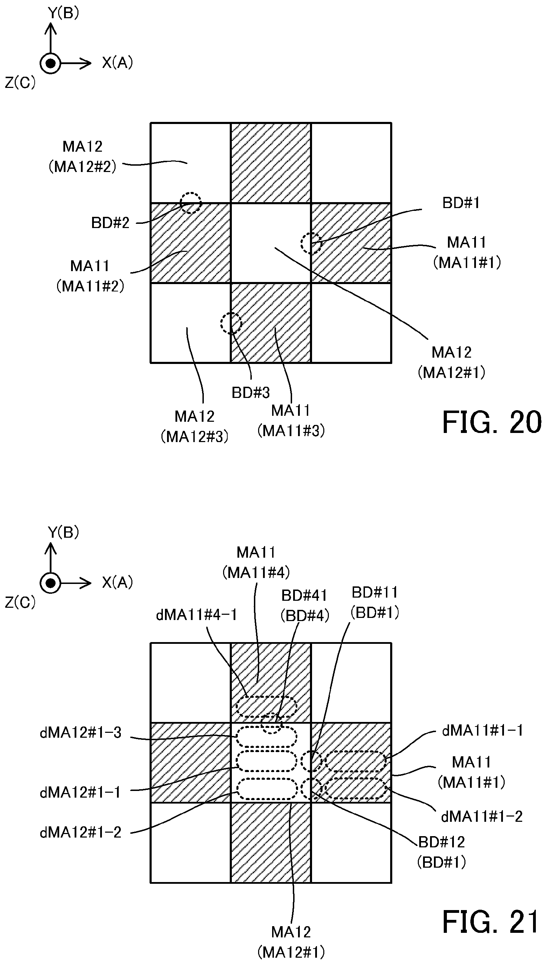

The measurement apparatus 5 may measure a border BD between the fiducial area MA11 and the fiducial area MA12 in addition to or instead of at least one of at least five fiducial areas MA11 and the grid pattern GP. Namely, the measurement apparatus 5 may irradiate the border BD with the measurement light ML and optically receive the returning light RL from the border BD. Especially, the measurement apparatus 5 may irradiate at least three borders BDs, which includes two borders BDs that extends along different directions, with the measurement light ML and may optically receive the returning light RL from the at least three borders. For example, as illustrated in FIG. 20, the measurement apparatus 5 may irradiate each of a border BD#1 that is a border between the fiducial area MA11#1 and the fiducial area MA12#1 adjacent along the X-axis direction and that extends along the Y-axis direction, a border BD#2 that is a border between the fiducial area MA11#1 and the fiducial area MA12#2 adjacent along the Y-axis direction and that extends along the X-axis direction, and a border BD#3 that is a border between the fiducial area MA11#3 and the fiducial area MA12#3 adjacent along the X-axis direction and that extends along the Y-axis direction with the measurement light ML.

Alternatively, the measurement apparatus 5 may irradiate a plurality of parts on the border BD between a certain fiducial area MA11 and a certain fiducial area MA12 with the measurement light ML. Even in this case, the measurement apparatus 5 may be regarded to irradiate the plurality of borders BD with the measurement light ML. Specifically, for example, as illustrated in FIG. 21, the measurement apparatus 5 may irradiate each of a border BD#11 between a first area part dMA11# 1 -1 of the fiducial area MA11#1 and a first area part dMA12#1-1 of the fiducial area MA12#1 (namely, a part of the border BD#1), a border BD#12 between a second area part dMA11#1-2 of the fiducial area MA11#1 and a second area part dMA12#1-2 of the fiducial area MA12#1 (namely, another part of border BD#1), and a border BD#41 between a first area part dMA11#4-1 of a fiducial area MA11#4 and a third area part dMA12#1-3 of the fiducial area MA12#1 that are adjacent along the Y axis direction (namely, a part of a border BD#4 that is a border between the fiducial area MA11#4 and the fiducial area MA12#1 and that extends along the X-axis direction) with the measurement light ML.

In this case, the control apparatus 7 may calculate a position of the border BD (for example, a position in the three-dimensional coordinate space) based on the measured result of the border BD by the measurement apparatus 5 (namely, the detected result of the returning light RL from the border BD). Then, the control apparatus 7 may calculate the movement error Ez based on the positions of at least three borders BD. For example, the control apparatus 7 may calculate at least one of the movement error Exz, the movement error E_{YZ}, and the movement error Ecz based on a position of a first border BD (for example, the border BD#1 in FIG. 20 or the border BD#11 in FIG. 21) along at least one of the X-axis direction and the Y-axis direction, a position of a second border BD (for example, the border BD#2 in FIG. 20 or the border BD#41 in FIG. 21) along at least one of the X-axis direction and the Y-axis direction, and a position of a third border BD (for example, the border BD#3 in FIG. 20 or the border BD#12 in FIG. 21) along at least one of the X-axis direction and the Y-axis direction. This is because a translational amount of a plane and a rotational amount of the plane around an rotational axis intersecting with the plane are calculatable based on positions of three points in the plane, and therefore, the movement error E_{XZ}, the movement error E_{YZ}, and the movement error E_{CZ} are calculatable by comparing the translational amount and the rotational amount both before and after at least one of the processing head 2 and the stage 41 move. Thus, the control apparatus 7 may calculate the movement errors in three different movement directions based on the XY positions of the three borders BD. Moreover, for example, the control apparatus 7 may calculate at least one of the movement error Ezz, the movement error E_{AZ} and the movement error E_{BZ} based on the position of the first border BD along the Z-axis, the position of the second border BD along the Z-axis and the position of the third border BD along the Z-axis. This operation may be regarded to be substantially equivalent to the operation for calculating at least one of the movement error Ezz, the movement error E_{AZ} and the movement error E_{BZ} based on the positions of at least five fiducial areas MA11 (the five fiducial areas MA11) described by using FIG. 16 and FIG. 17. Thus, the control apparatus 7 may calculate the movement errors in three different movement directions based on the Z positions of the three borders BD. As a result, the control apparatus 7 may calculate the movement errors in six different movement directions based on the XYZ positions of the three borders BD.

### (2-2-2) Movement Error Calculation Operation using Fiducial Member FM2

Next, the movement error calculation operation using fiducial member FM2 will be described.

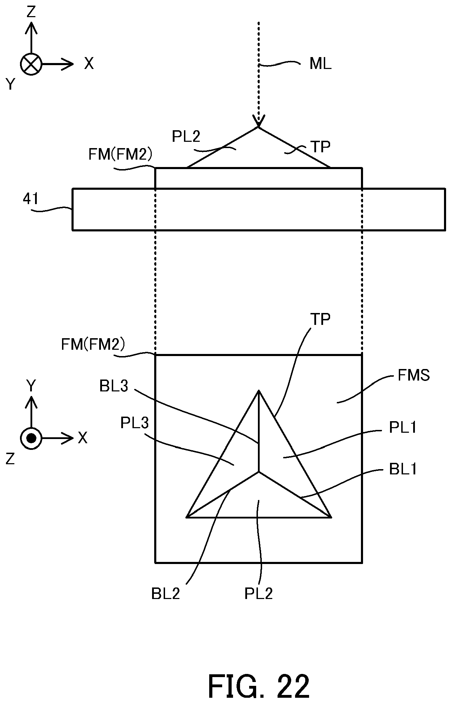

One example of the fiducial member FM2 is illustrated in FIG. 22. As illustrated in FIG. 22, the fiducial member FM2 is a member with a polyhedron TP formed on the fiducial surface FMS. In an example illustrated in FIG. 22, the polyhedron TP corresponding to a triangular pyramid is formed on the fiducial member FM2. In this case, the polyhedron TP may include a first surface PL1, a second surface PL2, and a third surface PL3, which form three side surfaces of the triangular pyramid, respectively. The first surface PL1 may have a normal line directed along a direction along which each of a normal line of the second surface PL2 and a normal line of the third surface PL3 is directed. The second surface PL2 may have the normal line directed along a direction along which each of the normal line of the first surface PL1 and the normal line of the third surface PL3 is directed. The third surface PL3 may have the normal line directed along a direction along which each of the normal line of the first surface PL1 and the normal line of the second surface PL2 is directed. The first surface PL1 may be connected to the second surface PL2 through a first border line BL1 (namely, a first side of the triangular pyramid). The second surface PL2 may be connected to the third surface PL3 through a second border line BL2 (namely, a second side of the triangular pyramid). The third surface PL1 may be connected to the first surface PL1 through a third border line BL3 (namely, a third side of the triangular pyramid).

Note that the polyhedron TP is not limited to the triangular pyramid. For example, any convex polyhedron may be used as the polyhedron TP. For example, any square pyramid may be used as the polyhedron TP. Any prism may be used as the polyhedron TP. For example, any non-convex polyhedron may be used as the polyhedron TP. Incidentally, in a case where the polyhedron TP is any convex polyhedron, there is less possibility that the measurement light ML reflected and / or scattered by one surface of the polyhedron returns to the measurement apparatus 5 as the returning light RL after passing through another polyhedron. Therefore, there is such an advantage that the measurement error is less likely to occur.

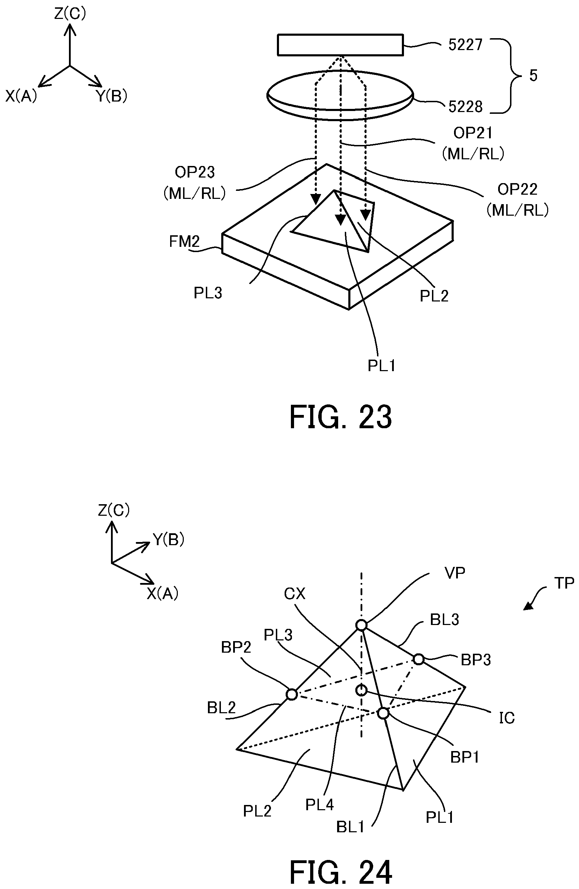

The measurement apparatus 5 may measure each of at least three surfaces (in the example illustrated in FIG. 22, the first surface PL1 to the third surface PL3) included in the polyhedron TP, as illustrated in FIG. 23. Specifically, the measurement apparatus 5 may irradiate each of the first to third surfaces PL1 to PL3 with the measurement light ML by using the Galvano mirror 5227 to change the irradiation position of the measurement light ML. For this purpose, the first surface PL1 to the third surface PL3 may be included in the scanning area that can be scanned by the Galvano mirror 5527 with the measurement light ML in a state where the positional relationship between the measurement head 52 and the fiducial member FM is fixed. Specifically, the measurement head 52 may irradiate the first surface PL1 with the measurement light ML propagating along an optical path OP21 from the fθ lens 5228. Furthermore, the measurement head 52 may optically receive the light component, which propagates along the optical path OP21, of the light from the first surface PL1 generated by the measurement light ML with which the first surface PL1 is irradiated as the returning light RL from the first surface PL1. Furthermore, the measurement head 52 may irradiate the second surface PL2 with the measurement light ML propagating along an optical path OP22 different from the optical path OP21 from the fθ lens 5228. Furthermore, the measurement head 52 may optically receive the light component, which propagates along the optical path OP22, of the light from the second surface PL2 generated by the measurement light ML with which the second surface PL2 is irradiated as the returning light RL from the second surface PL2. Furthermore, the measurement head 52 may irradiate the third surface PL3 with the measurement light ML propagating along an optical path OP23 different from the optical paths OP21 to OP22 from the fθ lens 5228. Furthermore, the measurement head 52 may optically receive the light component, which propagates along the optical path OP23, of the light from the third surface PL3 generated by the measurement light ML with which the third surface PL3 is irradiated as the returning light RL from the third surface PL3.

The measurement apparatus 5 may irradiate each of a plurality of measurement target areas of the first surface PL1 with the measurement light ML by using the Galvano mirror 5227 to change the irradiation position of the measurement light ML on the first surface PL1. The measurement apparatus 5 may irradiate each of a plurality of measurement target areas of the second surface PL2 with the measurement light ML by using the Galvano mirror 5227 to change the irradiation position of the measurement light ML on the second surface PL2. The measurement apparatus 5 may irradiate each of a plurality of measurement target areas of the third surface PL3 with the measurement light ML by using the Galvano mirror 5227 to change the irradiation position of the measurement light ML on the third surface PL3.

The control apparatus 7 may calculate the movement error Ez based on the measured result of at least three surfaces included in the polyhedron TP (in the example illustrated in FIG. 22, the first surface PL1 to the third surface PL3). In the below-described description, one example of an operation for calculating the movement error Ez based on the measured result of the first surface PL1 to the third surface PL3 will be described.

Specifically, the control apparatus 7 may calculate a position (specifically, a three-dimensional position) of the first surface PL1 based on the detected result of the returning light RL from the first surface PL1. I order to calculate the position of the first surface PL1, the measurement apparatus 5 may irradiate each of at least three measurement target areas of the first surface PL1 with the measurement light ML by using the Galvano mirror 5227 to change the irradiation position of the measurement light ML on the first surface PL1. However, the measurement apparatus 5 may not irradiate the first border line BL1 between the first surface PL1 and the second surface PL2, and the third border line BL3 between the first surface PL1 and the third surface PL3 with the measurement light ML. In this case, the control apparatus 7 may calculate the position of the first surface PL1 by calculating the positions of the at least three measurement target areas based on the measured result of the at least three measurement target areas, and determining a plane connecting the three measurement target areas located at the calculated position as the first surface PL1.

Furthermore, the control apparatus 7 may calculate a position (specifically, a three-dimensional position) of the second surface PL2 based on the detected result of the returning light RL from the second surface PL2. I order to calculate the position of the second surface PL2, the measurement apparatus 5 may irradiate each of at least three measurement target areas of the second surface PL2 with the measurement light ML by using the Galvano mirror 5227 to change the irradiation position of the measurement light ML on the second surface PL2. However, the measurement apparatus 5 may not irradiate the first border line BL1 between the second surface PL2 and the first surface PL1, and the second border line BL2 between the second surface PL2 and the third surface PL3 with the measurement light ML. In this case, the control apparatus 7 may calculate the position of the second surface PL2 by calculating the positions of the at least three measurement target areas based on the measured result of the at least three measurement target areas, and determining a plane connecting the three measurement target areas located at the calculated position as the second surface PL2.

Furthermore, the control apparatus 7 may calculate a position (specifically, a three-dimensional position) of the third surface PL3 based on the detected result of the returning light RL from the third surface PL3. I order to calculate the position of the third surface PL3, the measurement apparatus 5 may irradiate each of at least three measurement target areas of the third surface PL3 with the measurement light ML by using the Galvano mirror 5227 to change the irradiation position of the measurement light ML on the third surface PL3. However, the measurement apparatus 5 may not irradiate the third border line BL3 between the third surface PL3 and the first surface PL1, and the second border line BL2 between the second surface PL2 and the first surface PL1 with the measurement light ML. In this case, the control apparatus 7 may calculate the position of the third surface PL3 by calculating the positions of the at least three measurement target areas based on the measured result of the at least three measurement target areas, and determining a plane connecting the three measurement target areas located at the calculated position as the third surface PL3.

Then, the control apparatus 7 may calculate a position of a vertex VP of the polyhedron TP based on the calculated positions of the first surface PL1 to the third surface PL3. One example of the vertex VP of the polyhedron TP is illustrated in FIG. 24. As illustrated in FIG. 24, a point at which the first border line BL1 to the third border line BL3 intersect with each other may be used as the vertex VP. A point at which the first border line BL1 intersects with the third surface PL3 may be used as the vertex VP. A point at which the second border line BL2 intersects with the first surface PL1 may be used as the vertex VP. A point at which the third border line BL3 intersects with the second surface PL2 may be used as the vertex VP.

Furthermore, the control apparatus 7 may calculate a position of a central axis CX of the polyhedron TP based on the calculated positions of the first surface PL1 to the third surface PL3. One example of the central axis CX of the polyhedron TP is illustrated in FIG. 24. As illustrated in FIG. 24, an axis connecting the vertex VP and an inner center IC of a fourth plane (polygon) PL4, which is obtained by connecting points BP 1 to BP3 located at equidistant positions from the vertex VP on the first border line BL1 to the third border line BL3, may be used as the central axis CX. In this case, the control apparatus 7 may calculate a position of the fourth surface PL4 based on the calculated positions of the first surface PL1 to the third surface PL3, calculate the position of the inner center IC based on the calculated position of the fourth surface PL4, and calculate the position of the axis connecting the calculated position of the inner center IC and the calculated position of the vertex VP as the position of the central axis CX.

The control apparatus 7 performs the same operation both before the processing head 2 moves along the Z-axis direction and after the processing head 2 moves along the Z-axis direction. As a result, the control apparatus 7 calculates the positions of the vertex VP and the central axis CX before the processing head 2 moves and the positions of the vertex VP and the central axis CX after the processing head 2 moves. Then, the control apparatus 7 may calculate the movement error Ez based on at least one of the positions of the vertex VP and the central axis CX.

For example, the control apparatus 7 may calculate the movement error Ezz based on the position in the Z-axis direction (Z-position) of the vertex VP. Specifically, in a case where the movement error Ezz does not occur, a difference between the Z position of the vertex VP before the processing head 2 moves and the Z position of the vertex VP after the processing head 2 moves should be equal to the target value of the moving distance of the processing head 2 in the Z-axis direction. On the other hand, in a case where the movement error Ezz occurs, the difference between the Z position of the vertex VP before the processing head 2 moves and the Z position of the vertex VP after the processing head 2 moves is not equal to the target value of the moving distance of the processing head 2 in the Z-axis direction. Therefore, the control apparatus 7 may calculate the difference between the Z position of the vertex VP before the processing head 2 moves and the Z position of the vertex VP after the processing head 2 moves, and calculate a difference between the calculated difference and the target value of the moving distance of the processing head 2 in the Z-axis direction as the movement error Ezz.

For example, the control apparatus 7 may calculate the movement error Exz based on the position in the X-axis direction (X position) of the vertex VP. Specifically, in a case where the movement error Exz does not occur, the X position of the vertex VP after the processing head 2 moves should be the same as the X position of the vertex VP before the processing head 2 moves. On the other hand, in a case where the movement error Exz occurs, the X position of the vertex VP after the processing head 2 moves is not the same as the X position of the vertex VP before the processing head 2 moves. Therefore, a difference between the X position of the vertex VP after the processing head 2 moves and the X position of the vertex VP before the processing head 2 moves corresponds to the movement error Exz. Therefore, the control apparatus 7 may calculate the difference between the X position of vertex VP after the processing head 2 moves and the X position of vertex VP before the processing head 2 moves as the movement error E_{XZ}.

For example, the control apparatus 7 may calculate the movement error E_{XY} based on the position in the Y-axis direction (Y position) of the vertex VP. Specifically, in a case where the movement error E_{YZ} does not occur, the Y position of the vertex VP after the processing head 2 moves should be the same as the Y position of the vertex VP before the processing head 2 moves. On the other hand, in a case where the movement error E_{YZ} occurs, the Y position of the vertex VP after the processing head 2 moves is not the same as the Y position of the vertex VP before the processing head 2 moves. Therefore, a difference between the Y position of the vertex VP after the processing head 2 moves and the Y position of the vertex VP before the processing head 2 moves corresponds to the movement error E_{YZ}. Therefore, the control apparatus 7 may calculate the difference between the Y position of vertex VP after the processing head 2 moves and the Y position of vertex VP before the processing head 2 moves as the movement error E_{YZ}.

For example, the control apparatus 7 may calculate the movement error E_{AZ} based on a rotational angle of the central axis CX around the A-axis. Specifically, in a case where the movement error E_{AZ} does not occur, the rotational angle (in other words, an inclination angle) of the central axis CX around the A-axis after the processing head 2 moves should be equal to the rotational angle of the central axis CX around the A-axis before the processing head 2 moves. On the other hand, in a case where the movement error E_{AZ} occurs, the rotational angle of the central axis CX around the A-axis after the processing head 2 moves is not equal to the rotational angle of the central axis CX around the A-axis before the processing head 2 moves. Therefore, a difference between the rotational angle of the central axis CX around the A-axis after the processing head 2 moves and the rotational angle of the central axis CX around the A-axis before the processing head 2 moves corresponds to the movement error E_{AZ}. Therefore, the control apparatus 7 may calculate the rotational angle of the central axis CX around the A-axis after the processing head 2 moves based on the position of the central axis CX after the processing head 2 moves, calculate the rotational angle around the A-axis of the central axis CX before the processing head 2 moves based on the position of the central axis CX before the processing head 2 moves, and calculate the difference between the rotational angle of the central axis CX around the A-axis after the processing head 2 moves and the rotational angle of the central axis CX around the A-axis before the processing head 2 moves may be calculated as the movement error E_{AZ}.

For example, the control apparatus 7 may calculate the movement error E_{BZ} based on the rotational angle of the central axis CX around the B-axis. Specifically, in a case where the movement error E_{BZ} does not occur, the rotational angle of the central axis CX around the B-axis after the processing head 2 moves should be equal to the rotational angle of the central axis CX around the B-axis before the processing head 2 moves. On the other hand, in a case where the movement error E_{BZ} occurs, the rotational angle of the central axis CX around the B-axis after the processing head 2 moves is not equal to the rotational angle of the central axis CX around the B-axis before the processing head 2 moves. Therefore, a difference between the rotational angle of the central axis CX around the B-axis after the processing head 2 moves and the rotational angle of the central axis CX around the B-axis before the processing head 2 moves corresponds to the movement error E_{BZ}. Therefore, the control apparatus 7 may calculate the rotational angle of the central axis CX around the B-axis after the processing head 2 moves based on the position of the central axis CX after the processing head 2 moves, calculate the rotational angle around the B-axis of the central axis CX before the processing head 2 moves based on the position of the central axis CX before the processing head 2 moves, and calculate the difference between the rotational angle of the central axis CX around the B-axis after the processing head 2 moves and the rotational angle of the central axis CX around the B-axis before the processing head 2 moves may be calculated as the movement error E_{BZ}.

For example, the control apparatus 7 may calculate the movement error Ecz based on a rotational angle around the C-axis of the fourth surface PL4 that is used to calculate the central axis CX. Specifically, in a case where the movement error Ecz does not occur, the rotational angle of the fourth surface PL4 around the C-axis after the processing head 2 moves should be equal to the rotational angle of the fourth surface PL4 around the C-axis before the processing head 2 moves. On the other hand, in a case where the movement error Ecz occurs, the rotational angle of the fourth surface PL4 around the C-axis after the processing head 2 moves is not equal to the rotational angle of the fourth surface PL4 around the C-axis before the processing head 2 moves. Therefore, a difference between the rotational angle of the fourth surface PL4 around the C-axis after the processing head 2 moves and the rotational angle of the fourth surface PL4 around the C-axis before the processing head 2 moves corresponds to the movement error Ecz. Therefore, the control apparatus 7 may calculate the rotational angle of the fourth surface PL4 around the C-axis after the processing head 2 moves based on the position of the first surface PL1 to the third surface PL3 after the processing head 2 moves, calculate the rotational angle of the fourth surface PL4 around the C-axis before the processing head 2 moves based on the position of the first surface PL1 to the third surface PL3 before the processing head 2 moves, and calculate the difference between the rotational angle of the fourth surface PL4 around the C-axis after the processing head 2 moves and the rotational angle of the fourth surface PL4 around the C-axis before the processing head 2 moves as the movement error Ecz.

Incidentally, even in a case where the processing head 2 or the stage 41 moves along the movement direction different from the Z-axis direction (namely, in a case where the movement error other than the movement error Ez is calculated), the control apparatus 7 may calculate the movement error in each of the three linear directions that are different from each other and the orthogonality between the three linear directions that are different form each other based on the positions of the vertex VP of the polyhedron TP in the same manner. The control apparatus 7 may calculate the movement error in each of two rotational directions around two different rotational axes that are different from each other based on the position of the central axis CX of the polyhedron TP. The control apparatus 7 may calculate the movement error in the rotational direction around one rotational axis based on the position of the fourth surface PL4. However, in a case where the processing head 2 or the stage 41 moves (namely, rotates) along the rotational direction, the difference between the position of the vertex VP after the processing head 2 or the stage 41 moves and the position of the vertex VP before the processing head 2 or the stage 41 moves includes not only a component of the movement error in at least one of the X-axis direction, the Y-axis direction, and the Z-axis direction but also a component of the moving distance (the rotational amount) of the processing head 2 or the stage 41 along the rotational direction. Therefore, the control apparatus 7 may calculate the movement in the linear direction by removing the component of the moving distance (the rotational amount) of the processing head 2 or the stage 41 along the rotational direction from the difference between the position of the vertex VP after the processing head 2 or the stage 41 moves and the position of the vertex VP before the processing head 2 or the stage 41 moves. The same is true for the difference in each of the rotational angle of the central axis CX and the rotational angle of the fourth surface PL4.

Incidentally, the measurement apparatus 5 may measure the first border line BL1, the second border line BL2, and the third border line BL3 by irradiating the first border line BL1 between the second surface PL2 and the first surface PL1, the second border line BL2 between the second surface PL2 and the third surface PL3, and the third border line BL3 between the third surface PL3 and the first surface PL1 with the measurement light ML.

### (2-2-3) Movement Error Calculation Operation using Fiducial Member FM3

Next, the movement error calculation operation using fiducial member FM3 will be described.

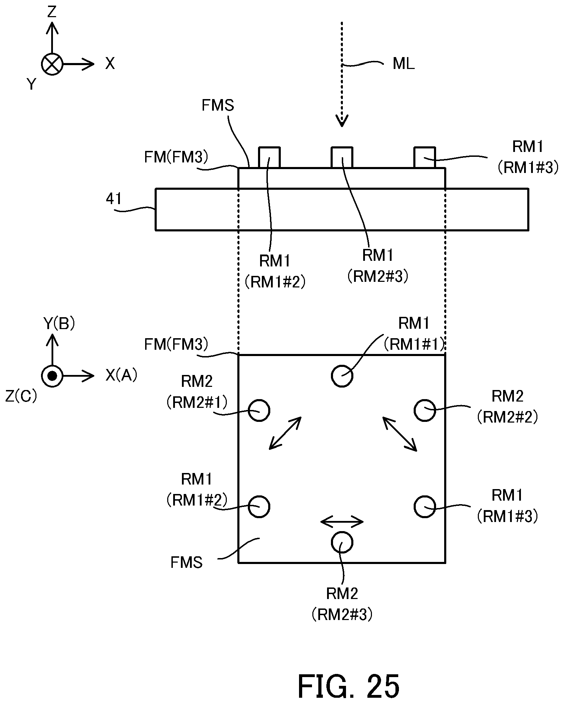

One example of the fiducial member FM3 is illustrated in FIG. 25. As illustrated in FIG. 25, the fiducial member FM3 is a member with at least one reflector RM1 and at least one reflector RM2 disposed on the fiducial surface FMS. In an example illustrated in FIG. 25, the fiducial member FM3 includes three reflectors RM1 (specifically, reflectors RM1#1 to RM1#3) and three reflectors RM2 (specifically, reflectors RM2#1 to RM2#3). However, each of the number of reflectors RM1 and the number of reflectors RM2 are not limited to three.

The three reflectors RM1 may include at least two reflectors RM1 whose positions in one direction along the fiducial surface FMS (for example, in the X-axis direction) are different from each other. In the example illustrated in FIG. 25, the position of reflector RM1#1 in the X-axis direction, the position of reflector RM1#2 in the X-axis direction, and the position of reflector RM1#3 in the X-axis direction are different from one another. Moreover, the three reflectors RM1 may include at least two reflectors RM1 whose positions in another direction along the fiducial surface FMS (for example, in the Y-axis direction) are different from each other. In the example illustrated in FIG. 25, the position of reflector RM1#1 in the Y-axis direction is different from each of the position of reflector RM1#2 in the Y-axis direction and the position of reflector RM1#3 in the Y-axis direction. Moreover, the three reflectors RM1 may be disposed on a circumference. Especially, the three reflectors RM1 may be disposed at equal intervals on the circumference. In the below-described description, the three reflectors RM1 are assumed to be disposed at intervals of 120 degrees on the circumference. However, the position of reflector RM1 is not limited to the position illustrated in FIG. 25.

The three reflectors RM2 may include at least two reflectors RM2 whose positions in one direction along the fiducial surface FMS (for example, in the X-axis direction) are different from each other. In the example illustrated in FIG. 25, the position of reflector RM2#1 in the X-axis direction, the position of reflector RM2#2 in the X-axis direction, and the position of reflector RM2#3 in the X-axis direction are different from one another. Moreover, the three reflectors RM2 may include at least two reflectors RM2 whose positions in another direction along the fiducial surface FMS (for example, in the Y-axis direction) are different from each other. In the example illustrated in FIG. 25, the position of reflector RM2#3 in the Y-axis direction is different from each of the position of reflector RM2#1 in the Y-axis direction and the position of reflector RM2#2 in the Y-axis direction. Moreover, the three reflectors RM2 may be disposed on a circumference. The three reflectors RM2 may be disposed on the circumference that is the same as the circumference on which the three reflectors RM1 are disposed. Especially, the three reflectors RM2 may be disposed at equal intervals on the circumference. In the below-described description, the three reflectors RM2 are assumed to be disposed at intervals of 120 degrees on the circumference that is the same as the circumference on which the three reflectors RM1 are disposed. However, the position of reflector RM2 is not limited to the position illustrated in FIG. 25.

The reflector RM1 is an optical system that reflects at least a part of the measurement light ML entering the reflector RM1 toward the measurement head 52 as returning light RL. The reflector RM2 is also an optical system that reflects at least a part of the measurement light ML entering the reflector RM2 toward the measurement head 52 as returning light RL.

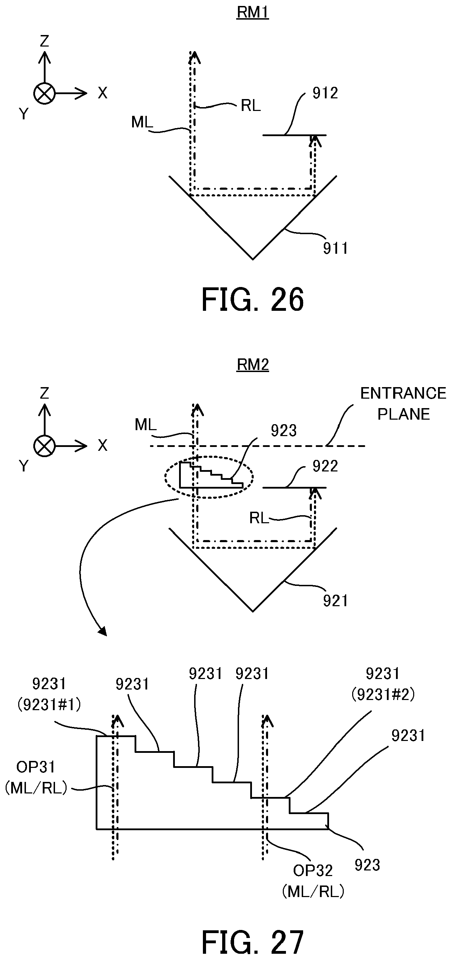

One example of a configuration of the reflector RM1 is illustrated in FIG 26. As illustrated in FIG. 26, the reflector RM1 may include a reflection member 911 and a reflection member 912. The reflection member 911 is an optical element that reflects the measurement light ML entering the reflector RM1 toward the reflection member 912. The reflection member 912 is an optical element that reflects the measurement light ML from the reflection member 911 toward the reflection member 911. The measurement light ML reflected by the reflection member 912 enters the reflection member 911 as the returning light RL. The reflection member 911 reflects the returning light RL entering the reflection member 911 toward the measurement head 52. The reflection members 911 and 912 may be aligned with each other so that the optical path of the measurement light ML is coincident with the optical path of the returning light RL. In an example illustrated in FIG. 26, a double-path corner cube (a kind of so-called retroreflector) in which two mirrors are combined to form a 90-degree angle is used as the reflection member 911.

In a case where this reflector RM1 is used, the control apparatus 7 may calculate a distance between the measurement head 52 and the reflector RM1 in the direction along the optical path of the measurement light ML based on the measured result of the reflector RM1 by the measurement apparatus 5. Namely, the control apparatus 7 may calculate the position of the reflector RM1 in the direction along the optical path of the measurement light ML.

Next, one example of the configuration of the reflector RM2 is then illustrated in FIG. 27. As illustrated in FIG. 27, the reflector RM2 may include a reflection member 921 and a reflection member 922. The reflection members 921 and 922 may be the same as reflection members 911 and 912 described above, respectively. The reflector RM2 further includes an optical path length adjustment element 923. The measurement light ML entering the reflector RM2 enters the optical path length adjustment element 923. The measurement light ML entering the optical path length adjustment element 913 passes through the optical path length adjustment element 923 and enters the reflector 921. In this case, the reflection member 911 reflects the measurement light ML toward the reflection member 912, and the reflection member 912 reflects the measurement light ML as the returning light RL toward the reflection member 911 even in the reflector RM2, as in the reflector RM1. The reflection member 911 reflects the returning light RL toward the optical path length adjustment element 923. The returning light RL entering the optical path length adjustment element 923 passes through the optical path length adjustment element 923 and is emitted from the reflector RM2 toward the measurement head 52.

The optical path length adjustment element 923 has a characteristic of being configured to change an optical path length (in other words, an optical distance) of the measurement light ML and the returning light RL depending on a difference of an entrance position of the measurement light ML. Especially, the optical path length adjustment element 923 has a characteristic of being configured to change the optical path length of the measurement light ML and the returning light RL depending on the difference of the entrance position of the measurement light ML in a direction (in the example illustrated in FIG. 27, a direction along the XY plane) that intersects with the optical path of the measurement light ML entering the fiducial member FM3.

In the example illustrated in FIG. 27, an optical element whose thickness in a direction (in the example illustrated in FIG. 27, the Z-axis direction) along the optical path of the measurement light ML entering the fiducial member FM3 varies in a stepwise manner along a direction intersecting with the optical path of the measurement light ML entering the fiducial member FM3 is used as the optical path length adjustment element 923. In this case, as illustrated in FIG. 27, the optical path length adjustment element 923 may be regarded as an optical element in which a plurality of element parts 9231 whose thicknesses are different from each other are aligned along the direction intersecting with the optical path of the measurement light ML. In this case, the measurement light ML entering one entrance position on an entrance surface of the reflector RM enters one element part 9231 (for example, an element part 9231#1), and the measurement light ML entering another entrance position different from the one entrance position on the entrance surface of the reflector RM enters another element part 9231 (for example, an element part 9231#2) different from the one element part 9231. Here, since the thickness of each element part 9231 is different, the optical path length of the measurement light ML and the returning light RL through one element part 9231 is different from the optical path of the measurement light ML and the returning light RL through another element part 9231 different from the one element part 9231. Specifically, the optical path length of measurement light ML and the returning light RL from one entrance position through one element part 9231 and the reflection members 921 and 922 to a position at which the returning light RL is emitted from reflector RM2 (namely, from one entrance position to one emission position) is different from the optical path length of measurement light ML and the returning light RL from another entrance position through another element part 9231 and the reflection members 921 and 922 to a position at which the returning light RL is emitted from reflector RM2 (namely, from another entrance position to another emission position).

Even in a case where the optical path length adjustment element 923 is disposed, the optical path of the returning light RL may be coincident with the optical path of the measurement light ML. For example, as illustrated in FIG. 27, the measurement head 52 may irradiate the reflection member 921 with the measurement light ML propagating along an optical path OP31 from the fθ lens 5228 through one element part 9231 (for example, the element part 9231#1). Furthermore, the measurement head 52 may optically receive the light component, which propagates along the optical path OP31 through the one element part 9231(for example, the element part 9231#1), of the light from the reflection members 921 and 922 as the returning light RL from the reflection members 921 and 922. For example, the measurement head 52 may irradiate the reflection member 921 with the measurement light ML propagating along an optical path OP32 from the fθ lens 5228 through another element part 9231 (for example, the element part 9231#2). Furthermore, the measurement head 52 may optically receive the light component, which propagates along the optical path OP32 through the another element part 9231(for example, the element part 9231#2), of the light from the reflection members 921 and 922 as the returning light RL from the reflection members 921 and 922.

In a case where this reflector RM2 is used, the control apparatus 7 may calculate a position of the reflector RM2 in a direction intersecting with the optical path of the measurement light ML based on the measured result of the reflector RM2 by the measurement apparatus 5. This is because, the entrance position of the measurement light ML on the optical path length adjustment element 923 changes as the position (for example, the position relative to the measurement head 52) of the reflector RM2 in the direction intersecting with the optical path of the measurement light ML changes. When the entrance position of the measurement light ML on the optical path length adjustment element 923 changes, the optical path length of the measurement light ML and the returning light RL changes. When the optical path length of the measurement light ML and the returning light RL changes, a timing at which the pulsed light appears in the interfering light detected by the above-described detector 5226 changes. Therefore, the detected result of the interfering light by the detector 5226 includes information related to the position of the reflector RM2 in the direction intersecting with the optical path of the measurement light ML. Therefore, the distance from the measurement head 52 to the reflector RM2 calculated by the control apparatus 7 changes depending on the position of the reflector RM2 in the direction intersecting with the optical path of the measurement light ML. Namely, the control apparatus 7 may calculate the distance from the measurement head 52 to the reflector RM2, which changes depending on the position of the reflector RM2 in the direction intersecting with the optical path of the measurement light ML. Especially, the control apparatus 7 may calculate the distance from the measurement head 52 to the reflector RM2, which changes depending on the position of the reflector RM2 in an optical path length changing direction of the optical path length adjustment element 923. Note that the optical path length changing direction is a direction that satisfies such a condition that "the optical path length changes when the entrance position of the measurement light ML changes along the optical path length changing direction". In the example illustrated in FIG. 27, the thickness of the optical path length adjustment element 923 varies in a stepwise manner depending on the position of the optical path length adjustment element 923 in the X-axis direction, and therefore, the optical path length changing direction may be regarded to be the X-axis direction.

In the present example embodiment, the three reflectors RM2 may be disposed so that the optical path length change directions thereof are different from each other. In FIG. 25, the light path length changing direction of each of the three reflectors RM2 is illustrated by using an arrow. In the example illustrated in FIG. 25, the three reflectors RM2 are disposed so that the optical path length change directions thereof are shifted by 120 degrees. However, at least two of the three reflectors RM2 may be disposed so that the optical path length change directions thereof are the same direction.

The control apparatus 7 may calculate the movement error Ez based on the measured result of the three reflectors RM1 and the three reflectors RM2. For example, the control apparatus 7 may calculate at least one of the movement error Ezz, the movement error E_{AZ}, and the movement error E_{BZ} based on the measured result of the three reflectors RM1. For example, the control apparatus 7 may calculate at least one of the movement error Exz, the movement error E_{XZ}, and the movement error E_{CZ} based on the measured result of the three reflectors RM2.

In order to calculate at least one of the movement error Ezz, the movement error E_{AZ}, and the movement error E_{BZ}, the control apparatus 7 may calculate distances between the measurement head 52 and the three reflectors RM1 in the direction along the Z-axis (namely, the Z positions of the three reflectors RM1) based on the detected result of the returning light RL from the three reflectors RM1. Incidentally, in the below-described description, the distances between the measurement head 52 and reflectors RM1#1, RM1#2, and RM1#3 are described by using reference signs Dz1, Dz2, and Dz3, respectively.

Then, the control apparatus 7 may calculate, based on the Z positions of the three reflectors RM1 (namely, the distances Dz1, Dz2, and Dz3), a position Dz0 of the fiducial member FM3 in the Z-axis direction, a rotational angle (a rotational amount) θa of the fiducial member FM3 in the rotational direction around the A-axis, and a rotational angle (a rotational amount) θb of the fiducial member FM3 in the rotational direction around the B-axis. For example, the control apparatus 7 may calculate an average value Dzav of the Z positions of the three reflectors RM1 (for example, (Dz1 + Dz2 + Dz3) / 3) as the position Dz0 of the fiducial member FM3. Alternatively, the control apparatus 7 may calculate an average value of the Z positions of the three reflectors RM1 and positions of the three reflectors RM1 (distances Dz4, Dz5 and Dz6 calculated based on the measured result of the three reflectors RM2 described below) (for example, (Dz1+Dz2+Dz3+Dz4+Dz4+Dz4+Dz5+Dz6) / 6) as the average value DZav. For example, the control apparatus 7 may calculate the rotational angle θa by using a formula 1 of "θa = arcsin((ΔDz1-ΔDz2+ΔDz3)/2r)". For example, the control apparatus 7 may calculate the rotational angle θb by using a formula 2 of "θb = arcsin((ΔDz2/cos30°-ΔDz3/cos30°)/2r). Incidentally, "ΔDz1" in the formula 1 is calculated from a formula of "ΔDz1=Dz1-Dzav". "ΔDz2" in the formulas 1 and 2 is calculated from a formula of "ΔDz2=Dz2-Dzav". "ΔDz3" in the formulas 1 and 2 is calculated from a formula of "ΔDz3=Dz3-Dzav". "r" in the formulas 1 and 2 is a radius of the circumference on which the three reflectors RM1 are disposed.

The control apparatus 7 performs the same operation both before the processing head 2 moves along the Z-axis direction and after the processing head 2 moves along the Z-axis direction. As a result, the control apparatus 7 calculates the position Dz0, the rotational angle θa, and the rotational angle θb of the fiducial member FM3 before the processing head 2 moves, and the position Dz0, the rotational angle θa, and the rotational angle θb of the fiducial member FM3 after the processing head 2 moves. Then, the control apparatus 7 may calculate the movement error Ez based on at least one of the position Dz0, the rotational angle θa, and the rotational angle θb.

For example, the control apparatus 7 may calculate the movement error Ezz based on the position Dz0 of the fiducial member FM3. Specifically, in a case where the movement error Ezz does not occur, a difference between the position Dz0 of the fiducial member FM3 before the processing head 2 moves and the position Dz0 of the fiducial member FM3 after the processing head 2 moves should be equal to the target value of the moving distance of the processing head 2 in the Z-axis direction. On the other hand, in a case where the movement error Ezz occurs, the difference between the position Dz0 of the fiducial member FM3 before the processing head 2 moves and the position Dz0 of the fiducial member FM3 after the processing head 2 moves is not equal to the target value of the moving distance of the processing head 2 in the Z-axis direction. Therefore, the control apparatus 7 may calculate the difference between the position Dz0 of the fiducial member FM3 before the processing head 2 moves and the position Dz0 of the fiducial member FM3 after the processing head 2 moves, and calculate a difference between the calculated difference and the target value of the moving distance of the processing head 2 in the Z-axis direction as the movement error E_{ZZ}.

For example, the control apparatus 7 may calculate the movement error E_{AZ} based on the rotational angle θa of the fiducial member FM3. Specifically, in a case where the movement error E_{AZ} does not occur, the rotational angle θa of the fiducial member FM3 after the processing head 2 moves should be equal to the rotational angle θa of the fiducial member FM3 before the processing head 2 moves. On the other hand, in a case where the movement error E_{AZ} occurs, the rotational angle θa of the fiducial member FM3 after the processing head 2 moves is not equal to the rotational angle θa of the fiducial member FM3 before the processing head 2 moves. Therefore, a difference between the rotational angle θa after the processing head 2 moves and the rotational angle θa before the processing head 2 moves corresponds to the movement error E_{AZ}. Therefore, the control apparatus 7 may calculate the difference between the rotational angle θa after the processing head 2 moves and the rotational angle θa before the processing head 2 moves as the movement error E_{AZ}.

For example, the control apparatus 7 may calculate the movement error E_{BZ} based on the rotational angle θb of the fiducial member FM3. Specifically, in a case where the movement error E_{BZ} does not occur, the rotational angle θb of the fiducial member FM3 after the processing head 2 moves should be equal to the rotational angle θb of the fiducial member FM3 before the processing head 2 moves. On the other hand, in a case where the movement error E_{BZ} occurs, the rotational angle θb of the fiducial member FM3 after the processing head 2 moves is not equal to the rotational angle θb of the fiducial member FM3 before the processing head 2 moves. Therefore, a difference between the rotational angle θb after the processing head 2 moves and the rotational angle θb before the processing head 2 moves corresponds to the movement error E_{BZ}. Therefore, the control apparatus 7 may calculate the difference between the rotational angle θb after the processing head 2 moves and the rotational angle θb before the processing head 2 moves as the movement error E_{BZ}.

In order to calculate at least one of the movement error Exz, the movement error E_{YZ}, and the movement error Ecz, the control apparatus 7 may calculate a distance between the measurement head 52 and the reflector RM2, which changes depending on the position of the reflector RM2 in the direction intersecting with the optical path of the measurement light ML (especially, the optical path length change direction), based on the detected result of the returning light RL from the three reflectors RM2. Incidentally, in the below-described description, the distances between the measurement head 52 and reflectors RM2#1, RM2#2, and RM2#3 are described by using reference signs Dz4, Dz5, and Dz6, respectively.

Then, the control apparatus 7 may calculate, based on the distances between the measurement head 52 and the three reflectors RM2 (namely, the distances Dz4, Dz5, and Dz6), a position Dx0 of the fiducial member FM3 in the X-axis direction, a position Dy0 of the fiducial member FM3 in the Y-axis direction, a rotational angle (a rotational amount) θc of the fiducial member FM3 in the rotational direction around the C-axis. For example, the control apparatus 7 may calculate the position Dx0 (actually, a displaced amount in the X-axis direction) by using a formula 3 of "Dx0 = ((Dz4+Dz5-DZ6)/2)". For example, the control apparatus 7 may calculate the position Dy0 (actually, a displaced amount in the Y-axis direction) by using a formula 4 of "Dy0 = ((Dz4/cos30° - Dz5/cos30°)/2". For example, the control apparatus 7 may calculate the rotational angle θc by using a formula 5 of "θc = arcsin((ΔDz4+ΔDz5+ΔDz6)/3)/r)".

The control apparatus 7 performs the same operation both before the processing head 2 moves along the Z-axis direction and after the processing head 2 moves along the Z-axis direction. As a result, the control apparatus 7 calculates the position Dx0, the position Dy0, and the rotational angle θc of the fiducial member FM3 before the processing head 2 moves, and the position Dx0, the position Dy0, and the rotational angle θc of the fiducial member FM3 after the processing head 2 moves. Then, the control apparatus 7 may calculate the movement error Ez based on at least one of the position Dx0, the position Dy0, and the rotational angle θc.

For example, the control apparatus 7 may calculate the movement error Exz based on the position Dx0 of the fiducial member FM3. Specifically, in a case where the movement error Exz does not occur, the position Dx0 of the fiducial member FM3 after the processing head 2 moves should be equal to the position Dx0 of the fiducial member FM3 before the processing head 2 moves. On the other hand, in a case where the movement error Exz occurs, the position Dx0 of the fiducial member FM3 after the processing head 2 moves is not equal to the position Dx0 of the fiducial member FM3 before the processing head 2 moves. Therefore, a difference between the position Dx0 after the processing head 2 moves and the position Dx0 before the processing head 2 moves corresponds to the movement error Exz. Therefore, the control apparatus 7 may calculate the difference between the position Dx0 after the processing head 2 moves and the position Dx0 before the processing head 2 moves as the movement error Exz.

For example, the control apparatus 7 may calculate the movement error E_{YZ} based on the position Dy0 of the fiducial member FM3. Specifically, in a case where the movement error E_{YZ} does not occur, the position Dy0 of the fiducial member FM3 after the processing head 2 moves should be equal to the position Dy0 of the fiducial member FM3 before the processing head 2 moves. On the other hand, in a case where the movement error E_{YZ} occurs, the position Dy0 of the fiducial member FM3 after the processing head 2 moves is not equal to the position Dy0 of the fiducial member FM3 before the processing head 2 moves. Therefore, a difference between the position Dy0 after the processing head 2 moves and the position Dy0 before the processing head 2 moves corresponds to the movement error E_{YZ}. Therefore, the control apparatus 7 may calculate the difference between the position Dy0 after the processing head 2 moves and the position Dy0 before the processing head 2 moves as the movement error E_{YZ}.

For example, the control apparatus 7 may calculate the movement error Ecz based on the rotational angle θc of the fiducial member FM3. Specifically, in a case where the movement error Ecz does not occur, the rotational angle θc of the fiducial member FM3 after the processing head 2 moves should be equal to the rotational angle θc of the fiducial member FM3 before the processing head 2 moves. On the other hand, in a case where the movement error Ecz occurs, the rotational angle θc of the fiducial member FM3 after the processing head 2 moves is not equal to the rotational angle θc of the fiducial member FM3 before the processing head 2 moves. Therefore, a difference between the rotational angle θc after the processing head 2 moves and the rotational angle θc before the processing head 2 moves corresponds to the movement error Ecz. Therefore, control apparatus 7 may calculate the difference between the rotational angle θc after processing head 2 moves and the rotational angle θc before processing head 2 moves as the movement error E_{CZ}.

Incidentally, even in a case where the processing head 2 or the stage 41 moves along the movement direction different from the Z-axis direction (namely, in a case where the movement error other than the movement error Ez is calculated), the control apparatus 7 may calculate the movement error in each of the two linear directions that are different from each other and the movement error in the rotational direction around one rotational axis based on the measured result of the three reflectors RM1 in the same manner. The control apparatus 7 may calculate the movement error in one linear direction and the movement errors in the rotational directions around two rotational axes that are different from each other based on the measured result of the three reflectors RM2. However, in a case where the processing head 2 or the stage 41 moves (namely, rotates) along the rotational direction, the difference between the position Dz0 after the processing head 2 or the stage 41 moves and the position Dz0 before the processing head 2 or the stage 41 moves includes not only a component of the movement error in the Z-axis direction but also a component of the moving distance (the rotational amount) of the processing head 2 or the stage 41 along the rotational direction. Therefore, the control apparatus 7 may calculate the movement in the linear direction by removing the component of the moving distance (the rotational amount) of the processing head 2 or the stage 41 along the rotational direction from the difference between the position Dz0 after the processing head 2 or the stage 41 moves and the position Dz0 before the processing head 2 or the stage 41 moves. The same is true for the differences in each of the position Dx0, the position Dy0, the rotational angle θa, the rotational angle θb, and the rotational angle θc.

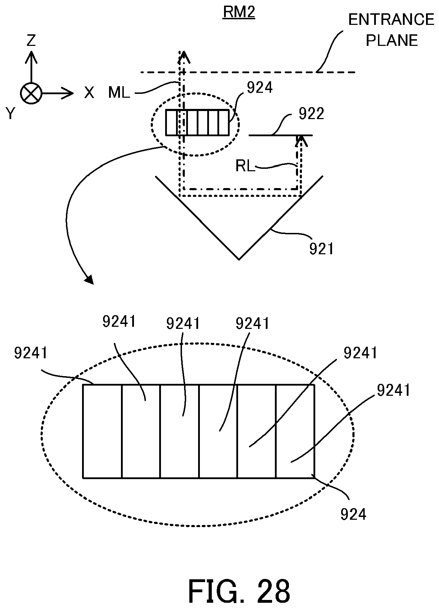

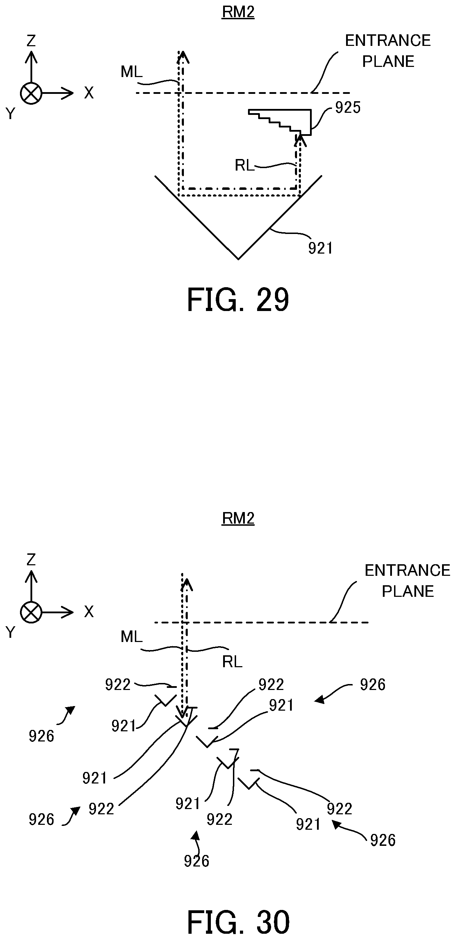

Incidentally, the optical path length adjustment element 923 is not limited to the example illustrated in FIG. 27. For example, as illustrated in FIG. 28, the reflector RM2 may include an optical path length adjustment element 924 instead of the optical path length adjustment element 923. The optical path length adjustment element 924 is an optical member in which a plurality of optical elements 9241 having different refractive indices are stacked along a direction intersecting with the optical path of the measurement light ML, compared to the optical path length adjustment element 924. Thicknesses (specifically, sizes in the direction along the optical path of the measurement light ML) of the plurality of optical elements 9241 may be the same. Even in this case, the optical path length of the measurement light ML and the returning light RL changes due to the difference of the refractive index of the optical element 9241 into which the measurement light ML enters. Alternatively, for example, as illustrated in FIG. 29, the reflector RM2 may include a reflection member 925 instead of the optical path length adjustment element 923 and the reflection member 922. The reflection member 925 may be different from the reflection member 922 in that a position of a reflection surface reflecting the measurement light ML changes along a direction intersecting with the irradiation direction of the measurement light ML. Even in this case, the optical path length of the measurement light ML and the returning light RL changes due to the difference of the position of the reflection surface into which the measurement light ML enters. Alternatively, for example, as illustrated in FIG. 30, the reflector RM2 may include a plurality of reflection members 926 instead of the optical path length adjustment elements 923. Each reflection member 926 includes the reflection members 921 and 922. The plurality of reflection members 926 are aligned along a direction intersecting with the optical path of the measurement light ML. The plurality of reflection members 926 are disposed at positions that are different from each other along the optical path of the measurement light ML. Even in this case, the optical path length of the measurement light ML and the returning light RL changes due to the difference of the position (the position along the optical path of the measurement light ML) of the reflection member 926 into which the measurement light ML enters.

### (3) Technical Effect of Machine Tool 1

As described above, in the present example embodiment, the control apparatus 7 may calculate the movement error occurring in the movement of at least one of the processing head 2 and the stage 41 based on the measured result of the fiducial member FM. Especially, the control apparatus 7 may calculate the movement errors in the plurality of movement directions occurring in the movement of at least one of the processing head 2 and stage 41 based on the measured result of the single fiducial member FM by the single measurement apparatus 5. Therefore, it is possible to reduce a time required for calculating the movement errors in the plurality of movement directions, compared to a machine tool in the comparative example that needs to measure a plurality of fiducial members and / or that needs to measure the fiducial member by using a plurality of measurement apparatuses in order to calculate the movement errors in the plurality of movement directions. Furthermore, it is also possible to reduce a load required for calculating the movement errors in the plurality of movement directions.

Incidentally, the control apparatus 7 may calibrate an attachment error of the measurement head 52 to the processing head 2. Even in at least one of first to seventh modified examples described below, the control apparatus 7 may calibrate the attachment error of the measurement head 52 to the processing head 2.

For example, a fiducial member for calibrating the attachment error of the measurement head 52 to the processing head 2 may be placed on the stage 41, and the control apparatus 7 may calculate a position and an attitude of the placed fiducial member in advance by using an existing method. Then, the control apparatus 7 may calculate the position and the attitude of the fiducial member by using the measurement head 52 attached to the processing head 2. The control apparatus 7 may calibrate the attachment error of the measurement head 52 to the processing head 2 based on a difference between the position and the attitude of the fiducial member calculated in advance and the position and the attitude of the fiducial member calculated by using the measurement head 52 attached to the processing head 2.

For example, in a case where the movement error of the machine tool 1 in which the measurement head 52 is attached to the main spindle 21 of the processing head 2 is calculated, a touch probe may be attached to the main spindle 21 firstly, and the control apparatus 7 may calculate the position and the attitude of the fiducial member for calibrating the attachment error by using the touch probe. In this case, the control apparatus 7 may calculate an average value of coordinates calculated by bringing the touch probe into contact with measurement points of the fiducial member each time the main spindle 21 is rotated by a predetermined angle. For example, in a case where the coordinate is calculated by bringing the touch probe into contact with the fiducial member each time the main spindle 21 is rotated by 90 degrees, the control apparatus 7 may calculate the average of four coordinates calculated by bringing the touch probe into contact four times. Similarly, the control apparatus 7 may calculate a coordinate average value of another measurement point necessary to calculate the position and the attitude of the fiducial member. Then, the control apparatus 7 may calculate the position and the attitude of the fiducial member based on the calculated coordinate average value of each measurement point of the fiducial member. Then, the control apparatus 7 changes the touch probe attached to the main spindle 21 with the measurement head 52 and calculates the position and the attitude of the fiducial member by using the measurement head 52. Then, the control apparatus 7 may calibrate the attachment error of the measurement head 52 to the main spindle 21 of the processing head 2 based on a difference between the position and the attitude of the fiducial member calculated by using the touch probe and the position and the attitude of the fiducial member calculated by using the measurement head 52. In this case, it is possible to reduce an influence of the attachment error of the touch probe to the main spindle 21 relative to the calculated result of the measurement points by calculating the average value of the coordinates calculated by bringing the touch probe into contact with the measurement points of the fiducial member each time the main spindle 21 is rotated by the predetermined angle.

Incidentally, the position of the fiducial member may include at least a part of an X component (namely, the position in the X-axis direction), a Y component (namely, the position in the Y-axis direction), and a Z component (namely, the position in the Z-axis direction) in the three-dimensional space. The attitude of the fiducial member may include at least a part of a θX component (namely, a position in the θX direction), a θY component (namely, a position in the θY direction), and a θZ component (namely, a position in the θZ direction) in the three-dimensional space.

Incidentally, the fiducial member used to calibrate the attachment error of the measurement head 52 on the processing head 2 may be always disposed on the stage 41. Alternatively, the fiducial member may be placed on the stage 41 only when the attachment error is calibrated. Note that a position at which the fiducial member is placed may not be the stage 41. The fiducial member may be placed at any position as long as it is placed at a position that can be measured by the measurement head 52 attached to the processing head 41.

Moreover, the fiducial member used to calibrate the attachment error of the measurement head 52 on the processing head 2 may be at least one of the above-described fiducial members FM1, FM2, and FM3. For example, in a case where the fiducial member FM1 is used to calibrate the attachment error of the measurement head 52 to the processing head 2, the control apparatus 7 may calculate the position and the attitude of the fiducial member FM1 by measuring the grid pattern GP of the fiducial member FM1 with the measurement head 52 as described above.

### (4) Modified Example

Next, a modified example of the machine tool 1 will be described.

### (4-1) First Modified Example

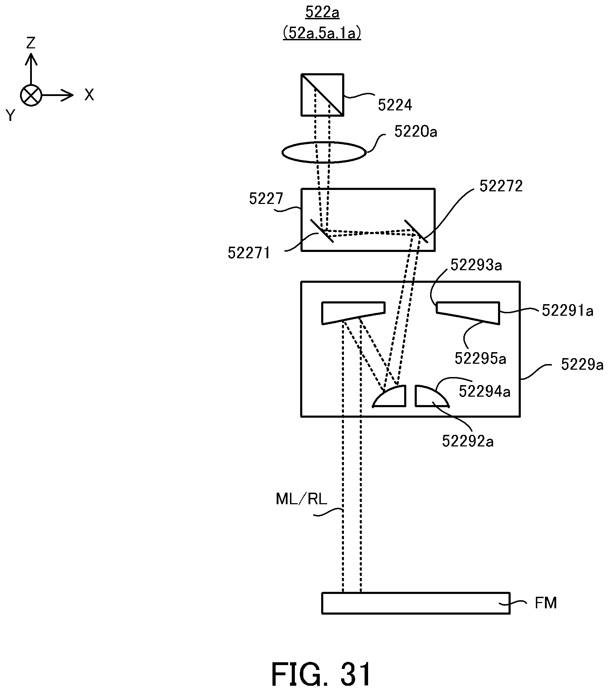

Firstly, a first modified example of the machine tool 1 will be described. In the below-described description, the first modified example of the machine tool 1 is referred to as a "machine tool 1a". The machine tool 1a is different from the machine tool 1 in that it includes a measurement apparatus 5a instead of the measurement apparatus 5. Another feature of the machine tool 1a may be the same as another feature of the machine tool 1. The measurement apparatus 5a is different from the measurement apparatus 5 in that it includes a measurement head 52a instead of the measurement head 52. Another feature of the measurement apparatus 5a may be the same as another feature of the measurement apparatus 5. The measurement head 52a is different from the measurement head 52 in that it includes an optical system 522a instead of the optical system 522. Another feature of the measurement head 52a may be the same as another feature of the measurement head 52. The optical system 522a is different from the optical system 522 in that it is configured to irradiate the measurement target object with the measurement light ML that is collimated light (namely, collimated light). Next, with reference to FIG. 31, the optical system 522a in the first modified example will be described. FIG. 31 is a cross-sectional view that illustrates a configuration of the optical system 522a in the first modified example.

As illustrated in FIG. 31, the optical system 522a is different from the optical system 522 in that it includes a condensing optical system 5220a and it includes a reflection optical system 5229a instead of the fθ lens 5228. Another feature of the optical system 522a may be the same as another feature of the optical system 522. For simplification of the drawing, a part of the optical elements of the optical system 522a is omitted in FIG. 31.

The condensing optical system 5220a condenses the measurement light ML in the vicinity of the X scanning mirror 52271 and the Y scanning mirror 52272 of the Galvano mirror 5227, typically between the X scanning mirror 52271 and the Y scanning mirror 52272 of the Galvano mirror 5227. The reflection optical system 5229a reflects the measurement light ML emitted from the Galvano mirror 5227 toward the measurement target object (for example, the fiducial member FM). In an example illustrated in FIG. 31, the reflection optical system 5229a includes a reflection optical element 52291a and a reflection optical element 52292a, and has a finite focal length. The measurement light ML emitted from the Galvano mirror 5227 enters a reflection surface 52294a of the reflection optical element 52292a through an aperture 52293a formed in the reflection optical element 52291a. The reflection surface 52294a reflects the measurement light ML toward a reflection surface 52295a of the reflection optical element 52291a that faces the reflection surface 52294a. The reflection surface 52295a reflects the measurement light ML toward the measurement target object that faces the reflection surface 52295a. Here, since the measurement light ML is condensed (a condensed point is formed) at a front (entrance side) focal position of the reflection optical system 5229a by the condensing optical system 5220a, the measurement target object can be irradiated with the measurement light ML that is the collimated light.

In a case where the measurement target object is irradiated with the measurement light ML that is the collimated light, there is a lower possibility that the measurement accuracy varies due to a defocusing of the measurement light ML, compared to a case where the measurement target object is irradiated with the measurement light ML that is the converged light. As a result, there is a lower possibility that the measurement accuracy varies due to the movement (especially, the movement in the direction along the optical path of the measurement light ML) of at least one of the processing head 2 and the stage 41. Therefore, the measurement apparatus 5a can measure the fiducial member FM with a certain measurement accuracy even in a case where the fiducial member FM is measured while moving at least one of the processing head 2 and the stage 41. Therefore, the control apparatus 7 can calculate the movement error with relatively high accuracy without being affected by the variation of the measurement accuracy of the measurement apparatus 5a. Incidentally, in the first modified example, the returning light RL is collimated light beam, which propagates backwardly along the optical path of the measurement light ML that is the collimated light, of the light from the fiducial member FM generated by the irradiation of the measurement light ML.

### (4-2) Second Modified Example

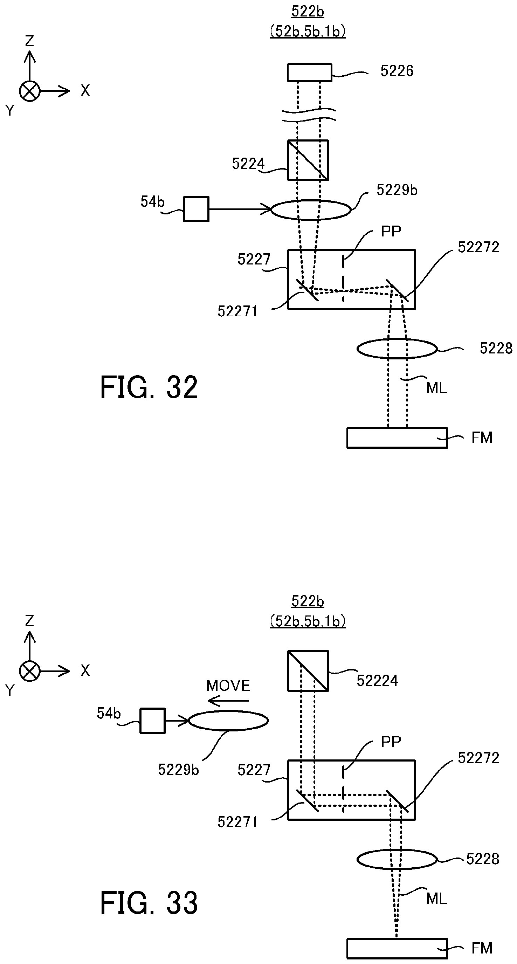

Next, a second modified example of the machine tool 1 will be described. In the below-described description, the second modified example of the machine tool 1 is referred to as a "machine tool 1b". The machine tool 1b is different from the machine tool 1 in that it includes a measurement apparatus 5b instead of the measurement apparatus 5. Another feature of the machine tool 1b may be the same as another feature of the machine tool 1. The measurement apparatus 5b is different from the measurement apparatus 5 in that it includes a measurement head 52b instead of the measurement head 52. Another feature of the measurement apparatus 5b may be the same as another feature of the measurement apparatus 5. The measurement head 52b is different from the measurement head 52 in that it includes an optical system 522b instead of the optical system 522. Another feature of the measurement head 52b may be the same as another feature of the measurement head 52. The optical system 522b is different from the optical system 522 in that it is configured to irradiate the measurement target object with the measurement light ML that is collimated light (namely, collimated light). Next, with reference to FIG. 32, the optical system 522b in the second modified example will be described. FIG. 32 is a cross-sectional view that illustrates a configuration of the optical system 522b in the second modified example.

As illustrated in FIG. 32, the optical system 522b is different from the optical system 522 in that it includes a condensing optical system 5229b. Another feature of the optical system 522b may be the same as another feature of the optical system 522.

The condensing optical system 5229b is disposed on the optical path of the measurement light ML and the returning light RL between the fθ lens 5228 and the detector 5226. In an example illustrated in FIG. 32, the condensing optical system 5229b is disposed on the optical path of the measurement light ML and the returning light RL between the beam splitter 5224 and the Galvano mirror 5227. The condensing optical system 5229b forms a condensed position of the measurement light ML at a focal position PP of the fθ lens 5228 on the detector 5226 side (alternatively, in the vicinity of the focal position PP, the same is applied in the below-described description). The focal position PP of the fθ lens 5228 on the detector 5226 side may be regarded to be equivalent to a focal position of the fθ lens 5228 on the main spindle 21 side. The focal position PP of the fθ lens 5228 on the detector 5226 side may be regarded to be equivalent to a focal position of the fθ lens 5228 on the processing head 2 side. The focal position PP of the fθ lens 5228 on the detector 5226 side may be regarded to be equivalent to a focal position of the fθ lens 5228 on a side opposite to the measurement target object side. The focal position PP of the fθ lens 5228 on the detector 5226 side may be regarded to be equivalent to a focal position of the fθ lens 5228 on a side opposite to the stage 41 side. The focal position PP of the fθ lens 5228 on the detector 5226 side may be coincident with an entrance pupil position of the fθ lens 5228. In an example illustrated in FIG. 32, the focal position PP of the fθ lens 5228 on the detector 5226 side is located in the Galvano mirror 5227. The focal position PP of the fθ lens 5228 on the detector 5226 side is located on the optical path between X scanning mirror 52271 and Y scanning mirror 52272 of the Galvano mirror 5227. However, the focal position PP of the fθ lens 5228 on the detector 5226 side is not limited to the position illustrated in FIG. 32. The focal position PP of the fθ lens 5228 on the detector 5226 side may be located at a position that is unrelated to the Galvano mirror 5227. The focal position PP of the fθ lens 5228 on the detector 5226 side may be located at an appropriate position on the optical path between the fθ lens 5228 and the detector 5226, even in a case where the measurement head 52b does not include the Galvano mirror 5227.

In the example illustrated in FIG. 32, the condensing optical system 5229b includes a single lens (namely, a refractive optical element). However, the condensing optical system 5229b may include a plurality of refractive optical elements. The condensing optical system 5229b may not include the refractive optical element. The condensing optical system 5229b may include at least one reflection optical element.

As a result, as illustrated in FIG. 32, the measurement light ML that is the collimated light is emitted from the fθ lens 5228. Therefore, the control apparatus 7 can calculate the movement error with relatively high accuracy without being affected by the variation of the measurement accuracy of the measurement apparatus 5b even in the second modified example, as in the first modified example. Incidentally, in the second modified example, the returning light RL is collimated light beam, which propagates backwardly along the optical path of the measurement light ML that is the collimated light, of the light from the fiducial member FM generated by the irradiation of the measurement light ML.

The condensing optical system 5229b may be movable relative to the optical path of the measurement light ML and the returning light RL. Specifically, for example, the measurement head 52b may include a driving system 54b that is configured to move the condensing optical system 5229b. The driving system 54b may insert and / or extract the condensing optical system 5229b relative to the optical path of the measurement light ML and the returning light RL by moving the condensing optical system 5229b. The driving system 54b may switch a state of the condensing optical system 5229b between a state in which the condensing optical system 5229b is located on the optical path of the measurement light ML and the returning light RL and a state in which the condensing optical system 5229b is not located on the optical path of the measurement light ML and the returning light RL by moving the condensing optical system 5229b.

In a case where the condensing optical system 5229b is located on the optical path of the measurement light ML and the returning light RL, the measurement light ML emitted from the fθ lens 5228 is the collimated light, as illustrated in FIG. 32. On the other hand, in a case where the condensing optical system 5229b is not located on the optical path of the measurement light ML and the returning light RL, the measurement light ML emitted from the fθ lens 5228 is the converged light as illustrated in FIG. 33.

The driving system 54b may switch the state of the condensing optical system 5229b between the state in which the condensing optical system 5229b is located on the optical path of the measurement light ML and the returning light RL and the state in which the condensing optical system 5229b is not located on the optical path of the measurement light ML and the returning light RL, depending on a type of the measurement target object. For example, in a case where the measurement target object is a first obj ect, the driving system 54b may move the condensing optical system 5229b so that the condensing optical system 5229b is located on the optical path of the measurement light ML and the returning light RL. For example, in a case where the measurement target object is a second object different from the first object, the driving system 54b may move the condensing optical system 5229b so that the condensing optical system 5229b is not located on the optical path of the measurement light ML and the returning light RL.

As one example, for example, in a case where the fiducial member FM is placed on the stage 41 as the measurement target object, the driving system 54b may move the condensing optical system 5229b so that the condensing optical system 5229b is located on the optical path of the measurement light ML and the returning light RL. In this case, as described above, the control apparatus 7 can calculate the measurement error with relatively high accuracy without being affected by the variation of the measurement accuracy of the measurement apparatus 5b. On the other hand, for example, in a case where the measurement target object is the workpiece W, the driving system 54b may move the condensing optical system 5229b so that the condensing optical system 5229b is not located on the optical path of the measurement light ML and returning light RL. In this case, the measurement apparatus 5 can measure the workpiece W with relatively high measurement accuracy because the diameter of the spot formed by the measurement light ML on the surface of the workpiece W is relatively small as described above.

Incidentally, the machine tool 1a in the first modified example described above may include a feature unique to the second modified example. The feature unique to the second modified example may include a feature related to the optical system 522b.

Incidentally, the condensing optical system 5220a in the above-described first modified example may be the same as the condensing optical system 5229b in the second modified example. Namely, the condensing optical system 5229b in the second modified example may be used as the condensing optical system 5220a in the above-described first modified example. In this case, an arrangement relationship between the condensing optical system 5220a and the Galvano mirror 5227 in the first modified example may be the same as an arrangement relationship between the condensing optical system 5229b and the Galvano mirror 5227 in the second modified example.

Incidentally, in the first and second modified examples described above, the measurement light ML that is the collimated light is generated by disposing the condensing optical system 5220a or 5229b at a position that is away from the fθ lens 5228 and the reflection optical system 5229a that are the objective optical systems toward the light source and / or the detector side. However, the measurement light ML that is the collimated light may be generated by disposing a diverging optical system at a position that is away from the fθ lens 5228 and the reflection optical system 5229a that are the objective optical systems toward the fiducial member FM side and / or the workpiece W side. In this case, the diverging optical system typically has a negative focal length, and its focal position is coincide with the focal plane of the fθ lens 5228 and the reflection optical system 5229a that are the objective optical systems. Moreover, the diverging optical system may be moved so that an optical axis of the diverging optical system is coaxial with a beam center of the measurement light ML to follow the irradiation position of the measurement light ML on the fiducial member FM or on the workpiece W. Incidentally, the diverging optical system may not be moved, and a similar diverging optical system may be disposed on the respective optical paths of the measurement light ML from the fθ lens 5228 that may change due to the change of the irradiation position of the measurement light ML on the fiducial member FM or on the workpiece W.

### (4-3) Third Modified Example

Next, a third modified example of the machine tool 1 will be described. In the below-described description, the first modified example of the machine tool 1 is referred to as a "machine tool 1c". The machine tool 1c is different from the machine tool 1 in that a measurement field of view MSA may partially overlap in a case where the measurement target object is measures while changing the positional relationship between the measurement head 52 and the measurement target object along the direction intersecting with the optical path of the measurement light ML (namely, the direction intersecting with the propagating direction of the measurement light ML). Another feature of the machine tool 1c may be the same as another feature of the machine tool 1.

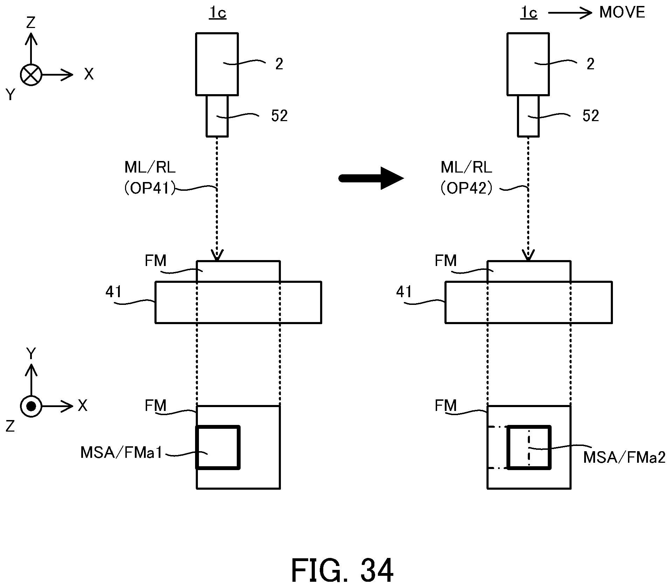

Specifically, as illustrated in FIG. 34 illustrating the measurement head 52 that irradiates the fiducial member FM, which is one example of the measurement target object, with the measurement light ML, the measurement head 52 may measure a first part FMa1 of the fiducial member FM1 in a case where the positional relationship between the stage 41 and the processing head 2 in the direction intersecting with the optical path of the measurement light ML (in the example illustrated in FIG. 34, the X-axis direction) is a first relationship. Specifically, at least one of the head driving system 3 and the stage driving system 42 may move at least one of the processing head 2 (furthermore, the measurement head 52) and the stage 41 so that the positional relationship between the stage 41 and the processing head 2 in the direction intersecting with the optical path of the measurement light ML is the first relationship in which the first part FMa1 of the fiducial member FM is included in the measurement field of view MSA of the measurement apparatus 5. The measurement field of view MSA may be a scanning area that can be scanned by the Galvano mirror 5527 with the measurement light ML in a state where the positional relationship between the measurement head 52 and the fiducial member FM is fixed. Namely, the measurement field of view MSA may be a scanning area that can be scanned by the Galvano mirror 5527 with the measurement light ML in a state where the processing head 2 does not move (furthermore, the measurement head 52 does not move) and the stage 41 does not move. Then, the measurement head 52 may irradiate the first part FMa1 with the measurement light ML propagating along an optical path OP41 from the fθ lens 5228. Furthermore, the measurement head 52 may optically receive the light component, which propagates along the optical path OP41, of the light from the first part FMa1 generated by the measurement light ML with which the first part FMa1 is irradiated as the returning light RL from the first part FMa1. Then, at least one of the head driving system 3 and the stage driving system 42 may move at least one of the processing head 2 (furthermore, the measurement head 52) and the stage 41 so that the positional relationship between the stage 41 and the processing head 2 in the direction intersecting with the optical path of the measurement light ML is a second relationship in which a second part FMa2 of the fiducial member FM is included in the measurement field of view MSA of the measurement apparatus 5. The second part FMa2 partially overlaps the first part FMa1. Namely, the second part FMa2 includes a part of the first part FMa1. Conversely, the first part FMa1 includes a part of the second part FMa2. Then, the measurement head 52 may irradiate the second part FMa2 with the measurement light ML propagating along an optical path OP42 from the fθ lens 5228. Furthermore, the measurement head 52 may optically receive the light component, which propagates along the optical path OP42, of the light from the second part FMa2 generated by the measurement light ML with which the second part FMa2 is irradiated as the returning light RL from the second part FMa2. The machine tool 1c may repeat the above-described operation as many times as necessary.

Then, the control apparatus 7 may calculate the movement error based on the measured results by the measurement apparatus 5 including the measured result of the first part FMa1 and the second part FMa2. Specifically, the control apparatus 7 may calculate a position of the first part FMa1 based on the detected result of the returning light RL from the first part FMa1. The control apparatus 7 may calculate a position of the second part FMa2 based on the detected result of the returning light RL from the second part FMa2. Then, the control apparatus 7 may merge the calculated result of the position of the first part FMa1 and the calculated result of the position of the second part FMa2. Specifically, the control apparatus 7 calculates a position of a feature point that is common to the first part FMa1 and the second part FMa2 based on the calculated result of the position of the first part FMa1. Furthermore, the control apparatus 7 calculates the position of the feature point that is common to the first part FMa1 and the second part FMa2 based on the calculated result of the position of the second part FMa2. Then, the control apparatus 7 may merge the calculated result of the position of the first part FMa1 and the calculated result of the position of the second part FMa2 so that the calculated positions of the feature point are coincident with each other. Then, the control apparatus 7 may calculate the movement error based on a merged result.

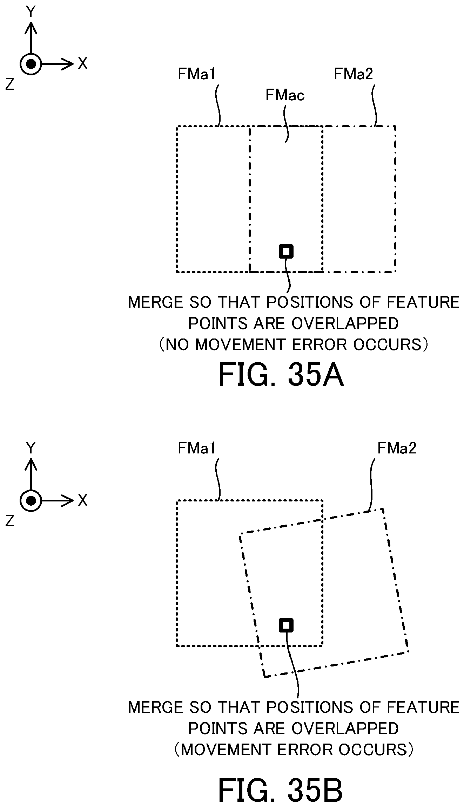

Here, in a case where the movement error does not occur, the first part FMa1 and the second part FMa2 are merged so as to be overlapped with each other exactly through a common part FMac that is common to both of the first part FMa1 and the second part FMa2, as illustrated in FIG. 35A that schematically illustrates the merged result in a case where the movement error does not occur. On the other hand, in a case where the movement error occurs, the first part FMa1 and the second part FMa2 are merged so as to have an misalignment due to the movement error, as illustrated in FIG. 35B that schematically illustrates the merged result in a case where the movement error occurs. Therefore, the control apparatus 7 may calculate the movement error by calculating the misalignment between the first part FMa1 and the second part FMa2 that appears in the merged result. Next, an example of calculating the movement error Ex will be described.

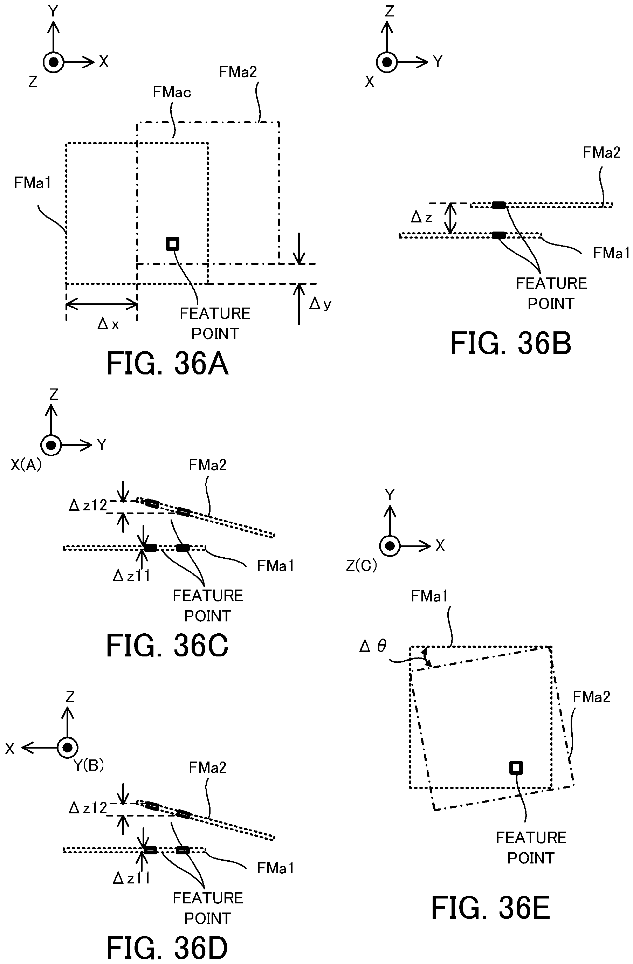

For example, as illustrated in FIG. 36A, the control apparatus 7 may calculated the movement error E_{XX} based on an misalignment amount Δx in the X-axis direction between an edge of the first part FMa1 (namely, an edge of the measurement field of view MSA in a case where the first part FMa1 is measured) and an edge of the second part FMa2 (namely, an edge of the measurement field of view MSA in a case where the second part FMa2 is measured). Specifically, in a case where the movement error Exx does not occurs, the misalignment amount Δx should be equal to the target value of the moving distance of the processing head 2 in the X-axis direction. On the other hand, in a case where the movement error Exx occurs, the misalignment amount Δx is not equal to the target value of the moving distance of the processing head 2 in the X-axis direction. Therefore, the control apparatus 7 may calculate the misalignment amount Δx and calculate a difference between the calculated misalignment amount Δx and the target value of the moving distance of the processing head 2 in the X-axis direction as the movement error E_{XX}.

For example, as illustrated in FIG. 36A, the control apparatus 7 may calculated the movement error E_{YX} based on an misalignment amount Δy in the Y-axis direction between the edge of the first part FMa1 and the edge of the second part FMa2. Specifically, in a case where the movement error E_{YX} does not occurs, the misalignment amount Δy should be zero. On the other hand, in a case where the movement error E_{YX} occurs, the misalignment amount Δy is not zero. Therefore, the control apparatus 7 may calculate the misalignment amount Δy as the movement error E_{YX}.

For example, as illustrated in FIG. 36B, the control apparatus 7 may calculated the movement error Ezx based on an misalignment amount Δz in the Z-axis direction between the feature point of the first part FMa1 and the feature point of the second part FMa2. Specifically, in a case where the movement error Ezx does not occurs, the misalignment amount Δz should be zero. On the other hand, in a case where the movement error Ezx occurs, the misalignment amount Δz is not zero. Therefore, the control apparatus 7 may calculate the misalignment amount Δz as the movement error Ezx.

For example, as illustrated in FIG. 36C, the control apparatus 7 may calculate the movement error E_{AX} based on a difference Δz11 between Z positions of two feature points of the first part FMa1 located at positions that are different from each other along the Y-axis direction and a difference Δz12 between Z positions of the same two feature points of the second part FMa2 located at the positions that are different from each other along the Y-axis direction. Specifically, in a case where the movement error E_{AX} does not occurs, the difference Δz11 should be equal to the difference Δz12. On the other hand, in a case where the movement error E_{AX} occurs, the difference Δz11 is not equal to the difference Δz12. Therefore, the control apparatus 7 may calculate the difference Δz11 and the difference Δz12, and calculate a difference between the difference Δz11 and the difference Δz12 as the movement error Eax.

For example, as illustrated in FIG. 36D, the control apparatus 7 may calculate the movement error E_{BX} based on a difference Δz21 between Z positions of two feature points of the first part FMa1 located at positions that are different from each other along the X-axis direction and a difference Δz22 between Z positions of the same two feature points of the second part FMa2 located at the positions that are different from each other along the X-axis direction. Specifically, in a case where the movement error E_{BX} does not occurs, the difference Δz21 should be equal to the difference Δz22. On the other hand, in a case where the movement error E_{BX} occurs, the difference Δz21 is not equal to the difference Δz22. Therefore, the control apparatus 7 may calculate the difference Δz21 and the difference Δz22, and calculate a difference between the difference Δz21 and the difference Δz22 as the movement error Eax.

For example, as illustrated in FIG. 36E, the control apparatus 7 may calculated the movement error Ecx based on a difference Δ between a rotational amount of the first part FMa1 around the C-axis (namely, a rotational amount of the measurement field of view MSA in a case where the first part FMa1 is measured) and a rotational amount of the second part FMa2 around the C-axis (namely, a rotational amount of the measurement field of view MSA in a case where the second part FMa2 is measured). Specifically, in a case where the movement error Ecx does not occurs, the difference Δ should be zero. On the other hand, in a case where the movement error Ecx occurs, the difference Δ is not zero. Therefore, the control apparatus 7 may calculate the difference Δ as the movement error Ecx.

In the above-described third modified example, the control apparatus 7 may perform the movement error calculation operation by using the workpiece W and the like. processed by the processing head 2 without using the fiducial member FM. Specifically, at least one of the processing head 2 and the stage 41 usually moves so that the processing for making the shape of the workpiece be the desired shape is performed on the workpiece W. Here, in a case where the movement error occurs, at least one of the processing head 2 and the stage 41 moves along a movement path that is different from the designed movement path (for example, the movement path indicated by the above-described movement path information). Therefore, the shape of the processed workpiece W is different from the desired shape. For example, the shape of the processed workpiece W is a shape to which a distortion of the guide member of at least one of the head driving system 3 and the stage driving system 41, which is one factor of the movement error, is reflected. Even in a case where the measurement apparatus 5 processes this workpiece W, since the measurement head 52 moves together with the processing head 2, the movement error, which occurs in the movement of the processing head 2 in processing the workpiece W, occurs in the movement of the measurement head 52 in measuring the workpiece W. Therefore, the measured result of the workpiece W by the measurement head 52 that has moved along the movement path including the movement error incorrectly indicate that the shape of the workpiece W is the desired shape. However, in a case where the measurement apparatus 5 measures the workpiece W in a state where at least one of the processing head 2 and the stage 41 is stopped as described above, the measurement apparatus 5 can accurately measure the position (the shape) of at least a part of the workpiece W that is included in the measurement field of view MSA. Therefore, the movement error occurring in the movement of at least one of the processing head 2 and the stage 41 appears as the misalignment between the measured result of the first part of the workpiece W and the measured result of the second part of the workpiece W that partially overlaps with the first part, as illustrated in FIG. 36A to FIG. 36E. Therefore, the control apparatus 7 may perform the movement error calculation operation by using the workpiece W (alternatively, any other object) processed by the processing head 2, without using the fiducial member FM.

Incidentally, at least one of the machine tool 1a in the first modified example to the machine tool 1b in the second modified example described above may include a feature unique to the third modified example. The feature unique to the third modified example may include a feature related to a measurement of a first part of the measurement target object and a measurement of a second part of the measurement target object that partially overlaps with the first part.

### (4-4) Fourth Modified Example

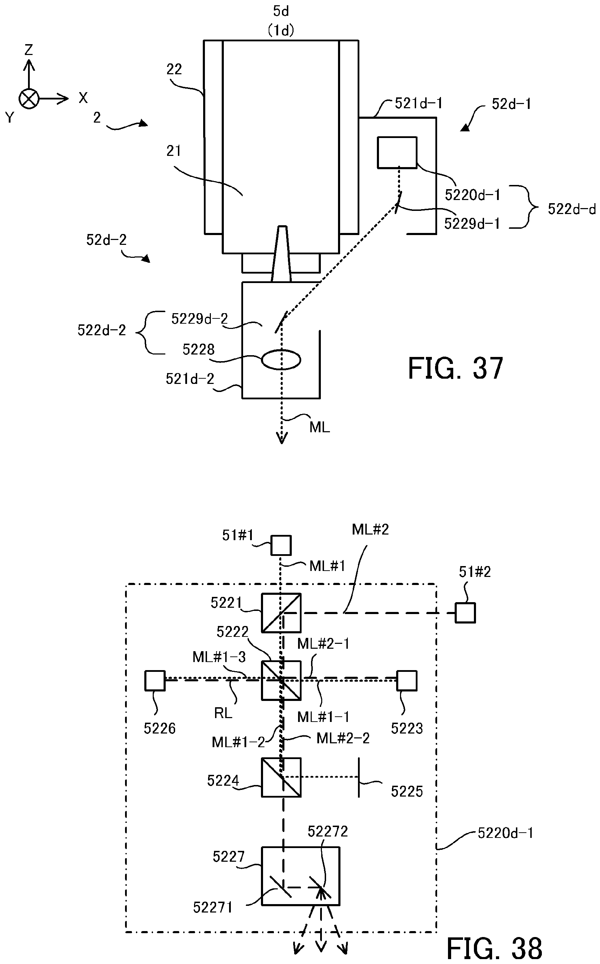

Next, a fourth modified example of the machine tool 1 will be described. In the below-described description, the fourth modified example of the machine tool 1 is referred to as a "machine tool 1d". The machine tool 1d is different from the machine tool 1 in that it includes a measurement apparatus 5d instead of the measurement apparatus 5. Another feature of the machine tool 1d may be the same as another feature of the machine tool 1. The measurement apparatus 5d is different from the measurement apparatus 5 in that it includes a measurement head 52d-1 and a measurement head 52d-2 instead of the measurement head 52. Another feature of the measurement apparatus 5d may be the same as another feature of the measurement apparatus 5. Next, with reference to FIG. 37, the measurement heads 52d-1 and 52d-2 in the fourth modified example will be described. FIG. 37 is a cross-sectional view that illustrates a configuration of the measurement heads 52d-1 and 52d-2 in the fourth modified example.

As illustrated in FIG. 37, each of the measurement heads 52d-1 and 52d-2 is attached to the processing head 2. However, the measurement heads 52d-1 and 52d-2 are attached to different parts of the processing head 2, respectively. Specifically, the measurement head 52d-1 is attached to a part of the processing head 2 that is different from the main spindle 21. In an example illustrated in FIG. 37, a head housing 521d-1 of the measurement head 52d-1 is attached to the head housing 22 of the processing head 2. On the other hand, the measurement head 52d-2 is attached to the main spindle 21 of the processing head 21. Specifically, a head housing 521d-2 of the measurement head 52d-2 is attached to the main spindle 21. The measurement head 52d-1 includes an optical system 522d-1 that includes a part of the optical system 522 of the measurement head 52. The measurement head 52d-2 includes an optical system 522d-2 that includes another part of the optical system 522 of the measurement head 52. Thus, the measurement head 52d-1 and 52d-2 correspond to two heads that are obtained by dividing the above-described measurement head 52.

The optical system 522d-1 emits the measurement light ML from the measurement light source 51 toward the optical system 522d-2. The optical system 522d-2 emits the measurement light ML from the optical system 522d-1 toward the measurement target object. The optical system 522d-2 emits the returning light RL from the measurement target object toward the optical system 522d-1. The optical system 522d-1 optically receives the returning light RL from the optical system 522d-2.

In order to emit the measurement light ML from the measurement light source 51 toward the optical system 522d-2 and to optically receive the returning light RL from the optical system 522d-2, the optical system 522d-1 may include an optical system 5220d-1 and a mirror 5229d-1. Furthermore, in order to emit the measurement light ML from the optical system 522d-1 toward the measurement target object and to emit the returning light RL from the measurement target object toward the optical system 522d-1, the optical system 522d-2 may include a mirror 5229d 522d-2 and the fθ lens 5228. The optical system 522d-2 may further include the deflection member 523 for changing the propagating direction of the measurement light ML.

As illustrated in FIG. 38, the optical system 5220d-1 is different from the optical system 522 in that it may not need to include the fθ lens 5228. Another feature of the optical system 5220d-1 may be the same as another feature of the optical system 522. The optical system 5220d-1 emits the measurement light ML from the measurement light source 51 toward the mirror 5229d-1. Specifically, the measurement light ML from the Galvano mirror 5227 enters the mirror 5229d-1. The mirror 5229d-1 reflects the measurement light ML from optical system 5220d-1 toward the optical system 522d-2. The measurement light ML from optical system 522d-1 enters the mirror 5229d-2 of optical system 522d-2. The mirror 5229d-2 reflects the measurement light ML from the optical system 522d-1 toward the fθ lens 5228. The fθ lens 5228 irradiates with the measurement target object with the measurement light ML from the mirror 5229d-2. Namely, the optical system 522d-2 irradiates the measurement target object with the measurement light ML through the fθ lens 5228.

The returning light RL from the measurement target object enters the mirror 5229d-2 through the fθ lens 5228. The mirror 5229d-1 reflects the returning light RL from the measurement target object toward the optical system 522d-1. Namely, the optical system 522d-2 emits the returning light RL from the measurement target object toward optical system 522d-1 through fθ lens 5228. The returning light RL from the optical system 522d-2 enters the mirror 5229d-1 of the optical system 522d-1. The mirror 5229d-1 reflects the measured light RL from the optical system 522d-2 toward the optical system 5220d-1 (especially, the Galvano mirror 5227). As a result, the detector 5226 of the optical system 5220d-1 optically receives the returning light RL.

Even in the machine tool 1d in the fourth modified example, an effect that is the same as the effects achievable by the above-described machine tool 1 is achievable. Furthermore, not the measurement head 52d-2 that is detachably attached to the main spindle 21 but the measurement head 52d-1 that is attached to the head housing 22 includes the Galvano mirror 5227 that tends to occupy a large space, and therefore, a size of the measurement head 52d-2 can be kept to a size that can be handled by the tool change apparatus 6.

Incidentally, at least one of the machine tool 1a in the first modified example to the machine tool 1c in the third modified example described above may include a feature unique to the fourth modified example. The feature unique to the fourth modified example may include a feature related to the measurement heads 52d-1 and 52d-2.

### (4-5) Fifth Modified Example

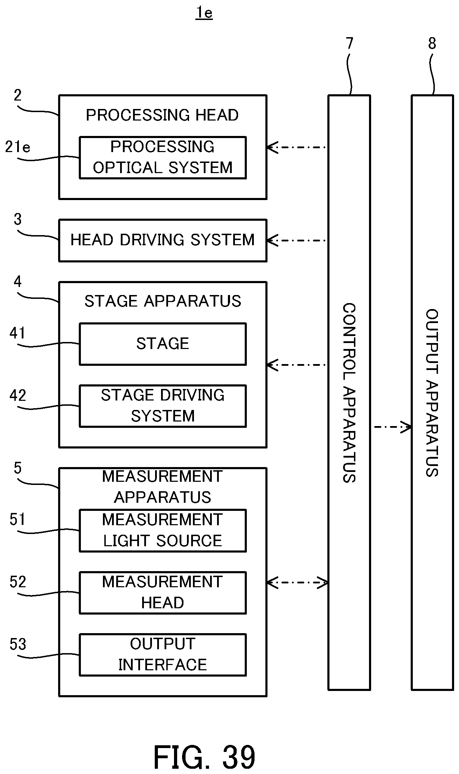

Next, with reference to FIG. 39, a fifth modified example of the machine tool 1 will be described. In the below-described description, the fifth modified example of the machine tool 1 is referred to as a "machine tool 1e". FIG. 39 is a system configuration diagram that illustrates a system configuration of the machine tool 1e in the fifth modified example.

As illustrated in FIG. 39, the machine tool 1e is different from the machine tool 1 in that it includes a processing head 2e instead of the processing head 2. Another feature of the machine tool 1e may be the same as another feature of the machine tool 1. The processing head 2e is different from the processing head 2 in that it is configured to process the workpiece W by using processing light instead of the tool 23. Note that the processing light used by the processing head 2e to process the workpiece W is different from the measurement light ML used by the measurement apparatus 5 to measure the measurement target object. Another feature of the processing head 2e may be identical to another feature of the processing head 2.

In order to process the workpiece W by using the processing light, the processing head 2e may include a processing optical system 21e. The processing optical system 21e may be contained in a head housing of the processing head 2e. The processing optical system 21e may be attached to the processing head 2e. The processing optical system 21e emits the processing light generated by a non-illustrated processing light source toward the workpiece W. Therefore, the processing optical system 21e may be referred to as a processing light emitting unit. The machine tool 1e may process the workpiece W by irradiating the workpiece W with the processing light from the processing optical system 21e while moving at least one of the processing head 2e and the stage 41. For example, the machine tool 1e may perform an additive manufacturing of the workpiece W by irradiating the workpiece W with the processing light. The machine tool 1e may perform a removal processing of the workpiece W by irradiating the workpiece W with the processing light. The machine tool 1e that processes the workpiece W by using the processing light may be referred to as an optical processing device . The processing optical system 21e may be referred to as a processing unit for performing a processing (in this case, the machining-processing) of the workpiece W.

Even in the fifth modified example, the control apparatus 7 may perform the movement error calculation operation for calculating the movement error occurring in the movement of at least one of the processing head 2e and the stage 41 based on the measured result by the measurement apparatus 5. As a result, even in the fifth modified example, an effect that is the same as the effects achievable by the above-described machine tool 1 is achievable.

Incidentally, in a case where the processing optical system 21e is detachable from the processing head 2e, the measurement head 52 may be attached to the attachment part of the processing head 2e to which the processing optical system 21e is attached. In a case where the measurement head 52 is allowed to be divided into the measurement heads 52d-1 and 52d-2 as in the fourth modified example, the measurement head 52d-2 including the fθ lens 5228 may be attached to the attachment part of the processing head 2e to which the processing optical system 21e is attached. In a case where the processing optical system 21e is not detachable from the processing head 2e, the measurement head 52 may be attached to a position of the processing head 2e that is relatively close to the attachment part to which the processing optical system 21e is attached. The measurement head 52 may be attached to a position of the processing head 2e that is as close as possible to the attachment part of the processing head 2e to which the processing optical system 21e is attached. In a case where the measurement head 52 is allowed to be divided into the measurement heads 52d-1 and 52d-2 as in the fourth modified example, the measurement head 52d-2 including the fθ lens 5228 may be attached to a position of the processing head 2e that is relatively close to the attachment part to which the processing optical system 21e is attached. The measurement head 52d-2 may be attached to a position of the processing head 2e that as close as possible to the attachment part of the processing head 2e to which the processing optical system 21e is attached.

Moreover, the machine tool 1e may process the workpiece W by irradiating the workpiece W with an energy beam different from the light such as the processing light. At least one of a charged particle beam (for example, an electron beam or an ion beam) and an electromagnetic wave may be used as the energy beam.

Incidentally, the processing head 2e may not be movable. The head driving system 3 may not move the processing head 2e. The machine tool 1e may not include the head driving system 3. In a case where the processing head 2e does not move, the processing head 2e may be referred to simply as head 2e.

Incidentally, at least one of the machine tool 1a in the first modified example to the machine tool 1d in the fourth modified example described above may include a feature unique to the fifth modified example. The feature unique to the fifth modified example may include a feature related to the processing head 2e.

### (4-6) Sixth Modified Example

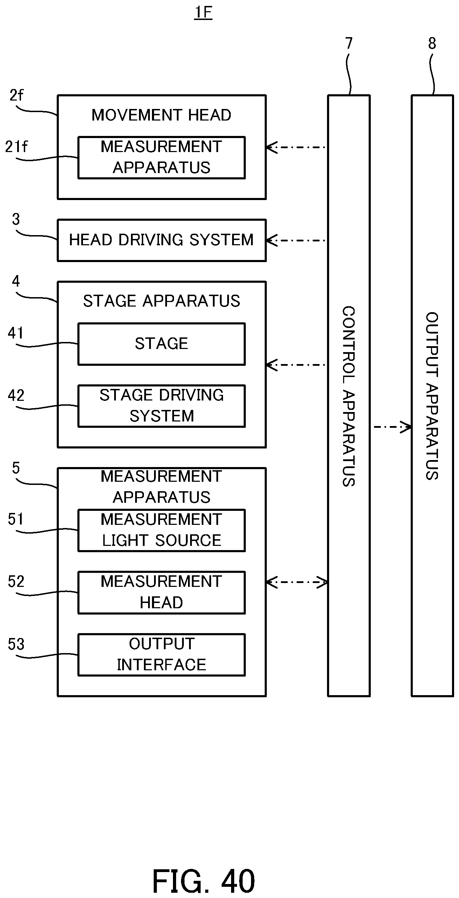

Next, a sixth modified example of the machine tool 1 will be described. In the below-described description, the sixth modified example of the machine tool 1 is referred to as a "machine tool 1f". The machine tool 1f is different from the machine tool 1 in that it may not be configured to process the workpiece W. In this case, as illustrated in FIG. 40 that is a system configuration diagram illustrating a system configuration of the machine tool 1f in the sixth modified example, the machine tool 1f may include any moving head 2f that is movable by the head driving system 3 instead of the processing head 2. Another feature of the machine tool 1f may be the same as another feature of the machine tool 1. Incidentally, for the purpose of eliminating any misunderstanding that may be caused by the term "machine tool", the machine tool 1f including the moving head 2f is referred to as a "moving apparatus 1f" in the below-described description, because the machine tool 1f may not be configured to process the workpiece W.

As illustrated in FIG. 40, the moving head 2f is different from the processing head 2 in that it may not be configured to process the workpiece W. Another feature of the moving head 2f may be the same as another feature of the processing head 2.

The moving head 2f may include a measurement apparatus (a measurement unit) 21f. The measurement apparatus 21f may be contained in a head housing of the moving head 2f. The measurement apparatus 21f may be attached to the moving head 2f. The measurement apparatus 21f is configured to measure a measurement target object. The measurement target object measured by the measurement apparatus 21f may be the same as or different from the measurement target object measured by the measurement apparatus 5. As one example, the measurement apparatus 21f may be configured to measure the workpiece W. The measurement apparatus 21f may be configured to measure the measurement target object in a non-contact manner. The measurement apparatus 21f may be configured to optically measure the measurement target object. The measurement apparatus 21f may be configured to electrically measure the measurement target object. The measurement apparatus 21f may be magnetically measure the measurement target object. The measurement apparatus 21f may be configured to thermally measure measurement target object. The measurement apparatus 21f may be configured to measure the measurement target object by using a probe that physically contacts with the measurement target object.

The moving apparatus 1f may measure the measurement target object by using the measurement apparatus 21f while moving at least one of the moving head 2f and the stage 41. Incidentally, in a case where the moving head 2f includes a measurement apparatus 91f configured to measure the workpiece W, the moving head 2f may be referred to as a workpiece measurement head. In a case where the moving head 2f includes the measurement apparatus 91f, the moving apparatus 1f may be referred to as a measurement device or a measuring apparatus. The moving apparatus 1f may be configured to serve as a three-dimensional measurement device (CMM: Coordinate Measuring Machine). In a case where the measurement apparatus 91f is configured to measure the workpiece W, the measurement apparatus 91f may be referred to as a processing unit for performing a processing (in this case, the measurement) of the workpiece W.

Even in the sixth modified example, the control apparatus 7 may perform the movement error calculation operation for calculating the movement error occurring in the movement of at least one of the moving head 2f and the stage 41 based on the measured result by the measurement apparatus 5. As a result, even in the sixth modified example, an effect that is the same as the effects achievable by the above-described machine tool 1 is achievable.

Incidentally, in a case where the measurement apparatus 21f is detachable from the moving head 2f, the measurement head 52 may be attached to an attachment part of the moving head 2f where the measurement apparatus 21f is attached. In a case where the measurement head 52 is allowed to be divided into the measurement heads 52d-1 and 52d-2 as in the fourth modified example, the measurement head 52d-2 including the fθ lens 5228 may be attached to the attachment part of the moving head 2f to which the measuring apparatus 21f is attached. In a case where the measurement apparatus 21f is not detachable from the moving head 2f, the measurement head 52 may be attached to a position of the moving head 2f that is relatively close to the attachment part to which the measurement apparatus 21f is attached. The measurement head 52 may be attached to a position of the moving head 2f that is as close as possible to the attachment part of the moving head 2f to which the measurement apparatus 21f is attached. In a case where the measurement head 52 is allowed to be divided into the measurement heads 52d-1 and 52d-2 as in the fourth modified example, the measurement head 52d-2 including the fθ lens 5228 may be attached to a position of the moving head 2f that is relatively close to the attachment part to which the measurement apparatus 21f is attached. The measurement head 52d-2 may be attached to a position of the moving head 2f that is as close as possible to the attachment part of the moving head 2f to which the measurement apparatus 21f is attached.

Incidentally, the moving head 2f may not be movable. The head driving system 3 may not move the moving head 2f. The machine tool 1f may not include the head driving system 3. In a case where the moving head 2f does not move, the moving head 2f may be referred to simply as head 2f. In a case where the moving head 2f does not move, the moving head 2f may be referred to as a processing apparatus.

Incidentally, at least one of the machine tool 1a in the first modified example to the machine tool 1e in the fifth modified example described above may include a feature unique to the sixth modified example. The feature unique to the sixth modified example may include a feature related to the moving head 2f.

### (4-7) Seventh Modified Example

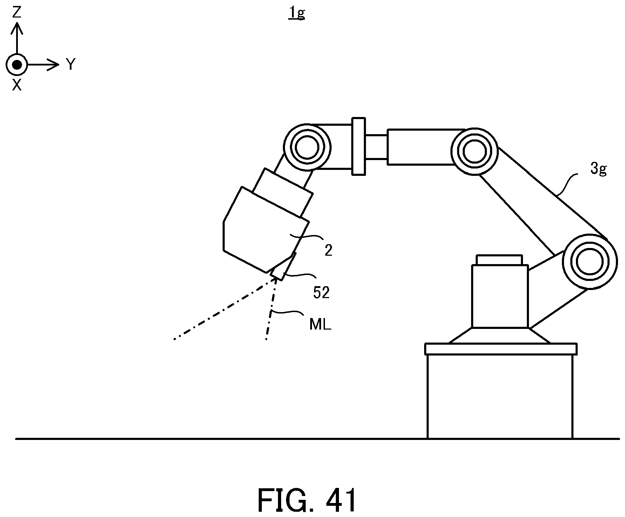

Next, a seventh modified example of the machine tool 1 will be described. In the below-described description, the seventh modified example of the machine tool 1 is referred to as a "machine tool 1g". The machine tool 1g is different from the machine tool 1 in that it includes a head driving system 3g instead of the head driving system 3. Another feature of the machine tool 1g may be the same as another feature of the machine tool 1. Next, with reference to FIG. 41, the head driving system 3g in the seventh modified example will be described. FIG. 41 is a side view that illustrates a configuration of the head driving system 3g in the seventh modified example.

As illustrated in FIG. 41, the head driving system 3g may be different from the head driving system 3 in that it is a robotic arm. The robotic arm may be a manipulator with a degree of freedom having three or more axes. The robotic arm may serve as a robot having a so-called vertical articulated structure. The robotic arm may serve as a robot-polar-coordinate type of robot having a horizontal articulated structure. The robotic arm may serve as a cylindrical-coordinate type of robot. The robotic arm may serve as a Cartesian-coordinate type of robot. The robotic arm may serve as a parallel-link type of robot. The processing head 2 may be attached to an end of the robotic arm. Namely, the processing head 2 may be attached to the robotic arm as an end effector. Another feature of the head driving system 3g may be the same as another feature of the head driving system 3. In this case, the measurement head 52 may be attached to the processing head 2, or the measurement head 52 in the modified example (for example, at least one of the measurement heads 52a, 52b, 52d-1 and 52d-2) may be attached thereto instead of the measurement head 52. Alternatively, at least one of the measurement heads 52, 52a, 52b, 52d-1 and 52d-2 may be attached to the end of the robotic arm to which the processing head 2 is attached.

Even in the seventh modified example, the control apparatus 7 may perform the movement error calculation operation for calculating the movement error occurring in the movement of at least one of the processing head 2 attached to the robotic arm and the stage 41 based on the measured result by the measurement apparatus 5. As a result, even in the seventh modified example, an effect that is the same as the effects achievable by the above-described machine tool 1 is achievable.

### (4-8) Other Modified Example

In the above-described description, the measurement apparatus 5 is the interferometric measurement apparatus that uses the light comb light source as the measurement light source 51. However, the measurement apparatus 5 may be an interferometric measurement apparatus that uses a light source different from the light comb light source as the measurement light source 51. For example, the measurement apparatus 5 may be an optical coherence tomography (OCT) type of measurement apparatus. One example of the OCT type of measurement apparatus is disclosed in JP2020-101499A. For example, the measurement apparatus 5 may be a measurement apparatus including a white confocal displacement meter. One example of the white confocal displacement meter is disclosed in JP2020-085633A. For example, the measurement apparatus 5 may be a phase modulation type of measurement apparatus. One example of the phase modulation type of measurement apparatus is disclosed in JP2010-025922A. For example, the measurement apparatus 5 may be an intensity modulation type of measurement apparatus. One example of the intensity modulation type of measurement apparatus is disclosed in JP2016-510415A and US2014/226145A1.

In the above-described description, the control apparatus 7 of the machine tool 1 performs a first operation for acquiring the measured result by the measurement apparatus 5, a second operation for calculating the position of the fiducial member FM based on the measured result by the measurement apparatus 5, a third operation for calculating the movement error based on the position of the fiducial member FM, and a fourth operation for calibrating at least one of the coordinate information and the drive signal based on the movement error. However, at least one of the first to fourth operations may be performed by another control apparatus (a calculation unit) different from the control apparatus 7 of the machine tool 1. For example, the control apparatus 7 may perform the first and second operations, another control apparatus may perform the third operation based on the position of the fiducial member FM calculated by the control apparatus 7, and the control apparatus 7 may perform the fourth operation based on the movement error calculated by another control apparatus 7.

There is a possibility that the movement error varies depending on an environmental temperature around the machine tool 1. Therefore, the control apparatus 7 may calculate a plurality of movement errors that correspond to a plurality of different environmental temperatures, respectively. In this case, the control apparatus 7 may select, from the plurality of movement errors, one movement error that corresponds to the actual environmental temperature around the machine tool 1, and control the machine tool 1 by using the selected one movement error.

In the above-described description, the machine tool 1 includes the head driving system 3. Namely, the processing head 2 is movable. However, the machine tool 1 may not include the head driving system 3. Namely, the processing head 2 may not be movable.

In the above-described description, the machine tool 1 includes the stage driving system 42. Namely, the stage 41 is movable. However, the machine tool 1 may not include the stage driving system 42. Namely, the stage 41 may not be movable.

In the example embodiment and the first to fifth modified examples described above, a machining center is described as an example of the machine tool. However, the machine tool is not limited to the machining center, but may be at least one of a turning center, a turning machine, a milling machine, a grinding machine, a polishing machine, a lapping machine, a honing machine, a band saw, a drilling machine, a boring machine, a gear cutting machine, a shaping machine, and an electrical discharge machine, for example. Moreover, the machine tool may be any kind of machine that may make a material into a predetermined shape and size. Incidentally, in a case where the machine tool is the grinding machine, the measurement heads 52 and 52b may be attached to a head (a processing head) to which a grinding stone is attached. Note that the measurement head 52 (alternatively, at least one of the measurement heads 52a, 52b, 52d-1 and 52d-2) may be attached instead of the grinding stone that is attached to an attachment part of the head to which the grinding stone is attached. Note that the measurement head 52 (alternatively, at least one of the measurement heads 52a, 52b, 52d-1 and 52d-2) may be detachably attached to the head to which the grinding stone is attached.

### (5) Supplementary Note

Regarding the above described example embodiment, below described supplementary notes are further disclosed.

### [Supplementary Note 1]

A calculation apparatus that calculates a movement error occurring in a movement of at least one of a placing apparatus on which a workpiece is allowed to be placed and a head to which a processing unit for performing a processing of the workpiece is attachable, wherein
the calculation apparatus includes:
a calculation unit that calculates the movement error based on a detected result by an optical detection apparatus, the optical detection apparatus including an objective optical system for emitting first light toward a fiducial member placed on the placing apparatus and a detector for optically receiving, through the objective optical system, second light from the fiducial member generated by an irradiation of the first light, and the optical detection apparatus being attached to the head.

### [Supplementary Note 2]

The calculation apparatus according to the Supplementary Note 1 further including an output unit that output the movement error calculated by the calculation unit.

### [Supplementary Note 3]

The calculation apparatus according to the Supplementary Note 1 or 2, wherein
the detector optically receives interfering light generated by an interference between a part of the first light and at least a part of the second light,
the calculation unit calculates the movement error based on a detected result of the interfering light.

### [Supplementary Note 4]

The calculation apparatus according to the Supplementary Note 3, wherein
the calculation unit calculates a position of at least a part of the fiducial member based on a detected result of the interfering light, and calculates the movement error based on a calculated result of the position.

### [Supplementary Note 5]

The calculation apparatus according to any one of the Supplementary Notes 1 to 4, wherein
the calculation unit calibrates information used for a movement control of at least one of the placing apparatus and the head based on the calculated movement error.

### [Supplementary Note 6]

The calculation apparatus according to any one of the Supplementary Notes 1 to 5, wherein
the second light is light, which propagates along an optical path of the first light, of light from the fiducial member generated by an irradiation of the first light.

### [Supplementary Note 7]

The calculation apparatus according to any one of the Supplementary Notes 1 to 6, wherein
the optical detection apparatus includes a condensing optical system that is disposed on an optical path between the objective optical system and the detector and that forms a condensed point of the first light at a focal position of the objective optical system on the detector side.

### [Supplementary Note 8]

The calculation apparatus according to the Supplementary Note 7, wherein
the optical detection apparatus further includes an insertable / extractable apparatus that inserts and extracts the condensing optical system relative to the optical path.

### [Supplementary Note 9]

The calculation apparatus according to any one of the Supplementary Notes 1 to 8, wherein
the optical detection apparatus further includes a propagating direction change member that is configured to change a propagating direction of the first light propagating toward the objective optical system so that an irradiation position of the first light on the fiducial member is changed.

### [Supplementary Note 10]

The calculation apparatus according to the Supplementary Note 9, wherein
the first light that propagates in a first propagating direction by the propagating direction change member and enters the objective optical system propagates along a first optical path so that a first position of the fiducial member is irradiated therewith,
the second light, which propagates along the first optical path, of light from the first position generated by the first light with which the first position is irradiated enters the detector,
the first light that propagates in a second propagating direction different from the first optical direction by the propagating direction change member and enters the objective optical system propagates along a second optical path different from the first optical path so that a second position of the fiducial member different from the first position is irradiated therewith,
the second light, which propagates along the second optical path, of light from the second position generated by the first light with which the second position is irradiated enters the detector,
the calculation unit calculates the movement error based on the detected result by the optical detection apparatus in each position of the first position and the second position.

### [Supplementary Note 11]

The calculation apparatus according to the Supplementary Note 10, wherein
the objective optical system is located at a third position in a case where the first position of the fiducial member is irradiated with the first light from the objective optical system,
the objective optical system is located at the third position in a case where the second position of the fiducial member is irradiated with the first light from the objective optical system.

### [Supplementary Note 12]

The calculation apparatus according to the Supplementary Note 10 or 11, wherein
the fiducial member includes: a first area, a second area a characteristic of which is different from that of the first area; a third area; a fourth area a characteristic of which is different from that of the third area; a fifth area; and a sixth area a characteristic of which is different from that of the fifth area,
the calculation unit calculates the movement error based on a position of a first border that is a border between the first area and the second area and that extends along a first direction, a position of a second border that is a border between the third area and the fourth area and that extends along a second direction intersecting with the first direction, and a position of a third border that is a border between the fifth area and the sixth area and that extends along a third direction intersecting with the second direction.

### [Supplementary Note 13]

The calculation apparatus according to any one of the Supplementary Notes 1 to 12, wherein
the optical detection apparatus further includes a deflection member that deflects the first light from the objective optical system toward the fiducial member.

### [Supplementary Note 14]

The calculation apparatus according to any one of the Supplementary Notes 1 to 13, wherein
at least one of the placing apparatus and the head is movable along a first direction,
the calculation unit calculates, based on the detected result by the optical detection apparatus, the movement error in a second direction and the movement error in a third direction different from the second direction that occur in the movement of at least one of the placing apparatus and the head in a case where at least one of the placing apparatus and the head moves along the first direction.

### [Supplementary Note 15]

The calculation apparatus according to the Supplementary Note 14, wherein
the detector optically receives the second light, which propagates along a first optical path, of light from the fiducial member generated by irradiating the fiducial member with the first light propagating along the first optical path from the objective optical system in a case where a positional relationship between the placing apparatus and the head in the first direction is a first relationship, and optically receives the second light, which propagates along a second optical path, of light from the fiducial member generated by irradiating the fiducial member with the first light propagating along the second optical path from the objective optical system in a case where the positional relationship between the placing apparatus and the head in the first direction is a second relationship different from the first relationship,
the calculation unit calculates the movement error based on the detected result by the optical detection apparatus in each positional relationship of the first relationship and the second relationship.

### [Supplementary Note 16]

The calculation apparatus according to the Supplementary Note 14 or 15, wherein
the first direction includes a direction along an optical path of the first light emitted from the objective optical system.

### [Supplementary Note 17]

The calculation apparatus according to any one of the Supplementary Notes 14 to 16, wherein
the first direction includes a direction intersecting with an optical path of the first light emitted from the objective optical system.

### [Supplementary Note 18]

The calculation apparatus according to any one of the Supplementary Notes 1 to 17, wherein
the optical detection apparatus includes a first optical system including the detector and a second optical system including the objective optical system,
the first optical system and the second optical system are attached to different parts of the head, respectively.

### [Supplementary Note 19]

The calculation apparatus according to the Supplementary Note 18, wherein
the first optical system emits the first light toward the second optical system, and optically receives the second light from the second optical system with the detector,
the second optical system emits the first light from the first optical system toward the fiducial member through the objective optical system, and emits the second light from the fiducial member toward the first optical system through the objective optical system.

### [Supplementary Note 20]

The calculation apparatus according to any one of the Supplementary Notes 1 to 19, wherein
the fiducial member is different from the workpiece.

### [Supplementary Note 21]

The calculation apparatus according to any one of the Supplementary Notes 1 to 20, wherein
a grid pattern is formed on the fiducial member.

### [Supplementary Note 22]

The calculation apparatus according to any one of the Supplementary Notes 1 to 21, wherein
the fiducial member includes a polyhedron.

### [Supplementary Note 23]

The calculation apparatus according to any one of the Supplementary Notes 1 to 22, wherein
the fiducial member includes: a first reflection member that reflects the first light entering a first position from the optical detection apparatus to emit it as the second light toward the optical detection apparatus; and a second reflection member that reflects the first light entering a second position different from the first position from the optical detection apparatus to emit it as the second light toward the optical detection apparatus,
an optical path length of an optical path from the first position to an emission position of the fiducial member through the first reflection member and an optical path length of an optical path from the second position to an emission position of the fiducial member through the second reflection member is different from each other.

### [Supplementary Note 24]

The calculation apparatus according to any one of the Supplementary Notes 1 to 23, wherein
the head is a processing head that includes, as the processing unit, a main spindle to which a tool is detachably attached,
the movement error occurs in the movement of at least one of the placing apparatus and the processing head of a machine tool that processes the workpiece with the tool being detachably attached to the main spindle while moving at least one of the placing apparatus and the processing head.

### [Supplementary Note 25]

The calculation apparatus according to the Supplementary Note 24, wherein
the optical detection apparatus is attached to the main spindle instead of the tool.

### [Supplementary Note 26]

The calculation apparatus according to any one of the Supplementary Notes 1 to 25, wherein
the head is a processing head that includes, as the processing unit, a processing light emission unit that emits processing light for processing the workpiece,
the movement error occurs in the movement of at least one of the placing apparatus and the processing head of an optical processing device that processes the workpiece with the processing light from the processing light emission unit while moving at least one of the placing apparatus and the processing head.

### [Supplementary Note 27]

The calculation apparatus according to any one of the Supplementary Notes 1 to 26, wherein
the head is a workpiece measurement head that includes, as the processing unit, a measurement unit for measuring the workpiece,
the movement error occurs in the movement of at least one of the placing apparatus and the workpiece measurement head of a measurement device that measures the workpiece with the measurement unit while moving at least one of the placing apparatus and the workpiece measurement head.

### [Supplementary Note 28]

A calculation system including:
the calculation apparatus according to any one of the Supplementary Notes 1 to 27; and
the optical detection apparatus.

### [Supplementary Note 29]

The calculation system according to the Supplementary Note 28 further including the fiducial member.

### [Supplementary Note 30]

A calculation system including:
the calculation apparatus according to any one of the Supplementary Notes 1 to 27; and
the fiducial member.

### [Supplementary Note 31]

A machine tool that processes a workpiece with a tool detachably attached to a main spindle of a head that is a processing unit while moving at least one of a placing apparatus on which the workpiece is placed and the head to which the processing unit for performing a processing of the workpiece is attachable, wherein
the machine tool includes:
the calculation apparatus according to any one of the Supplementary Notes 1 to 27;
the head;
the placing apparatus; and
a driving apparatus that moves at least one of the head and the placing apparatus.

### [Supplementary Note 32]

A machine tool that processes a workpiece with a tool detachably attached to a main spindle of a head that is a processing unit while moving at least one of a placing apparatus on which the workpiece is placed and the head to which the processing unit for performing a processing of the workpiece is attachable, wherein
the machine tool includes:
the calculation system according to any one of the Supplementary Notes 28 to 30;
the head;
the placing apparatus; and
a driving apparatus that moves at least one of the head and the placing apparatus.

### [Supplementary Note 33]

The machine tool according to the Supplementary Note 31, wherein
the optical detection apparatus of the calculation system is attached to the main spindle instead of the tool.

### [Supplementary Note 34]

An optical processing device that processes a workpiece with processing light from a processing light emission unit that is attached to a head as a processing unit while moving at least one of a placing apparatus on which the workpiece is placed and the head to which the processing unit for performing a processing of the workpiece is attachable, wherein
the optical processing device includes:
the calculation apparatus according to any one of the Supplementary Notes 1 to 27;
the head;
the placing apparatus; and
a driving apparatus that moves at least one of the head and the placing apparatus.

### [Supplementary Note 35]

An optical processing device that processes a workpiece with processing light from a processing light emission unit that is attached to a head as a processing unit while moving at least one of a placing apparatus on which the workpiece is placed and the head to which the processing unit for performing a processing of the workpiece is attachable, wherein
the optical processing device includes:
the calculation system according to any one of the Supplementary Notes 28 to 30;
the head;
the placing apparatus; and
a driving apparatus that moves at least one of the head and the placing apparatus.

### [Supplementary Note 36]

A measurement device that measures a workpiece with a measurement unit that is attached to a head as a processing unit while moving at least one of a placing apparatus on which the workpiece is placed and the head to which the processing unit for performing a processing of the workpiece is attachable, wherein
the measurement device includes:
the calculation apparatus according to any one of the Supplementary Notes 1 to 27;
the head;
the placing apparatus; and
a driving apparatus that moves at least one of the head and the placing apparatus.

### [Supplementary Note 37]

A measurement device that measures a workpiece with a measurement unit that is attached to a head as a processing unit while moving at least one of a placing apparatus on which the workpiece is placed and the head to which the processing unit for performing a processing of the workpiece is attachable, wherein
the measurement device includes:
the calculation system according to the Supplementary Note 26 or 27;
the head;
the placing apparatus; and
a driving apparatus that moves at least one of the head and the placing apparatus.

### [Supplementary Note 38]

A calculation method that calculates a movement error occurring in a movement of at least one of a placing apparatus on which a workpiece is allowed to be placed and a head to which a processing unit for performing a processing of the workpiece is attachable, wherein
the calculation method includes:
emitting first light toward a fiducial member placed on the placing apparatus through an objective optical system of an optical detection apparatus that is attached to the head;
optically receiving, through the objective optical system, second light from the fiducial member generated by an irradiation of the first light by using a detector of the optical detection apparatus; and
calculating the movement error based on a detected result by the optical detection apparatus.

### [Supplementary Note 39]

The calculation method according to the Supplementary Note 38 further including outputting the calculated movement error.

### [Supplementary Note 40]

The calculation method according to the Supplementary Note 38 or 39, wherein
the optically receiving the second light includes optically receiving interfering light generated by an interference between a part of the first light and at least a part of the second light,
the calculating the movement error includes calculating the movement error based on a detected result of the interfering light.

### [Supplementary Note 41]

The calculation method according to the Supplementary Note 40, wherein
the calculating the movement error includes:
calculating a position of at least a part of the fiducial member based on a detected result of the interfering light; and
calculating the movement error based on a calculated result of the position.

### [Supplementary Note 42]

The calculation method according to any one of the Supplementary Notes 39 to 41 further including calibrating information used for a movement control of at least one of the placing apparatus and the head based on the calculated movement error.

### [Supplementary Note 43]

The calculation method according to any one of the Supplementary Notes 39 to 42, wherein
the second light is light, which propagates along an optical path of the first light, of light from the fiducial member generated by an irradiation of the first light.

### [Supplementary Note 44]

The calculation method according to any one of the Supplementary Notes 39 to 43 further including forming a condensed point of the first light at a focal position of the objective optical system on the detector side by using a condensing optical system that is disposed on an optical path between the objective optical system and the detector.

### [Supplementary Note 45]

The calculation method according to the Supplementary Note 44 further including inserting and extracting the condensing optical system relative to the optical path.

### [Supplementary Note 46]

The calculation method according to any one of the Supplementary Notes 38 to 45 further including changing a propagating direction of the first light propagating toward the objective optical system so that an irradiation position of the first light on the fiducial member is changed.

### [Supplementary Note 47]

The calculation method according to the Supplementary Note 46, wherein
the first light that propagates in a first propagating direction and enters the objective optical system propagates along a first optical path so that a first position of the fiducial member is irradiated therewith,
the second light, which propagates along the first optical path, of light from the first position generated by the first light with which the first position is irradiated enters the detector,
the first light that propagates in a second propagating direction different from the first optical direction and enters the objective optical system propagates along a second optical path different from the first optical path so that a second position of the fiducial member different from the first position is irradiated therewith,
the second light, which propagates along the second optical path, of light from the second position generated by the first light with which the second position is irradiated enters the detector,
the calculating the movement error includes calculating the movement error based on the detected result by the optical detection apparatus in each position of the first position and the second position.

### [Supplementary Note 48]

The calculation method according to the Supplementary Note 47, wherein
the objective optical system is located at a third position in a case where the first position of the fiducial member is irradiated with the first light from the objective optical system,
the objective optical system is located at the third position in a case where the second position of the fiducial member is irradiated with the first light from the objective optical system.

### [Supplementary Note 49]

The calculation method according to the Supplementary Note 47 or 48, wherein
the fiducial member includes: a first area, a second area a characteristic of which is different from that of the first area; a third area; a fourth area a characteristic of which is different from that of the third area; a fifth area; and a sixth area a characteristic of which is different from that of the fifth area,
the calculating the movement error includes calculating the movement error based on a position of a first border that is a border between the first area and the second area and that extends along a first direction, a position of a second border that is a border between the third area and the fourth area and that extends along a second direction intersecting with the first direction, and a position of a third border that is a border between the fifth area and the sixth area and that extends along a third direction intersecting with the second direction.

### [Supplementary Note 50]

The calculation method according to any one of the Supplementary Notes 38 to 49 further including deflecting the first light from the objective optical system toward the fiducial member.

### [Supplementary Note 51]

The calculation method according to any one of the Supplementary Notes 38 to 50, wherein
at least one of the placing apparatus and the head is movable along a first direction,
the calculating the movement error includes calculating, based on the detected result by the optical detection apparatus, the movement error in a second direction and the movement error in a third direction different from the second direction that occur in the movement of at least one of the placing apparatus and the head in a case where at least one of the placing apparatus and the head moves along the first direction.

### [Supplementary Note 52]

The calculation method according to the Supplementary Note 51, wherein
the optically receiving the second light includes:
optically receiving the second light, which propagates along a first optical path, of light from the fiducial member generated by irradiating the fiducial member with the first light propagating along the first optical path from the objective optical system in a case where a positional relationship between the placing apparatus and the processing head in the first direction is a first relationship, and
optically receiving the second light, which propagates along a second optical path, of light from the fiducial member generated by irradiating the fiducial member with the first light propagating along the second optical path from the objective optical system in a case where the positional relationship between the placing apparatus and the processing head in the first direction is a second relationship different from the first relationship,
the calculating the movement error includes calculating the movement error based on the detected result by the optical detection apparatus in each positional relationship of the first relationship and the second relationship.

### [Supplementary Note 53]

The calculation method according to the Supplementary Note 51 or 52, wherein
the first direction includes a direction along an optical path of the first light emitted from the objective optical system.

### [Supplementary Note 54]

The calculation method according to any one of the Supplementary Notes 51 to 53, wherein
the first direction includes a direction intersecting with an optical path of the first light emitted from the objective optical system.

### [Supplementary Note 55]

The calculation method according to any one of the Supplementary Notes 38 to 54, wherein
the optical detection apparatus includes a first optical system including the detector and a second optical system including the objective optical system,
the first optical system and the second optical system are attached to different parts of the head, respectively.

### [Supplementary Note 56]

The calculation method according to the Supplementary Note 55, wherein
the first optical system emits the first light toward the second optical system, and optically receives the second light from the second optical system with the detector,
the second optical system emits the first light from the first optical system toward the fiducial member through the objective optical system, and emits the second light from the fiducial member toward the first optical system through the objective optical system.

### [Supplementary Note 57]

The calculation method according to any one of the Supplementary Notes 38 to 56, wherein
the fiducial member is different from the workpiece.

### [Supplementary Note 58]

The calculation method according to any one of the Supplementary Notes 38 to 57, wherein
a grid pattern is formed on the fiducial member.

### [Supplementary Note 59]

The calculation method according to any one of the Supplementary Notes 38 to 58, wherein
the fiducial member includes a polyhedron.

### [Supplementary Note 60]

The calculation method according to any one of the Supplementary Notes 38 to 59, wherein
the fiducial member includes: a first reflection member that reflects the first light entering a first position from the optical detection apparatus to emit it as the second light toward the optical detection apparatus; and a second reflection member that reflects the first light entering a second position different from the first position from the optical detection apparatus to emit it as the second light toward the optical detection apparatus,
an optical path length of an optical path from the first position to an emission position of the fiducial member through the first reflection member and an optical path length of an optical path from the second position to an emission position of the fiducial member through the second reflection member is different from each other.

### [Supplementary Note 61]

The calculation method according to any one of the Supplementary Notes 38 to 60, wherein
the head is a processing head that includes, as the processing unit, a main spindle to which a tool is detachably attached,
the movement error occurs in the movement of at least one of the placing apparatus and the processing head of a machine tool that processes the workpiece with the tool being detachably attached to the main spindle while moving at least one of the placing apparatus and the processing head.

### [Supplementary Note 62]

The calculation method according to the Supplementary Note 61 further including attaching the optical detection apparatus to the main spindle instead of the tool.

### [Supplementary Note 63]

The calculation method according to any one of the Supplementary Notes 38 to 62, wherein
the head is a processing head that includes, as the processing unit, a processing light emission unit that emits processing light for processing the workpiece,
the movement error occurs in the movement of at least one of the placing apparatus and the processing head of an optical processing device that processes the workpiece with the processing light from the processing light emission unit while moving at least one of the placing apparatus and the processing head.

### [Supplementary Note 64]

The calculation method according to any one of the Supplementary Notes 38 to 63, wherein
the head is a measurement head that includes, as the processing unit, a measurement unit for measuring the workpiece,
the movement error occurs in the movement of at least one of the placing apparatus and the measurement head of a measurement device that measures the workpiece with the measurement unit while moving at least one of the placing apparatus and the measurement head.

### [Supplementary Note 65]

A computer program that allows a computer to perform the calculation method according to any one of the Supplementary Notes 38 to 64.

### [Supplementary Note 66]

A recoding medium on which the computer program according to the Supplementary Note 65 is recorded.

### [Supplementary Note 67]

A calibration method including:
emitting first light toward a fiducial member placed on a placing apparatus from an objective optical system of an optical detection apparatus that is attached to a head to which a processing unit for performing a processing of the workpiece is attachable;
optically receiving, through the objective optical system, second light from the fiducial member generated by an irradiation of the first light by using a detector of the optical detection apparatus; and
calibrating information used for a movement control of at least one of the placing apparatus and the head based on a detected result by the optical detection apparatus.

### [Supplementary Note 68]

The calibration method according to the Supplementary Note 67, wherein
the information includes at least one of coordinate information and a driving signal.

### [Supplementary Note 69]

The calibration method according to the Supplementary Note 67 or 68 further including outputting the calibrated information.

### [Supplementary Note 70]

The calibration method according to any one of the Supplementary Notes 67 to 69, wherein
the optically receiving the second light includes optically receiving interfering light generated by an interference between a part of the first light and at least a part of the second light,
the calibrating information includes calibrating information based on a detected result of the interfering light.

### [Supplementary Note 71]

The calibration method according to the Supplementary Note 70, wherein
the calibrating the information includes:
calculating a position of at least a part of the fiducial member based on a detected result of the interfering light; and
calibrating the information based on a calculated result of the position.

### [Supplementary Note 72]

The calibration method according to any one of the Supplementary Notes 67 to 71, wherein
the second light is light, which propagates along an optical path of the first light, of light from the fiducial member generated by an irradiation of the first light.

### [Supplementary Note 73]

The calibration method according to any one of the Supplementary Notes 67 to 72 further including forming a condensed point of the first light at a focal position of the objective optical system on the detector side by using a condensing optical system that is disposed on an optical path between the objective optical system and the detector.

### [Supplementary Note 74]

The calibration method according to the Supplementary Note 73 further including inserting and extracting the condensing optical system relative to the optical path.

### [Supplementary Note 75]

The calibration method according to any one of the Supplementary Notes 67 to 74 further including changing a propagating direction of the first light propagating toward the objective optical system so that an irradiation position of the first light on the fiducial member is changed.

### [Supplementary Note 76]

The calibration method according to the Supplementary Note 71, wherein
the first light that propagates in a first propagating direction and enters the objective optical system propagates along a first optical path so that a first position of the fiducial member is irradiated therewith,
the second light, which propagates along the first optical path, of light from the first position generated by the first light with which the first position is irradiated enters the detector,
the first light that propagates in a second propagating direction different from the first optical direction and enters the objective optical system propagates along a second optical path different from the first optical path so that a second position of the fiducial member different from the first position is irradiated therewith,
the second light, which propagates along the second optical path, of light from the second position generated by the first light with which the second position is irradiated enters the detector,
the calibrating the information includes calibrating the information based on the detected result by the optical detection apparatus in each position of the first position and the second position.

### [Supplementary Note 77]

The calibration method according to the Supplementary Note 76, wherein
the objective optical system is located at a third position in a case where the first position of the fiducial member is irradiated with the first light from the objective optical system,
the objective optical system is located at the third position in a case where the second position of the fiducial member is irradiated with the first light from the objective optical system.

### [Supplementary Note 78]

The calibration method according to the Supplementary Note 76 or 77, wherein
the fiducial member includes: a first area, a second area a characteristic of which is different from that of the first area; a third area; a fourth area a characteristic of which is different from that of the third area; a fifth area; and a sixth area a characteristic of which is different from that of the fifth area,
the calibrating the information includes calibrating the information based on a position of a first border that is a border between the first area and the second area and that extends along a first direction, a position of a second border that is a border between the third area and the fourth area and that extends along a second direction intersecting with the first direction, and a position of a third border that is a border between the fifth area and the sixth area and that extends along a third direction intersecting with the second direction.

### [Supplementary Note 79]

The calibration method according to any one of the Supplementary Notes 67 to 78 further including deflecting the first light from the objective optical system toward the fiducial member.

### [Supplementary Note 80]

The calibration method according to any one of the Supplementary Notes 67 to 79, wherein
at least one of the placing apparatus and the head is movable along a first direction,
the calibrating the information includes:
   calculating, based on the detected result by the optical detection apparatus, a movement error in a second direction and a movement error in a third direction different from the second direction that occur in the movement of at least one of the placing apparatus and the head in a case where at least one of the placing apparatus and the head moves along the first direction; and
   calibrating the information based on the calculated movement error.

### [Supplementary Note 81]

The calibration method according to the Supplementary Note 80, wherein
the optically receiving the second light includes:
optically receiving the second light, which propagates along a first optical path, of light from the fiducial member generated by irradiating the fiducial member with the first light propagating along the first optical path from the objective optical system in a case where a positional relationship between the placing apparatus and the processing head in the first direction is a first relationship, and
optically receiving the second light, which propagates along a second optical path, of light from the fiducial member generated by irradiating the fiducial member with the first light propagating along the second optical path from the objective optical system in a case where the positional relationship between the placing apparatus and the processing head in the first direction is a second relationship different from the first relationship,
the calibrating the information includes calibrating the information based on the detected result by the optical detection apparatus in each positional relationship of the first relationship and the second relationship.

### [Supplementary Note 82]

The calibration method according to the Supplementary Note 80 or 81, wherein
the first direction includes a direction along an optical path of the first light emitted from the objective optical system.

### [Supplementary Note 83]

The calibration method according to any one of the Supplementary Notes 80 to 82, wherein
the first direction includes a direction intersecting with an optical path of the first light emitted from the objective optical system.

### [Supplementary Note 84]

The calibration method according to any one of the Supplementary Notes 67 to 83, wherein
the optical detection apparatus includes a first optical system including the detector and a second optical system including the objective optical system,
the first optical system and the second optical system are attached to different parts of the head, respectively.

### [Supplementary Note 85]

The calibration method according to the Supplementary Note 84, wherein
the first optical system emits the first light toward the second optical system, and optically receives the second light from the second optical system with the detector,
the second optical system emits the first light from the first optical system toward the fiducial member through the objective optical system, and emits the second light from the fiducial member toward the first optical system through the objective optical system.

### [Supplementary Note 86]

The calibration method according to any one of the Supplementary Notes 67 to 85, wherein
the fiducial member is different from the workpiece.

### [Supplementary Note 87]

The calibration method according to any one of the Supplementary Notes 67 to 86, wherein
a grid pattern is formed on the fiducial member.

### [Supplementary Note 88]

The calibration method according to any one of the Supplementary Notes 67 to 87, wherein
the fiducial member includes a polyhedron.

### [Supplementary Note 89]

The calibration method according to any one of the Supplementary Notes 67 to 88, wherein
the fiducial member includes: a first reflection member that reflects the first light entering a first position from the optical detection apparatus to emit it as the second light toward the optical detection apparatus; and a second reflection member that reflects the first light entering a second position different from the first position from the optical detection apparatus to emit it as the second light toward the optical detection apparatus,
an optical path length of an optical path from the first position to an emission position of the fiducial member through the first reflection member and an optical path length of an optical path from the second position to an emission position of the fiducial member through the second reflection member is different from each other.

### [Supplementary Note 90]

The calibration method according to any one of the Supplementary Notes 67 to 89, wherein
the head is a processing head that includes, as the processing unit, a main spindle to which a tool is detachably attached,
the calibrating the information includes calibrating the information based on a movement error occurring in the movement of at least one of the placing apparatus and the processing head of a machine tool that processes the workpiece with the tool being detachably attached to the main spindle while moving at least one of the placing apparatus and the processing head.

### [Supplementary Note 91]

The calibration method according to the Supplementary Note 90 further including attaching the optical detection apparatus to the main spindle instead of the tool.

### [Supplementary Note 92]

The calibration method according to any one of the Supplementary Notes 67 to 91, wherein
the head is a processing head that includes, as the processing unit, a processing light emission unit that emits processing light for processing the workpiece,
the calibrating the information includes calibrating the information based on a movement error occurring in the movement of at least one of the placing apparatus and the processing head of an optical processing device that processes the workpiece with the processing light from the processing light emission unit while moving at least one of the placing apparatus and the processing head.

### [Supplementary Note 93]

The calibration method according to any one of the Supplementary Notes 67 to 92, wherein
the head is a measurement head that includes, as the processing unit, a measurement unit for measuring the workpiece,
the calibrating the information includes calibrating the information based on a movement error occurring in the movement of at least one of the placing apparatus and the measurement head of a measurement device that measures the workpiece with the measurement unit while moving at least one of the placing apparatus and the measurement head.

### [Supplementary Note 94]

A computer program that allows a computer to perform the calibration method according to any one of the Supplementary Notes 67 to 93.

### [Supplementary Note 95]

A recoding medium on which the computer program according to the Supplementary Note 94 is recorded.

### [Supplementary Note 96]

A position calculation apparatus for calculating a position that is used for calibrating information used for a movement control of at least one of a placing apparatus on which a workpiece is allowed to be placed and a head to which a processing unit for performing a processing of the workpiece is attachable, wherein
the position calculation apparatus includes:
a calculation unit that calculates the position of at least a part of a fiducial member based on a detected result by an optical detection apparatus, the optical detection apparatus including an objective optical system for emitting first light toward the fiducial member placed on the placing apparatus and a detector for optically receiving, through the objective optical system, second light from the fiducial member generated by an irradiation of the first light, and the optical detection apparatus being attached to the head.

### [Supplementary Note 97]

The position calculation apparatus according to the Supplementary Note 96 further including an output unit that output the position calculated by the calculation unit.

### [Supplementary Note 98]

The position calculation apparatus according to the Supplementary Note 96 or 97, wherein
the detector optically receives interfering light generated by an interference between a part of the first light and at least a part of the second light,
the calculation unit calculates the position of at least a part of the fiducial member based on a detected result of the interfering light.

### [Supplementary Note 99]

The position calculation apparatus according to any one of the Supplementary Notes 96 to 98, wherein
the calculation unit calibrates the information used for the movement control of at least one of the placing apparatus and the head based on the calculated position of at least a part of the fiducial member.

### [Supplementary Note 100]

The position calculation apparatus according to any one of the Supplementary Notes 96 to 99, wherein
the second light is light, which propagates along an optical path of the first light, of light from the fiducial member generated by an irradiation of the first light.

### [Supplementary Note 101]

The position calculation apparatus according to any one of the Supplementary Notes 96 to 100, wherein
the optical detection apparatus includes a condensing optical system that is disposed on an optical path between the objective optical system and the detector and that forms a condensed point of the first light at a focal position of the objective optical system on the detector side.

### [Supplementary Note 102]

The position calculation apparatus according to the Supplementary Note 101, wherein
the optical detection apparatus further includes an insertable / extractable apparatus that inserts and extracts the condensing optical system relative to the optical path.

### [Supplementary Note 103]

The position calculation apparatus according to any one of the Supplementary Notes 96 to 102, wherein
the optical detection apparatus further includes a propagating direction change member that is configured to change a propagating direction of the first light propagating toward the objective optical system so that an irradiation position of the first light on the fiducial member is changed.

### [Supplementary Note 104]

The position calculation apparatus according to the Supplementary Note 102, wherein
the first light that propagates in a first propagating direction by the propagating direction change member and enters the objective optical system propagates along a first optical path so that a first position of the fiducial member is irradiated therewith,
the second light, which propagates along the first optical path, of light from the first position generated by the first light with which the first position is irradiated enters the detector,
the first light that propagates in a second propagating direction different from the first optical direction by the propagating direction change member and enters the objective optical system propagates along a second optical path different from the first optical path so that a second position of the fiducial member different from the first position is irradiated therewith,
the second light, which propagates along the second optical path, of light from the second position generated by the first light with which the second position is irradiated enters the detector,
the calculation unit calculates the position of at least a part of the fiducial member based on the detected result by the optical detection apparatus in each position of the first position and the second position.

### [Supplementary Note 105]

The position calculation apparatus according to the Supplementary Note 104, wherein
the objective optical system is located at a third position in a case where the first position of the fiducial member is irradiated with the first light from the objective optical system,
the objective optical system is located at the third position in a case where the second position of the fiducial member is irradiated with the first light from the objective optical system.

### [Supplementary Note 106]

The position calculation apparatus according to the Supplementary Note 104 or 105, wherein
the fiducial member includes: a first area, a second area a characteristic of which is different from that of the first area; a third area; a fourth area a characteristic of which is different from that of the third area; a fifth area; and a sixth area a characteristic of which is different from that of the fifth area,
the calculation unit calculates the position of at least a part of the fiducial member based on a position of a first border that is a border between the first area and the second area and that extends along a first direction, a position of a second border that is a border between the third area and the fourth area and that extends along a second direction intersecting with the first direction, and a position of a third border that is a border between the fifth area and the sixth area and that extends along a third direction intersecting with the second direction.

### [Supplementary Note 107]

The position calculation apparatus according to any one of the Supplementary Notes 96 to 106, wherein
the optical detection apparatus further includes a deflection member that deflects the first light from the objective optical system toward the fiducial member.

### [Supplementary Note 108]

The position calculation apparatus according to any one of the Supplementary Notes 96 to 107, wherein
at least one of the placing apparatus and the head is movable along a first direction,
the detector optically receives the second light, which propagates along a first optical path, of light from the fiducial member generated by irradiating the fiducial member with the first light propagating along the first optical path from the objective optical system in a case where a positional relationship between the placing apparatus and the head in the first direction is a first relationship, and optically receives the second light, which propagates along a second optical path, of light from the fiducial member generated by irradiating the fiducial member with the first light propagating along the second optical path from the objective optical system in a case where the positional relationship between the placing apparatus and the head in the first direction is a second relationship different from the first relationship,
the calculation unit calculates the position of at least a part of the fiducial member based on the detected result by the optical detection apparatus in each positional relationship of the first relationship and the second relationship.

### [Supplementary Note 109]

The position calculation apparatus according to the Supplementary Note 108, wherein
the first direction includes a direction along an optical path of the first light emitted from the objective optical system.

### [Supplementary Note 110]

The position calculation apparatus according to any one of the Supplementary Notes 108 to 109, wherein
the first direction includes a direction intersecting with an optical path of the first light emitted from the objective optical system.

### [Supplementary Note 111]

The position calculation apparatus according to any one of the Supplementary Notes 96 to 110, wherein
the optical detection apparatus includes a first optical system including the detector and a second optical system including the objective optical system,
the first optical system and the second optical system are attached to different parts of the head, respectively.

### [Supplementary Note 112]

The position calculation apparatus according to the Supplementary Note 111, wherein
the first optical system emits the first light toward the second optical system, and optically receives the second light from the second optical system with the detector,
the second optical system emits the first light from the first optical system toward the fiducial member through the objective optical system, and emits the second light from the fiducial member toward the first optical system through the objective optical system.

### [Supplementary Note 113]

The position calculation apparatus according to any one of the Supplementary Notes 96 to 112, wherein
the fiducial member is different from the workpiece.

### [Supplementary Note 114]

The position calculation apparatus according to any one of the Supplementary Notes 96 to 113, wherein
a grid pattern is formed on the fiducial member.

### [Supplementary Note 115]

The position calculation apparatus according to any one of the Supplementary Notes 96 to 114, wherein
the fiducial member includes a polyhedron.

### [Supplementary Note 116]

The position calculation apparatus according to any one of the Supplementary Notes 96 to 115, wherein
the fiducial member includes: a first reflection member that reflects the first light entering a first position from the optical detection apparatus to emit it as the second light toward the optical detection apparatus; and a second reflection member that reflects the first light entering a second position different from the first position from the optical detection apparatus to emit it as the second light toward the optical detection apparatus,
an optical path length of an optical path from the first position to an emission position of the fiducial member through the first reflection member and an optical path length of an optical path from the second position to an emission position of the fiducial member through the second reflection member is different from each other.

### [Supplementary Note 117]

The position calculation apparatus according to any one of the Supplementary Notes 96 to 116, wherein
the head is a processing head that includes, as the processing unit, a main spindle to which a tool is detachably attached.

### [Supplementary Note 118]

The position calculation apparatus according to the Supplementary Note 117, wherein
the optical detection apparatus is attached to the main spindle instead of the tool.

### [Supplementary Note 119]

The position calculation apparatus according to any one of the Supplementary Notes 96 to 118, wherein
the head is a processing head that includes, as the processing unit, a processing light emission unit that emits processing light for processing the workpiece.

### [Supplementary Note 120]

The position calculation apparatus according to any one of the Supplementary Notes 96 to 119, wherein
the head is a measurement head that includes, as the processing unit, a measurement unit for measuring the workpiece.

### [Supplementary Note 121]

A position calculation system including:
the position calculation apparatus according to any one of the Supplementary Notes 96 to 120; and
the optical detection apparatus.

### [Supplementary Note 122]

The position calculation system according to the Supplementary Note 121 further including the fiducial member.

### [Supplementary Note 123]

A position calculation system including:
the position calculation apparatus according to any one of the Supplementary Notes 96 to 120; and
the fiducial member.

### [Supplementary Note 124]

A machine tool that processes a workpiece with a tool detachably attached to a main spindle of a head that is a processing unit while moving at least one of a placing apparatus on which the workpiece is placed and the head to which the processing unit for performing a processing of the workpiece is attachable, wherein
the machine tool includes:
the position calculation apparatus according to any one of the Supplementary Notes 96 to 120;
the head;
the placing apparatus; and
a driving apparatus that moves at least one of the head and the placing apparatus.

### [Supplementary Note 125]

A machine tool that processes a workpiece with a tool detachably attached to a main spindle of a head that is a processing unit while moving at least one of a placing apparatus on which the workpiece is placed and the head to which the processing unit for performing a processing of the workpiece is attachable, wherein
the machine tool includes:
the position calculation system according to any one of the Supplementary Notes 121 to 123;
the head;
the placing apparatus; and
a driving apparatus that moves at least one of the head and the placing apparatus.

### [Supplementary Note 126]

The machine tool according to the Supplementary Note 125, wherein
the optical detection apparatus of the position calculation system is attached to the main spindle instead of the tool.

### [Supplementary Note 127]

An optical processing device that processes a workpiece with processing light from a processing light emission unit that is attached to a head as a processing unit while moving at least one of a placing apparatus on which the workpiece is placed and the head to which the processing unit for performing a processing of the workpiece is attachable, wherein
the optical processing device includes:
the position calculation apparatus according to any one of the Supplementary Notes 96 to 120;
the head;
the placing apparatus; and
a driving apparatus that moves at least one of the head and the placing apparatus.

### [Supplementary Note 128]

An optical processing device that processes a workpiece with processing light from a processing light emission unit that is attached to a head as a processing unit while moving at least one of a placing apparatus on which the workpiece is placed and the head to which the processing unit for performing a processing of the workpiece is attachable, wherein
the optical processing device includes:
the position calculation system according to any one of the Supplementary Notes 121 to 123;
the head;
the placing apparatus; and
a driving apparatus that moves at least one of the head and the placing apparatus.

### [Supplementary Note 129]

A measurement device that measures a workpiece with a measurement unit that is attached to a head as a processing unit while moving at least one of a placing apparatus on which the workpiece is placed and the head to which the processing unit for performing a processing of the workpiece is attachable, wherein
the measurement device includes:
the position calculation apparatus according to any one of the Supplementary Notes 96 to 120;
the head;
the placing apparatus; and
a driving apparatus that moves at least one of the head and the placing apparatus.

### [Supplementary Note 130]

A measurement device that measures a workpiece with a measurement unit that is attached to a head as a processing unit while moving at least one of a placing apparatus on which the workpiece is placed and the head to which the processing unit for performing a processing of the workpiece is attachable, wherein
the measurement device includes:
the position calculation system according to any one of the Supplementary Notes 121 to 123;
the head;
the placing apparatus; and
a driving apparatus that moves at least one of the head and the placing apparatus.

### [Supplementary Note 131]

A position calculation method for calculating a position that is used for calibrating information used for a movement control of at least one of a placing apparatus on which a workpiece is allowed to be placed and a head to which a processing unit for performing a processing of the workpiece is attachable, wherein
the position calculation method includes:
emitting first light toward a fiducial member placed on the placing apparatus through an objective optical system of an optical detection apparatus that is attached to the head;
optically receiving, through the objective optical system, second light from the fiducial member generated by an irradiation of the first light by using a detector of the optical detection apparatus; and
calculating the position of at least a part of a fiducial member based on a detected result by the optical detection apparatus.

### [Supplementary Note 132]

A computer program that allows a computer to perform the position calculation method according to the Supplementary Note 131.

### [Supplementary Note 133]

A recoding medium on which the computer program according to the Supplementary Note 132 is recorded.

### [Supplementary Note 134]

An optical measurement apparatus including:
an objective optical system;
a measurement unit that emits first light toward an object through the objective optical system and optically receives, through the objective optical system, second light from the object generated by an irradiation of the first light;
an condensing optical system that is disposed on an optical path between the objective optical system and the measurement unit and that forms a condensed point of the first light at a focal position of the objective optical system on the measurement unit side; and
a calculation unit that measures at least a part of the object based on an optical received result by the measurement unit.

### [Supplementary Note 135]

The optical measurement apparatus according to the Supplementary Note 134, wherein
the measurement unit optically receives interfering light generated by an interference between a part of the first light and at least a part of the second light,
the calculation unit measures at least a part of the object based on a detected result of the interfering light.

### [Supplementary Note 136]

The optical measurement apparatus according to the Supplementary Note 134 or 135, wherein
the second light is light, which propagates along an optical path of the first light, of light from the object generated by an irradiation of the first light.

### [Supplementary Note 137]

The optical measurement apparatus according to any one of the Supplementary Notes 134 to 136 further including an insertable / extractable apparatus that inserts and extracts the condensing optical system relative to the optical path.

### [Supplementary Note 138]

The optical measurement apparatus according to the Supplementary Note 137, wherein
the object includes a first object and a second object that is different from the first object,
the measurement unit optically receives the second light from the first object by irradiating the first object with the first light in a case where the condensing optical system is disposed on the optical path, and optically receives the second light from the second object by irradiating the second object with the first light in a case where the condensing optical system is extracted from on the optical path.

### [Supplementary Note 139]

The optical measurement apparatus according to the Supplementary Note 138, wherein
the first object is a fiducial member,
the second object is a workpiece.

### [Supplementary Note 140]

The optical measurement apparatus according to any one of the Supplementary Notes 134 to 139 further including a propagating direction change member that is configured to change a propagating direction of the first light propagating from the measurement unit toward the objective optical system so that an irradiation position of the first light on the object is changed.

### [Supplementary Note 141]

The optical measurement apparatus according to any one of the Supplementary Notes 134 to 140 further including a deflection member that deflects the first light from the objective optical system toward the object.

### [Supplementary Note 142]

The optical measurement apparatus according to any one of the Supplementary Notes 134 to 141, wherein
the calculation unit calculates a position of at least a part of the object based on the optical received result.

### [Supplementary Note 143]

A calculation apparatus that calculates a movement error occurring in a relative movement of a head that is relatively movable relative to a fiducial position,
the calculation apparatus includes:
a calculation unit that calculates the movement error based on a detected result by an optical detection apparatus, the optical detection apparatus including an objective optical system for emitting first light toward a fiducial member disposed on the fiducial position and a detector for optically receiving, through the objective optical system, second light from the fiducial member generated by an irradiation of the first light, and the optical detection apparatus being attached to the head.

### [Supplementary Note 144]

A calculation apparatus that calculates a movement error occurring in a movement of at least one of a placing apparatus on which a workpiece is allowed to be placed and a head to which a processing unit for performing a processing of the workpiece is attachable, wherein
the calculation apparatus includes:
a calculation unit that calculates the movement error based on a detected result by an optical detection apparatus, the optical detection apparatus including an objective optical system for emitting first light toward a fiducial member placed on the placing apparatus and optically receiving, through the objective optical system, second light from the fiducial member generated by an irradiation of the first light, and the optical detection apparatus being attached to the head.

### [Supplementary Note 145]

The calculation apparatus according to the Supplementary Note 144 optically receives the second light from the fiducial member with a detector of the optical detection apparatus.

### [Supplementary Note 146]

A calculation method that calculates a movement error occurring in a movement of at least one of a placing apparatus on which a workpiece is allowed to be placed and a head to which a processing unit for performing a processing of the workpiece is attachable, wherein
the calculation method includes:
emitting first light toward a fiducial member placed on the placing apparatus through an objective optical system of an optical detection apparatus that is attached to the head;
optically receiving, through the objective optical system, second light from the fiducial member generated by an irradiation of the first light with the optical detection apparatus; and
calculating the movement error based on a detected result by the optical detection apparatus.

### [Supplementary Note 147]

The calculation method according to the Supplementary Note 146, wherein
the optically receiving the second light includes optically receiving the second light from the fiducial member with a detector of the optical detection apparatus.

### [Supplementary Note 148]

A calibration method including:
emitting first light toward a fiducial member placed on a placing apparatus from an objective optical system of an optical detection apparatus that is attached to a head to which a processing unit for performing a processing of the workpiece is attachable;
optically receiving, through the objective optical system, second light from the fiducial member generated by an irradiation of the first light with the optical detection apparatus; and
calibrating information used for a movement control of at least one of the placing apparatus and the head based on a detected result by the optical detection apparatus.

### [Supplementary Note 149]

The calibration method according to the Supplementary Note 148, wherein
the optically receiving the second light includes optically receiving the second light from the fiducial member with a detector of the optical detection apparatus.

### [Supplementary Note 150]

A position calculation apparatus for calculating a position that is used for calibrating information used for a movement control of at least one of a placing apparatus on which a workpiece is allowed to be placed and a head to which a processing unit for performing a processing of the workpiece is attachable, wherein
the position calculation apparatus includes:
a calculation unit that calculates the position of at least a part of a fiducial member based on a detected result by an optical detection apparatus, the optical detection apparatus including an objective optical system for emitting first light toward a fiducial member placed on the placing apparatus and optically receiving, through the objective optical system, second light from the fiducial member generated by an irradiation of the first light, and the optical detection apparatus being attached to the head.

### [Supplementary Note 151]

The position calculation apparatus according to the Supplementary Note 150 optically receiving the second light from the fiducial member with a detector of the optical detection apparatus.

### [Supplementary Note 152]

A position calculation method for calculating a position that is used for calibrating information used for a movement control of at least one of a placing apparatus on which a workpiece is allowed to be placed and a head to which a processing unit for performing a processing of the workpiece is attachable, wherein
the position calculation method includes:
emitting first light toward a fiducial member placed on the placing apparatus through an objective optical system of an optical detection apparatus that is attached to the head;
optically receiving, through the objective optical system, second light from the fiducial member generated by an irradiation of the first light with the optical detection apparatus; and
calculating the position of at least a part of a fiducial member based on a detected result by the optical detection apparatus.

### [Supplementary Note 153]

The position calculation method according to the Supplementary Note 152, wherein
the optically receiving the second light includes optically receiving the second light from the fiducial member with a detector of the optical detection apparatus.

### [Supplementary Note 154]

A calculation apparatus that calculates a movement error occurring in a relative movement of a head that is relatively movable relative to a fiducial position,
the calculation apparatus includes:
a calculation unit that calculates the movement error based on a detected result by an optical detection apparatus, the optical detection apparatus including an objective optical system for emitting first light toward a fiducial member placed on the placing apparatus and optically receiving, through the objective optical system, second light from the fiducial member generated by an irradiation of the first light, and the optical detection apparatus being attached to the head.

### [Supplementary Note 155]

The calculation apparatus according to the Supplementary Note 154 optically receiving the second light from the fiducial member with a detector of the optical detection apparatus.

The feature of each example embodiment described above is allowed to be combined appropriately. A part of the feature of each example embodiment described above may not be used. The feature of each example embodiment described above may be allowed to be replaced by the feature of other example embodiment, if needed. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a movement error calculation system, a machine tool, a calculation apparatus, a calculation method, a calculation system, a position calculation apparatus, a position calculation method, a position calculation system, an optical measurement apparatus, a calibration method, an optical processing device, a measurement device, a computer program, and a recording medium, each of which involves such changes, are also intended to be within the technical scope of the present invention.

### Description of Reference Codes

- 1: machine tool
- 2: processing head
- 21: main spindle
- 23: tool
- 3: head driving system
- 4: stage apparatus
- 41: stage
- 42: stage driving system
- 5: measurement apparatus
- 51: measurement light source
- 52: measurement head
- 5223, 5226: detector
- 5227: Galvano mirror
- 5228: fθ lens
- 7: control apparatus
- W: workpiece
- FM, FM1, FM2, FM3: fiducial member
- ML: measurement light
- RL: returning light

## Claims

1. A movement error calculation system that calculates a movement error occurring in a movement of at least one of a placing apparatus and a processing head of a machine tool that processes a workpiece with a tool being detachably attached to a main spindle of the processing head while moving at least one of the placing apparatus on which the workpiece is placed and the processing head, wherein
the movement error calculation system comprises:
a fiducial member that is placed on the placing apparatus and that is different from the workpiece;
an optical detection apparatus that includes an objective optical system for emitting first light toward the fiducial member and a detector for detecting, through the objective optical system, second light, which propagates along an optical path of the first light, of light from the fiducial member generated by an irradiation of the first light, and that is attached to the main spindle instead of the tool; and
a calculation unit that calculates the movement error based on a detected result by the optical detection apparatus.

2. The movement error calculation system according to claim 1, wherein
the detector optically receives interfering light generated by an interference between a part of the first light and at least a part of the second light,
the calculation unit calculates the movement error based on a detected result of the interfering light.

3. The movement error calculation system according to claim 1 or 2, wherein
the main spindle is rotatable around a rotational axis,
an optical axis of the objective optical system is coaxial with the rotational axis.

4. The movement error calculation system according to any one of claims 1 to 3, wherein
the optical detection apparatus includes a condensing optical system that is disposed on an optical path between the objective optical system and the detector and that forms a condensed point of the first light at a focal position of the objective optical system on the detector side.

5. The movement error calculation system according to claim 4, wherein
the optical measurement apparatus further includes an insertable / extractable apparatus that inserts and extracts the condensing optical system relative to the optical path,
the first light emitted from the objective optical system is collimated light in a case where the condensing optical system is inserted to the optical path, and the first light emitted from the condensing optical system is converged light in a case where the objective optical system is extracted from the optical path.

6. The movement error calculation system according to any one of claims 1 to 5, wherein
the optical detection apparatus further includes a propagating direction change member that is configured to change a propagating direction of the first light propagating toward the objective optical system so that an irradiation position of the first light on the fiducial member is changed.

7. The movement error calculation system according to claim 6, wherein
the first light that propagates in a first propagating direction by the propagating direction change member and enters the objective optical system propagates along a first optical path so that a first position of the fiducial member is irradiated therewith,
the second light, which propagates along the first optical path, of light from the first position generated by the first light with which the first position is irradiated enters the detector,
the first light that propagates in a second propagating direction different from the first optical direction by the propagating direction change member and enters the objective optical system propagates along a second optical path different from the first optical path so that a second position of the fiducial member different from the first position is irradiated therewith,
the second light, which propagates along the second optical path, of light from the second position generated by the first light with which the second position is irradiated enters the detector,
the calculation unit calculates the movement error based on the detected result by the optical detection apparatus in each position of the first position and the second position.

8. The movement error calculation system according to claim 7, wherein
the objective optical system is located at a third position in a case where the first position of the fiducial member is irradiated with the first light from the objective optical system,
the objective optical system is located at the third position in a case where the second position of the fiducial member is irradiated with the first light from the objective optical system.

9. The movement error calculation system according to any one of claims 1 to 8, wherein
the optical detection apparatus further includes a deflection member that deflects the first light from the objective optical system toward the fiducial member.

10. The movement error calculation system according to claim 2 or any one of claim 3 to 7 as depending upon claim 2, wherein
the calculation unit calculates a position of at least a part of the fiducial member based on the detected result of the interfering light, and calculates the movement error based on a calculated result of the position.

11. The movement error calculation system according to any one of claim 7 to 10, wherein
the fiducial member includes: a first area, a second area a characteristic of which is different from that of the first area; a third area; a fourth area a characteristic of which is different from that of the third area; a fifth area; and a sixth area a characteristic of which is different from that of the fifth area,
the calculation unit calculates the movement error based on a position of a first border that is a border between the first area and the second area and that extends along a first direction, a position of a second border that is a border between the third area and the fourth area and that extends along a second direction intersecting with the first direction, and a position of a third border that is a border between the fifth area and the sixth area and that extends along a third direction intersecting with the second direction.

12. The movement error calculation system according to any one of claim 1 to 11, wherein
the first light is pulsed light including frequency components that are arranged with equal interval on a frequency axis.

13. The movement error calculation system according to any one of claim 1 to 12, wherein
at least one of the placing apparatus and the processing head is movable along a first direction,
the calculation unit calculates, based on the detected result by the optical detection apparatus, the movement error in a second direction and the movement error in a third direction different from the second direction that occur in the movement of at least one of the placing apparatus and the processing head in a case where at least one of the placing apparatus and the processing head moves along the first direction.

14. The movement error calculation system according to claim 13, wherein
the first direction is a linear direction,
the second direction is one direction of a liner direction that is the same as the first direction or intersects with the first direction and a rotational direction whose rotational axis is an axis along the first direction or an axis intersecting with the first direction,
the third direction is the other direction of the liner direction that is the same as the first direction or intersects with the first direction and the rotational direction whose rotational axis is the axis along the first direction or the axis intersecting with the first direction,

15. The movement error calculation system according to claim 13, wherein
the first direction is a rotational direction whose rotational axis is a first axis,
the second direction is one direction of a liner direction that is along the first axis or intersects with the first axis and a rotational direction whose rotational axis is the first axis or a second axis intersecting with the first axis,
the third direction is the other direction of the liner direction that is along the first axis or intersects with the first axis and a rotational direction whose rotational axis is the first axis or the second axis intersecting with the first axis.

16. The movement error calculation system according to any one of claim 1 to 15, wherein
at least one of the placing apparatus and the processing head is movable along a first direction,
the calculation unit calculates, based on the detected result by the optical detection apparatus, the movement error in a second direction, the movement error in a third direction different from the second direction, the movement error in a fourth direction different from the second to third directions, the movement error in a fifth direction different from the second to fourth directions, the movement error in a sixth direction different from the second to fifth directions, and the movement error in a seventh direction different from the second to sixth directions that occur in the movement of at least one of the placing apparatus and the processing head in a case where at least one of the placing apparatus and the processing head moves along the first direction.

17. The movement error calculation system according to any one of claim 13 to 16, wherein
the detector optically receives the second light, which propagates along a first optical path, of light from the fiducial member generated by irradiating the fiducial member with the first light propagating along the first optical path from the objective optical system in a case where a positional relationship between the placing apparatus and the processing head in the first direction is a first relationship, and optically receives the second light, which propagates along a second optical path, of light from the fiducial member generated by irradiating the fiducial member with the first light propagating along the second optical path from the objective optical system in a case where the positional relationship between the placing apparatus and the processing head in the first direction is a second relationship different from the first relationship,
the calculation unit calculates the movement error based on the detected result by the optical detection apparatus in each positional relationship of the first relationship and the second relationship.

18. The movement error calculation system according to any one of claim 13 to 17, wherein
the first direction includes a direction along an optical path of the first light emitted from the objective optical system.

19. The movement error calculation system according to any one of claim 13 to 18, wherein
the first direction includes a direction intersecting with an optical path of the first light emitted from the objective optical system.

20. The movement error calculation system according to claim 19, wherein
the detector optically receives the second light, which propagates along a first optical path, of light from a first part of the fiducial member generated by irradiating the fiducial member with the first light propagating along the first optical path from the objective optical system in a case where a positional relationship between the placing apparatus and the processing head in a direction intersecting with an optical path of the first light is a first relationship, and optically receives the second light, which propagates along a second optical path, of light from a second part of the fiducial member partially overlapping with the first part generated by irradiating the fiducial member with the first light propagating along the second optical path from the obj ective optical system in a case where the positional relationship between the placing apparatus and the processing head in the direction intersecting with the optical path of the first light is a second relationship different from the first relationship,
the calculation unit calculates the movement error based on the detected result by the optical detection apparatus in each part of the first part and the second part.

21. The movement error calculation system according to any one of claim 1 to 20, wherein
a grid pattern is formed on the fiducial member.

22. The movement error calculation system according to claim 21, wherein
the detector optically receives at least (i) the second light, which propagates along a first optical path, of light from a first measurement target area generated by irradiating the first measurement target area of the grid pattern with the first light propagating along the first optical path from the objective optical system, (ii) the second light, which propagates along a second optical path, of light from a second measurement target area generated by irradiating the second measurement target area of the grid pattern with the first light propagating along the second optical path different from the first optical path from the objective optical system, (iii) the second light, which propagates along a third optical path, of light from a third measurement target area generated by irradiating the third measurement target area of the grid pattern with the first light propagating along the third optical path different from the first to second optical paths from the objective optical system, (iv) the second light, which propagates along a fourth optical path, of light from a fourth measurement target area generated by irradiating the fourth measurement target area of the grid pattern with the first light propagating along the fourth optical path different from the first to third optical paths from the objective optical system, and (iii) the second light, which propagates along a fifth optical path, of light from a fifth measurement target area generated by irradiating the fifth measurement target area of the grid pattern with the first light propagating along the fifth optical path different from the first to fourth optical paths from the objective optical system,
the calculation unit calculates the movement error based on the detected results by the optical detection apparatus in first to fifth measurement target part.

23. The movement error calculation system according to any one of claim 1 to 22, wherein
the fiducial member includes a polyhedron.

24. The movement error calculation system according to claim 23, wherein
the polyhedron includes a first surface, a second surface having a normal line directed along a direction different from a normal line of the first surface, a third surface having a normal line directed along a direction different from normal lines of the first to second surfaces,
the detector optically receives (i) the second light, which propagates along a first optical path, of light from at least a part of the first surface generated by irradiating the first surface with the first light propagating along the first optical path from the objective optical system, (ii) the second light, which propagates along a second optical path, of light from at least a part of the second surface generated by irradiating the second surface with the first light propagating along the second optical path different from the first optical path from the objective optical system, and (iii) the second light, which propagates along a third optical path, of light from at least a part of the third surface generated by irradiating the third surface with the first light propagating along the third optical path different from the first to second optical paths from the objective optical system,
the calculation unit calculates the movement error based on the detected results by the optical detection apparatus in first to third surfaces.

25. The movement error calculation system according to any one of claim 1 to 24, wherein
the fiducial member includes a reflection member that reflects the first light entering a first position from the optical detection apparatus to emit it as the second light toward the optical detection apparatus, and that reflects the first light entering a second position different from the first position from the optical detection apparatus to emit it as the second light toward the optical detection apparatus,
an optical path length of an optical path from the first position to an emission position of the fiducial member through the reflection member and an optical path length of an optical path from the second position to an emission position of the fiducial member through the reflection member is different from each other.

26. The movement error calculation system according to claim 25, wherein
the detector optically receives (i) the second light, which propagates along a first optical path, of light from reflection member generated by irradiating the reflection member with the first light propagating along the first optical path from the objective optical system, and (ii) the second light, which propagates along a second optical path, of light from reflection member generated by irradiating the reflection member with the first light propagating along the second optical path different from the first optical path from the objective optical system,
the calculation unit calculates the movement error based on the detected results by the optical detection apparatus with the reflection member.

27. A machine tool comprising:
the movement error calculation system according to any one of claims 1 to 26;
the processing head;
the placing apparatus; and
a driving apparatus that moves at least one of the processing head and the placing apparatus.

28. A calculation apparatus that calculates a movement error occurring in a movement of at least one of a placing apparatus on which a workpiece is allowed to be placed and a head to which a processing unit for performing a processing of the workpiece is attachable, wherein
the calculation apparatus comprises:
a calculation unit that calculates the movement error based on a detected result by an optical detection apparatus, the optical detection apparatus including an objective optical system for emitting first light toward a fiducial member placed on the placing apparatus and a detector for optically receiving, through the objective optical system, second light from the fiducial member generated by an irradiation of the first light, and the optical detection apparatus being attached to the head.

29. A calibration method comprising:
emitting first light toward a fiducial member placed on a placing apparatus from an objective optical system of an optical detection apparatus that is attached to a head to which a processing unit for performing a processing of the workpiece is attachable;
optically receiving, through the objective optical system, second light from the fiducial member generated by an irradiation of the first light by using a detector of the optical detection apparatus; and
calibrating information used for a movement control of at least one of the placing apparatus and the head based on a detected result by the optical detection apparatus.

30. An optical measurement apparatus comprising:
an objective optical system;
a measurement unit that emits first light toward an object through the objective optical system and optically receives, through the objective optical system, second light from the object generated by an irradiation of the first light;
an condensing optical system that is disposed on an optical path between the objective optical system and the measurement unit and that forms a condensed point of the first light at a focal position of the objective optical system on the measurement unit side; and
a calculation unit that measures at least a part of the object based on an optical received result by the measurement unit.

31. A calculation apparatus that calculates a movement error occurring in a movement of at least one of a placing apparatus on which a workpiece is allowed to be placed and a head to which a processing unit for performing a processing of the workpiece is attachable, wherein
the calculation apparatus comprises:
a calculation unit that calculates the movement error based on a detected result by an optical detection apparatus, the optical detection apparatus including an objective optical system for emitting first light toward a fiducial member placed on the placing apparatus and optically receiving, through the objective optical system, second light from the fiducial member generated by an irradiation of the first light, and the optical detection apparatus being attached to the head.
